# EUROPEAN PATENT SPECIFICATION

(11) **EP 2 008 784 B1**
(45) Date of publication and mention of the grant of the patent: **27.02.2013**
(21) Application number: 07012352.6
(22) Date of filing: 25.06.2007
(51) Int. Cl.: B29B 9/06, B29C 44/34, B29C 47/30, B29C 47/96

(54) **Method and apparatus for producing polymer pellets containing volatiles and/or volatile generating material**
Verfahren und Vorrichtung zur Herstellung von Polymerpellets mit flüchtigen Bestandteilen und/oder solche erzeugenden Materialien
Procédé et appareil pour produire des granules de polymère contenant des volatils et/ou un matériau générant un volatil

(43) Date of publication of application: 31.12.2008
(73) Proprietor: Gala Industries, Inc., Virginia 24085 (US)
(72) Inventor: Eloo, Michael, 46509 Xanten (DE); Wright , Roger B., Staunton, VA 24401 (US); Mann, Robert G., Covington, VA 24426 (US); Martin, Wayne J., P.O. Box 427 Buchanan, VA 24066 (US)
(74) Representative: Thoma, Michael

(56) References cited:
- EP-A- 0 347 207
- EP-A- 1 556 199
- EP-A- 1 702 738
- WO-A-2005/044532
- CA-A1- 2 577 834
- CA-C- 2 142 944
- US-A- 4 606 873
- US-A- 4 621 678
- US-A- 5 190 706
- US-A- 5 234 963

## Description

### BACKGROUND OF THE INVENTION

### 1. Field of the Invention

The invention describes a process and the equipment by which volatile materials or reactive compounds that liberate volatile materials are introduced into a polymer and which subsequently maintain that concentration throughout the duration of the process with minimal or negligible loss. The process involves but is not limited to the general steps of mixing the volatile or volatile-generating ingredients into the polymeric matrix, extrusion through a die, pelletization, and drying. The equipment throughout the process is modified to maintain positive pressure or otherwise restrict out-gassing of those volatiles, reactively or evaporatively, in the formulation to avoid the undesirable loss of concentration, the unwanted or premature expansion of the impregnated polymeric matrix, or the irreversible decomposition of reactive agents with subsequent loss of concentration and/or premature expansion of the formulation. The process as described does not alter the functional use of the formulation for later processes including but not limited to rotational molding, injection molding, blow molding, extrusion, foaming, controlled expansion, blending, or additional formulation and production steps and methodologies as required for the application of interest.

### 2. Description of the Prior Art

Mixing, pelletization, and drying of materials containing volatiles and other expanding agents have been known for many years. The full scope of utility of polymeric and volatile ingredients has often been limited by such challenges as the temperatures involved in processing being excessive for the volatile component used, degradation of the polymer matrix, volatile or reactive components, undue loss of concentration, reduction of the formulation viscosity with poor quality pelletization, increased tendency for sensitivity to freeze-off on pelletization, premature expansion of the formulation, poor surface quality of the pellet formed, undesirable porosity of the pellet, and excessive moisture levels of the final pelletized product.

Pelletization equipment has been introduced and used in applications by the assignee for many years as is exemplified by prior art disclosures including US Patent Nos. 4,123,207; 4, 251, 198; 4,500,271; 4,621,996; 4,728,176; 4,888,990; 5,059,103; 5,403,176; 5,624,688; 6,332,765; 6,551,087; 6,793,473; 6,824,371; 6,925,741; 7,033,152; 7,172,397; US Patent Application Nos. 20050220920, 20060165834; German Patents and Applications including DE 32 43 332, DE 37 02 841, DE 87 01 490, DE 196 42 389, DE 196 51 354, DE 296 24 638; World Patent Applications WO 2006/087179 and WO 2006/081140; and European Patents including EP 1 218 156 and EP 1 582 327. These patents and applications are all owned by the assignee.

Similarly, dryer equipment has been introduced and used in applications for many years by the assignee as demonstrated in prior art disclosures including US Patent Nos. 3,458,045; 4,218,323; 4,447,325; 4,565,015; 4,896,435; 5,265,347; 5,638,606; 6,138,375; 6,237,244; 6,739,457; 6,807,748; 7,024,794; US Patent Application Nos. 20060130353; World Patent Application WO 2006/069022; German Patents and Applications including DE 19 53 741, DE 28 19 443, DE 43 30 078, DE 93 20 744, DE 197 08 988; and European Patents including EP 1 033 545, EP 1 602 888, and EP 1 647 788. These patents and applications are all owned by the assignee.

Early manufacturing processes were typically for expandable polystyrene and involved two-step processes of dispersion polymerization of the styrene monomer in water followed by impregnation of the polystyrene beads with the expanding agent. The general characteristics of the expandable polystyrene "EPS" are described as a weight-average molecular weight ranging between 160,000 and 260,000 with 4 to 7% blowing agent. The beads generated by this process generally formed a typical statistical bell-shaped curve distribution with bead diameters ranging from 0.2 mm or 0.007 inches to 3.0 mm or 0.12 inches. ["Introduction to Expandable Polystyrene": Huntsman Technical Bulletin 1-1.0 (July 2001) referenced above].

This review article describes more current technology as a one-step process in which the polymerization and impregnation are done in a common vessel followed by drying and sizing. The final process consists of pre-expansion, stabilization, and molding to the final product shape.

GB 1,079,369 introduces extrusion of cross-linkable polyolefins to form foamable tubes. The crosslinking agent, having several ethylenic groups, is introduced into the extruder along with various expanding agents which include thermally initiated liberators of inert gases as expanding agents, carbonate salts in combination with acids, as well as volatiles such as low boiling organics. The tubes are extruded, foamed with cooling, and then heated to achieve cross-linking.

EP 0 305 862 teaches the production of small, uniform, and significantly spherical pellets composed of polyphenylene ether resin or blends of that with alkenyl aromatic polymers. Blowing agent, typically 3 to 40% (5 to 15% preferably), was incorporated into the polymer melt by extrusion and passed through a multi-orifice heated die in contact with water to be immediately cut by a rotating series of blades. The beads are subsequently removed from the water and dried. Other fluids are identified including nitrogen, helium, alcohols, glycols and polyols. The die holes used were from 0.010" to 0.050" and the water box could be pressurized as required to avoid premature expansion of the impregnated polymer pellets or loss of the cooling fluids. Hydrocarbons and fluorocarbons were identified as the preferred blowing agents.

US 5,905,096 teaches the use of static mixers to effect dispersive polymerization to achieve uniform beads from 0.4 to 2.0 mm and with adjustment of the shear rate during the intensive mixing phase this can be regulated to 0.5 to 1.2 mm beads. This represents a three-step process where prepolymerization is achieved in bulk, secondly the prepolymer is dispersed in an aqueous phase, followed by the final polymerization. The expanding agent can be incorporated at any point in the process.

US Patent Nos. 6,133,333 and 6,231,795 as well as US Patent Application No. 20030162852 discuss the use of alkenyl aromatic polymers consisting of a weight-average molecular weight range from 100,000 to 500,000 which is mixed with one or more blowing agents by use of an extruder, mixer, or blender along with optional nucleators all of which are detailed at length as to their composition. The mixture is cooled somewhat in the process and then extruded through a multi-orifice die into a zone of reduced pressure relative to that prior to the die. The extrudate may be foamed immediately or may be cut into strands or beads which are immediately quenched in a cold water bath and pelletized to prevent expansion. These beads may undergo heating or steaming at a later date to effect expansion to a final product. Cross-linking or cross-linkable foams are recommended to generate smaller and more uniform cell sizes. Melting temperatures of the polymer matrix were typically 160° to 310°C.

EP 1 655 326 teaches that extrusion of films from various polyethylenes, polypropylenes, olefinic copolymers, polyvinylchloride or "PVC", and polystyrene results in foamable films where the polymers chosen maintain melting points below 130°C. Inorganic carbonates and modified citric or polymeric acids were the expanding agents of choice. Cell sizes of 0.05 to 2.0 mm were typical and resulted in densities of 20 to 400 kg/m³.

EP 1 666 222 demonstrates the use of extrusion and pelletization of polystyrene, polyethylene, and polypropylene at processing temperatures of 150 to 180°C, 130 to 160°C, and 180 to 210°C respectively. The material is passed through a die with hole diameters of 0.5 to 1.0 mm and land lengths of 2 to 4 mm. Shear rates of 12,000 to 35,000 reciprocal seconds are identified as necessary to achieve apparent melt viscosities from 10,000 to 70,000 centipoise. Water temperatures for pelletization of polystyrene are cited at 30 to 60°C, for polyethylene are given to be 20 to 50°C, and are stated as 40 to 70°C for polypropylenes. The pellet diameters are described as being slightly larger in diameter than the die holes. Blowing agents included in the citation are aliphatic hydrocarbons, ethers, alcohols, carbon dioxide, nitrogen, and water and typically range from 2 to 15 % by weight.

US 6,465,533 teaches the use of extrusion with polystyrene of an average molecular weight of 220,000 which includes flameproofing agents, aluminum platelets, antimony trisulfide, carbon black and/or graphite as heat modifiers, and blowing agents in the formulation. The process identifies the need for cooling the mixture to 120°C after which the extruded material is granulated underwater. Pressure may be required in the transport fluid box or waterbox to avoid premature expansion especially as the particle size of the heat modifiers is decreased. Coating of the granulate is also described to prevent sticking. The cell size of the foamed material is described as homogeneous and ranges from 0.05 to 0.2 mm.

European patents EP 1 396 519, EP 1 486 530, and EP 1 514 895 describe a process for extrusion of expandables utilizing polystyrene, flameproofing agents, expanding agents, metallic particles (copper, zinc, or aluminum, for example) and other materials such as graphite, alumina, magnesium hydroxide, and/or aluminum hydroxide to improve the heat-reflecting properties of the granulates formed. Where graphite is identified, the preferred particle size is less than 5 microns.

US 6,783,710 describes a series of static mixers in which the first unit provides intensive shearing to achieve melting and a high flow rate and where the second mixer operates at much lower shear rates with a reduced flow rate allowing some cooling of the polymer. Hydrocarbon and fluorocarbon blowing agents, flameproofing agents, nucleators, and other additives are incorporated directly into the melt process. The blowing agent is added to the high shear, dispersive mixer to insure uniformity of the dispersion. Slight cooling is followed by granulation of the polymer melt and the extruded material is cooled quickly and preferably in water to prevent premature expansion of the impregnated polymer beads. Pressures of 100 bar and temperatures of 200°C are identified for the high shear mixture. The granulated product is compared as practically the same as those achieved directly from suspension polymerization processes.

EP 1 517 947 and US Patent Application No. 20050156344 refer to a process to produce expandable pellets wherein the polystyrene used is of a molecular weight range from 170,000 to 400,000 with 2 to 10% expanding agent, a polydispersity of 3.5 maximum, a processing range typically of at least 120°C with die temperatures of 160° to 240°C, a die hole diameter of 0.2 to 1.2 mm with land lengths, and inlet and outlet tapers carefully defined. Water is defined as a critical component of the blowing agent formulation ranging from an internal content of 0.5 to 1.5% being necessary to achieve uniformity of cell structure. Static mixing is preferred over dynamic mixing to avoid molecular weight reduction, thermal decomposition, and poor cell structure which subsequently results in reduced foaming and/or poorly foamed structure. Processing times are preferably in the range of 1 to 10 minutes with shear rates maintained below 30 reciprocal seconds at temperatures typically below 260°C.

US-A-5 234 963 relates to the process according to the preamble of claim 1 and apparatus according to the preamble of claim 23 for compounding and pelletizing of chemical foaming agents in a high melt resin carrier and producing unique, uniform encapsulated and pelletized chemical foaming concentrates.

US-A-4 606 873 relates to a process and an apparatus for the production of expandable granules of thermoplastic polymers, wherein the cooling and the cutting of the polymer to granules and the annealing thereof are carried out under pressure.

EP-A-1 702 738 discloses a method for the continuous manufacturing of expandable plastic granulate (G) by the impregnating of a molten plastic melt (F) with a fluid blowing agent (B) entails imparting an increased pressure to the fluid used in the granulating, on account of which a swelling action of the blowing agent in the not yet solidified granulate is at least partially suppressed.

EP-A-1 556 199 refers to a sectioned adjustable water flow guide positioned in the cutting chamber of an underwater pelletizer, which is adjustable to vary the volume of pressurized water flow into the water inlet, axially toward the die face and then with the sheared pellets away from the die face and to the outlet.

-CA-A1-2 142 944 relates to a method for the production of expandable plastics granulate from a plastics melt and a fluid blowing agent, wherein the mixture of the melt and the fluid blowing agent is retained within a predetermined pressure range for a predetermined retention time.

EP-A-0 347 207 discloses an apparatus for use in producing pellets of plastics material.

WO-A-2005/044532 discloses a granulation die for arrangement on a device for the granulation of materials with thermoplastic properties.

### SUMMARY OF THE INVENTION

Prior art has demonstrated the feasibility of pelletizing materials containing volatile components especially as demonstrated in the expandable polystyrene market. Challenges arise in attempting to extrude these formulations in that venting must be available early in the mixing and melting process to eliminate unwanted volatiles such as water or gases. These may be byproducts of the chemistry, or absorbed into the pores and spaces in and between the components, or tightly adsorbed onto the surfaces, especially in high surface components such as nanomaterials or carbon powders. Venting or degassing becomes problematic when there are ingredients necessary to retain with controllable concentration. Premature expansion must be avoided during these venting operations as well.

Starting the entire process is problematic when volatiles are present in that the purging of the various components typically requires significant pressure drops from within the particular component to atmospheric conditions commonly encountered as a consequence of the purging process. Losses of volatiles, problematic foaming, or even significant unwanted expansion are significant challenges which need to be overcome.

Once the pellets are cut they need to be cooled sufficiently to solidify the outer shell while the internal temperature of the pellet may still be significantly warmer leading to further loss of volatiles or undesirable expansion. This is further complicated in materials which tend to crystallize in that considerable heat is evolved during the process of crystallization and must be dissipated by the process conditions as well to avoid any adverse losses or undesirable consequences.

Piping materials any distance leads gradually to pressure drop across the system which proves problematic for these pellets when still sufficiently warm thus allowing volatility challenges, foaming, and/or agglomeration, to occur potentially. With increases in pressurization in the piping, dewatering now becomes a significant challenge without the commonly experienced pressure drops leading to the volatility challenges at this juncture.

Accordingly, it is an objective of the present invention to provide an improved method and an improved apparatus for producing polymer pellets containing a volatile and/or volatile generating agent, wherein disadvantages of the prior art are avoided and the latter is further developed in an advantageous way. In particular, an improved production process using affordable and reliable equipment is desired so as to eliminate or at least reduce substantial losses in the concentration of volatiles and volatile generating materials in producing such polymer pellets.

According to the present invention, this objective is achieved by a method according to claim 1 and an apparatus according to claim 23. Preferred embodiments of the invention are laid down in the dependent claims.

According to an aspect of the present invention, a practical and economical process is provided which allows the use of efficient dispersive and distributive mixing to provide a homogeneous formulation containing volatile ingredients. This uniformly dispersed mixture can successfully be throughput to a multi-orifice die and pelletized successfully without significant loss of volatiles and without premature expansion. Following the pelletization and as disclosed herein, the beads or pellets are transported under sufficient pressurization to further prevent similarly the loss or premature expansion and to facilitate cooling and solidification of the pellets to successfully entrap the volatile ingredients. Drying and post-processing of the impregnated beads or pellets is possible in accordance with the current invention while maintaining the desired concentration of those volatiles. Incorporation of particulates, filler materials, and property modifiers are also within the scope of this invention including sub-millimeter particle sizes known from the cited prior art to be significantly problematic for inducement of premature expansion.

Because of the above considerations, the present invention is presented in which a multicomponent apparatus provides exceptional levels of control in venting, foam prevention, reduction or elimination of volatiles, overcoming premature expansion, and allowing sufficient cooling to solidify the pellets, and facilitate dissipation of heat evolved should crystallization or other exothermic processes be incurred.

According to a principal aspect, this invention provides an apparatus which maintains the concentration of volatile ingredients, reduces undesirable out-gassing of formulation components, and/or prevents unwanted or premature expansion of pellets produced through a continuous process which includes but is not limited to uniformly distributive and dispersive mixing with a polymer or polymer melt or similar molten fluid which when sufficiently pressurized passes through a pressure restrictive diverter valve through a multi-orifice die plate, undergoes pelletization, and after which the beads produced are transported while maintaining controlled pressure such that appropriate cooling and solidification is achieved prior to drying and appropriate post-processing of those volatile-impregnated particles.

A second provision is made for a static mixer for enhanced dispersional and/or distributional mixing of the material containing volatiles which has a series of bypass valves at its inlet and outlet to allow purging of material prior to entry into the static mixer, from respective sections of the static mixer, avoiding the static mixer, or at the outlet of the static mixer prior to entry into downstream processing.

According to another aspect, the present invention provides a multi-positional or multi-directional polymer diverter valve which contains a restrictor plug such that loss of volatiles and premature expansion of the polymeric dispersion is avoided during passage from the mixing process to the pelletization process.

Additionally, the present invention provides an abrasion and corrosion resistant die plate, single component or with removable center for ease of replacement, capable of selectively extruding the polymeric dispersion in diameters of 3.5 mm or less using elongational heating elements or multizone center-heating for enhanced uniformity of and more efficient transfer of heat to the through-passing polymeric dispersion.

It is a further advantage of the present invention to enhance the safe operation of the process including volatile components by encapsulation of the described die in an explosion proof shield.

Yet another preferred embodiment of the present invention includes use of standard, streamline, or flexible cutter hub design with a plurality of blades of a multiplicity of composition and dimensionally varied to provide optimal pelletization capabilities commensurate with enhanced abrasive or corrosive component capabilities.

In still another advantageous embodiment of the present invention the pelletizer may optimally be manually or mechanistically adjusted to insure proper fit of the cutter hub and blades to the die face.

A further advantageous embodiment of the present invention provides seals, including mechanical types, in the pelletizer as a safeguard measure for the control of pressurization wherein the pressurization is introduced to control, reduce, or eliminate the loss of volatiles and prevent unwanted or premature expansion of the polymer pellets produced.

According to another embodiment, the invention provides a standard or two-piece transport fluid or waterbox utilizing flow guides or segmented flow guides for optimal facilitation of the flow of the pellets produced away from the cutting chamber.

Yet another preferred embodiment of the present invention provides a novel pressure regulation mechanism including but not limited to a series of one or more pumps or high pressure pumps and a restrictive fluid flow or multiplicity of restrictive fluid flow linear or angular piping designs incorporated in at least one component of the two-way bypass design or in the process piping subsequent to the bypass.

An additional advantageous embodiment of the present invention provides pressurized dewatering to allow reduction of the transport fluid volume effectively increasing the pellet / fluid slurry ratio thus facilitating downstream dewatering, drying, and post processing once the pellet is sufficiently solidified to allow such manipulation.

According to a still further embodiment of the present invention, a dryer or self-cleaning dryer is provided with adjustable spray nozzles in which is placed a screening device or multiple screening devices of at least one and preferably two, or more layers to which may be applied surface modifying and/or anti-static treatments to facilitate safe operation in the presence of pellets containing volatile ingredients.

In yet another embodiment of the present invention sub-millimeter particulate size or liquid fillers, pigments, flow control modifiers, thermal property modifiers, anti-static agents, rheology modifiers, flame retardants, expanding agents or the like may be incorporated in the formulation of an extensive array of polymeric matrices without undue loss of volatile components and without unwanted or premature expansion of the polymeric dispersion during the mixing, pelletization, transport, or drying phases of the process described herein.

Post-processing manipulations, coating of pellets to eliminate agglomeration or sticture, sieving and/or sizing are all within the scope of the present invention.

These together with other objects, embodiments and advantages will become subsequently apparent from the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 is a schematic illustration of a comparative process including a vessel, static mixer, polymer diverter valve, pelletizer and bypass, with an agglomerate catcher, dewatering device and centrifugal dryer.
Figure 2 is a schematic illustration of a comparative process including an extruder, polymer diverter valve, pelletizer and bypass, with an agglomerate catcher, dewatering device and centrifugal dryer.
Figure 3 is a schematic illustration of a preferred embodiment of the present invention including a feeding section, a mixing section, pelletization, dewatering and drying, and a post-processing section.
Figure 3a is a schematic illustration of a mixing vessel, medium pressure pump, and coarse screen changer.
Figure 3b is a schematic illustration of a feeder, gear pump, and static mixer assembly.
Figure 4 is a schematic illustration of a comparative static mixer with gear pump and bypass pipe connected by three-way valves.
Figure 5 is a schematic illustration of a vertically configured static mixer with attached bypass diverter valve.
Figure 6 is a schematic illustration of flow and purge positions for the bypass diverter valve in Figure 5.
Figure 6a illustrates the operational flow positions of valving in the bypass diverter valve with the static mixer vertically inclined.
Figure 6b illustrates a purge operation in the bypass diverter valve which bypasses the static mixer.
Figure 6c illustrates a purge position in the bypass diverter valve which allows both sides of the vertically inclined static mixer to purge without introducing material downstream.
Figure 6d illustrates a purge position in the bypass diverter valve which allows purge of the upstream portion of the static mixer to purge out of the system with the downstream portion of the static mixer purging through the attached multidirectional polymer diverter valve.
Figure 6e illustrates a purge position which blocks the static mixer and all downstream equipment allowing independent purge of the upstream equipment.
Figure 7 is a schematic illustration of flow and purge positions for the bypass diverter valve to which is attached the static mixer in pendulous orientation.
Figure 7a illustrates the operational flow positions of valving in the bypass diverter valve with the static mixer pendulously attached.
Figure 7b illustrates a purge operation in the bypass diverter valve which bypasses the static mixer.
Figure 8 is a schematic illustration of flow and purge positions for the bypass diverter valve to which is horizontally attached the static mixer.
Figure 8a illustrates the operational flow positions of valving in the bypass diverter valve with the static mixer horizontally attached.
Figure 8b illustrates a purge operation in the bypass diverter valve which bypasses the static mixer.
Figure 8c illustrates a purge position in the bypass diverter valve which allows both sides of the horizontally positioned static mixer to purge without introducing material downstream.
Figure 9 is a schematic illustration of a multipositional and multidirectional polymer diverter valve with restrictor plug in various flow positions.
Figure 9a is a schematic illustration of the exterior of the multidirectional diverter valve.
Figure 9b illustrates the multipositional and multidirectional diverter valve in the operational position.
Figure 9c illustrates the multipositional and multidirectional diverter valve in the external purge position.
Figure 9d illustrates the multipositional and multidirectional diverter valve in the blocking position.
Figure 10 is a schematic illustration of the multipositional and multidirectional diverter valve with restrictor plug with horizontal external purging.
Figure 10a is a schematic illustration of a portion of the multipositional and multidirectional diverter valve rotated ninety degrees in relation to Figure 9 to illustrate the horizontal purge chute.
Figure 10b is a top view of the diverter valve position illustrating the operational position.
Figure 10c is a top view of the diverter valve position illustrating the horizontal external purge position directing flow into the horizontal purge chute.
Figure 10d is a top view of the diverter valve illustrating the blocking position to inhibit downstream flow.
Figure 10e is a schematic illustration of a portion of the multidirectional diverter valve rotated ninety degrees in relation to Figure 9 to illustrate the horizontal pipe for recycling.
Figure 11 is a schematic illustration of an explosion proof one-piece die plate with heating elements in three configurations with an explosion proof shield.
Figure 12a illustrates the three configurations of the heating element extracted from the die plate.
Figure 12b illustrates the three configurations of the heating element positionally placed individually in side view.
Figure 13 is a schematic illustration of a removable-center die with explosion-proof shield.
Figure 14 is an expanded view illustration of the components of a removable center-heated die.
Figure 15 is a schematic illustration of a die body with transport fluid box or waterbox showing alternate locations of the explosion-proof shield faceplate.
Figure 16 is a schematic illustration of a die body and two-piece transport fluid box or waterbox showing alternate locations of the explosion-proof shield faceplate.
Figure 17 is an expanded view illustration of a comparative two-piece waterbox or transport fluid box.
Figure 18a is a schematic illustration of a complete assembly of a comparative two-piece waterbox or transport fluid box.
Figure 18b is a cross-sectional illustration of an alternative waterbox or transport fluid box inlet and outlet design.
Figure 18c is a schematic face-view illustration of the alternative waterbox or transport fluid box inlet and outlet design of Figure 18b.
Figure 19 is a schematic illustration of a pelletizer with attached waterbox or transport fluid box showing the die with an explosion proof shield.
Figure 20 is a schematic illustration of a die with explosion-proof shield attached to a waterbox or transport fluid box containing a flow guide.
Figure 21a is a schematic illustration of a comparative flow guide.
Figure 21b is a schematic illustration of a second configuration of a comparative flow guide.
Figure 22 is a schematic illustration of a comparative flexible cutter hub with exploded view of flexible hub component.
Figure 23a is a schematic view of a portion of a streamline cutter hub.
Figure 23b is a schematic view of the streamline cutter hub rotated in perspective relative to Figure 23a.
Figure 23c is a cross-sectional view of the streamline cutter hub in Figure 23a.
Figure 24 is a schematic illustration of a steep angle cutter hub.
Figure 25a is a schematic illustration of a comparative cutter hub with attached normal angle blade.
Figure 25b is a schematic illustration of a steep angle cutter hub with attached blade.
Figure 25c is a schematic illustration of a comparative perpendicular angle cutter hub with attached non-tapered or square-cut blunted tip blade.
Figure 25d is a schematic illustration of a cutter hub with attached reduced thickness blade at normal angle.
Figure 26 is a schematic illustration of a comparative waterbox bypass.
Figure 27 is a schematic illustration of a multiple loop pressurized transport fluid or waterbox bypass.
Figure 28 is a schematic illustration of an inline pressure generation unit consisting of a bypass loop, agglomerate filtration basket and three biconical devices in a series of decreasing diameter flow restriction tubes.
Figure 29 is a schematic illustration of the slurry line filtration basket of Figure 28.
Figure 30 is a schematic illustration of one biconical device of Figure 28.
Figure 31a is a schematic illustration of a pressurized dewatering device.
Figure 31b is a cross-sectional schematic illustration of a pressurized dewatering device.
Figure 32 is a schematic illustration of a comparative self-cleaning dryer.
Figure 33 is a schematic illustration of the dewatering portion of the self-cleaning dryer in Figure 32.
Figure 34 is a schematic illustration of a second comparative dryer with attached dewatering section.
Figure 35 is a schematic illustration of a reservoir.
Figure 36 is a schematic illustration of a dryer showing dewatering screen and centrifugal drying screen positioning.
Figure 37 illustrates a dryer screen with deflector bars.
Figure 38 is a cross-sectional illustration of the screen with deflector bars in Figure 37.
Figure 39 illustrates a dryer screen of a configuration not requiring deflector bars.
Figure 40 is a cross-sectional illustration of the dryer screen of Figure 39 without deflector bars.
Figure 41 illustrates an enlarged edge-on view of a three-layer screen.
Figure 42 illustrates an enlarged edge-on view of a two-layer screen.
Figure 43 illustrates an enlarged external view of a multilayer screen following Figure 42.
Figure 44 is a schematic drawing illustrating a melt cooler mounted horizontally with respect to the diverter valve in accordance with another embodiment of the present invention in which the melt cooler inlet line enters a bottom portion of the cooler.
Figure 45 is a schematic drawing illustrating the melt cooler mounted horizontally with respect to the diverter valve in accordance with another embodiment of the present invention in which the melt cooler inlet line and the melt cooler outlet line are oriented in a side-by-side configuration.
Figure 46 is a schematic drawing illustrating the melt cooler shown in Figure 4 with a top-mounted vent.
Figure 47 is a schematic drawing illustrating the melt cooler shown in Figure 6 with a bottom-mounted vent and drain.
Figure 48 is schematic drawing illustrating the melt cooler shown in Figure 4 with a top head heated/cooled by a thermal transfer fluid.
Figure 49 is schematic drawing illustrating a portion of the melt cooler shown in Figure 4 with a top head temperature controlled electrically.
Figure 50 is a perspective view drawing illustrating the diverter valve in accordance with the present invention in a cooling mode of operation.
Figure 51 is perspective view drawing illustrating the diverter valve shown in Figure 14 in a bypass mode of operation.
Figure 52 is perspective view drawing illustrating the diverter valve shown in Figure 14 in a drain mode of operation.
Figures 53A, 53B, and 53C are schematic drawings illustrating a melt cooler and diverter valve in accordance with another embodiment of the present invention.

### DETAILED DESCRIPTION OF THE INVENTION

Although preferred embodiments of the invention are explained in detail, it is to be understood that other embodiments are possible. Accordingly, it is not intended that the invention is to be limited in its scope to the details of construction and arrangement of components set forth in the following description or illustrated in the drawings. The invention is capable of other embodiments and of being practiced or carried out in various ways. Also, in describing the preferred embodiments, specific terminology will be resorted to for the sake of clarity.

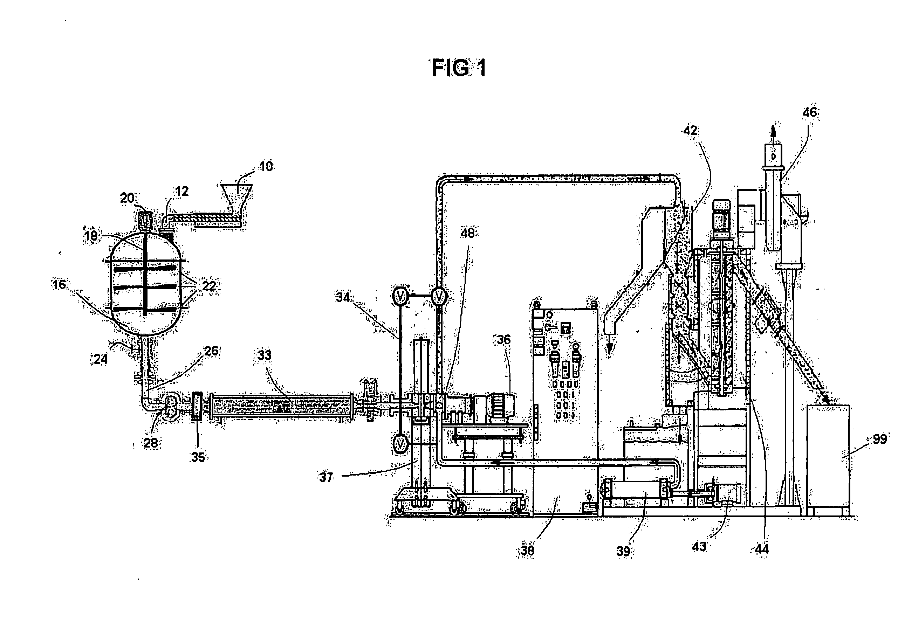

Referring specifically to the drawings, Figure 1 illustrates a comparative mixing, pelletizing and drying process in which an optional feeder 10 is or a multiplicity of feeders are connected to vessel inlet 12 to convey material into the mixing vessel 16. Agitation is achieved by rotation of motor 20 and shaft 18 to which are fixedly attached blades 22. The mixture is heated as required to achieve as uniform homogeneity as is possible at which time valve 24 is opened to allow the batch to flow through connecting pipe 26. Additional pressurization as required is provided optionally by gear pump 28 and screen changer or filter 35 with additional mixing or cooling as necessary provided by static mixer 33. The uniformly dispersed molten mixture passes through the polymer diverter valve 37 through a die for granulation by underwater pelletizer 36 which contains a multiplicity of cutter blades (not shown). The granules or pellets thus produced are discharged into the transport fluid box or waterbox 48 and transported by a flow of water or other fluid to and through the agglomerate catcher and dewaterer 42 into and through the centrifugal dryer 44 for discharge into a collection vessel or additional downstream processing illustrated collectively 99. The process is supplemented by pump 43 and heat exchanger 39 in association with transport fluid box or waterbox bypass 34 which provides an alternative flow pathway allowing maintenance of the pelletization component of the process. Blower 46 facilitates air admixture and drying in the centrifugal dryer 44. Control panel 38 provides distribution of power to operational components in the process.

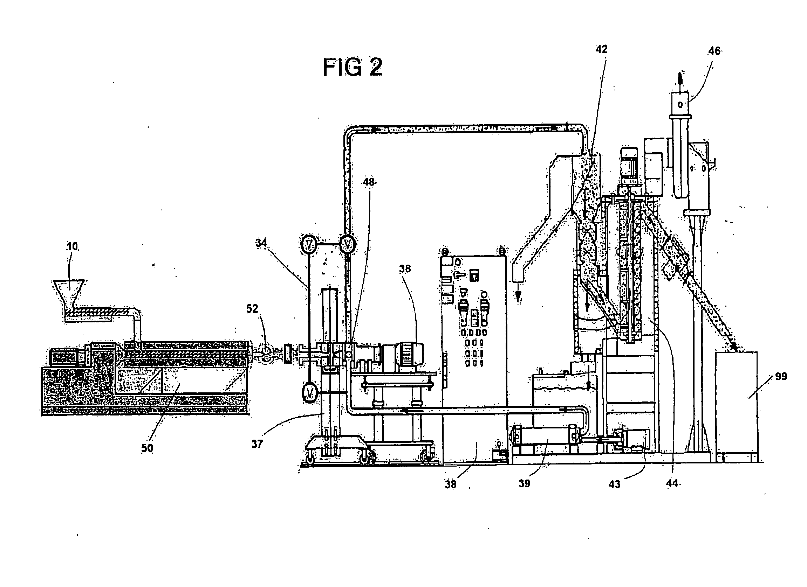

Figure 2 follows similarly for a comparative extrusion process where identical numbers are used representationally for equivalent equipment in both comparative processes and in subsequent figures illustrated in the invention herewith. The extruder 50 provides mixing and melting of the material or materials and optional gear pump 52 provides additional pressure as required to facilitate the pelletization process as detailed hereinabove.

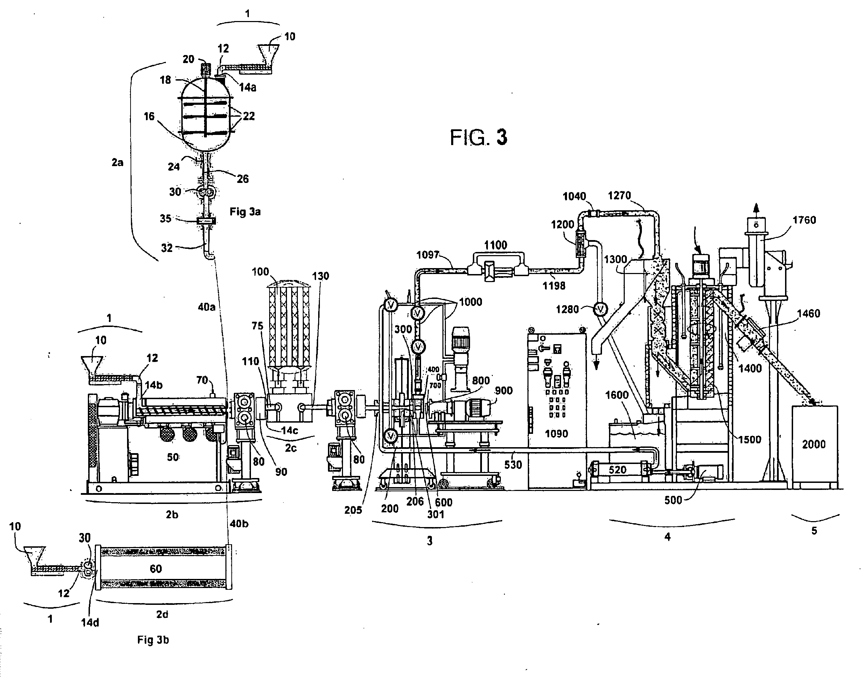

Figure 3 illustrates the principle preferred embodiment of the present invention. The apparatus includes a feeding or filling section 1 which provides material into a mixing, melting and/or blending section or sections 2 fittingly attached to a pelletizing section 3 which preferentially utilizes pressurized or otherwise expedited fluid transport of the pellets to a dewatering and drying device 4 after which the material is conveyed to packaging, storage and/or post-processing manipulations 5.

In feeding section 1 material or component materials are fed into the mixing section 2 manually as a solid or liquid, or preferably liquids may be pumped or metered, not shown, into the mixing apparatus and solids may be added via a feed screw 10 as indicated in Figures 3, 3a, and/or 3b, or by other appropriate device. Feeding may be accomplished gravimetrically or volumetrically and preferably is controlled through mechanical and/or electronic feed-back mechanisms as are readily known to those skilled in the art. One or more similar or different feeding mechanisms may be required by the process and may be placed at the same or different entry points in the mixing section 2 as indicated by mixing inlet 14a, 14b, 14c, or 14d. The feeding components may be ambient in temperature, heated, or cooled and may be at atmospheric conditions or pressurized, purged with air or an inert medium such as but not limited to argon or nitrogen preferentially, or may be subjected to a vacuum or partial vacuum to expedite flow into the mixing section 2 preferentially near the exit port of the feeding device exemplary of which is the feed screw outlet 12.

The mixing section 2 according to a preferred embodiment of the present invention includes dynamic 2a, extrusional 2b, and/or static 2c mixing components which may be used individually or as a plurality of one, two, or more of these component types interconnectedly attached in series, in tandem, and/or in parallel.

The feed screw outlet 12 of feeding section 1, Figure 3a, is attached to the dynamic mixing section 2a at one or more inlets exemplified by inlet 14a for the thermally controlled mixing vessel 16. The vessel chamber may be atmospheric or purged with air or inert gas, argon or preferably nitrogen. Components may be added continuously or portionwise with warming to temperature as required by the process. Mixing is achieved by rotation of the rotor 18 controlled by motor 20. Attached to rotor 18 are mixing blades 22 exemplary of which may be propeller or boat style, ploughshare style, delta or sigma style in single, double, or multiple configurations, and helical or helical dispersion blades. Alternatively, the mixer may be a kneader, Buss kneader, or Farrell internal mixer or it may be a ribbon blender, Banbury-type blender, horizontal mixer, vertical mixer, planetary mixer or equivalent device known to those skilled in the art.

On reaching the appropriate pour point valve 24 is opened and the fluid or molten material passes into and through pipe 26 and is drawn into booster pump 30. The booster pump 30 may be a centrifugal pump or a positive displacement reciprocating or rotary pump. Preferably the booster pump 30 is rotary and may be a peristaltic, vane, screw, lobe, progressive cavity, or more preferably, a gear pump. The gear pump may be high precision or preferably is open clearance and generates an intermediate pressure, typically up to 34,5 bar (500 psi) and preferably less than 10,3 bar (150 psi). The pump pressure is sufficient to force the melt through coarse filter 35 which may be a candle filter, basket filter, or screen changer, and is more preferably a basket filter of 20 mesh or coarser. The coarse filter 35 removes larger particles, agglomerates, or granular material from the melt as it flows to and through pipe 32. The dotted line 40a indicates the connection to melt pump 80.

Alternatively the feeding section 1 in Figure 3 is connectedly attached via feed screw outlet 12 to the mixing section 2, and more specifically extrusional mixing section 2b, at one or more inlets as exemplified by inlet 14b to an extruder 50 which optionally may be but is not limited to a single screw, twin screw, multiple screw or ring extruder, or a ram extruder and is preferably a single screw, and more preferably is a twin screw extruder. The sections or zones of the screw must feed, mix, and convey the material simultaneously providing sufficient energy, thermal and mechanical, to melt, mix, and uniformly disperse and distribute the material or materials for the pelletization to follow. The extruder 50, preferably the twin screw extruder, optionally may be purged with air or an inert gas, of which nitrogen or argon are preferential but not limiting, and additionally may have one or more vent ports some or all of which may be fitted with one or more vacuum attachments or other exhaust mechanism or mechanisms as is understood by those skilled in the art. Vent ports or appropriate exhaust mechanisms facilitate removal of gases, unwanted volatiles such as residual monomer or byproducts, and/or impurities. Venting must be used with caution and positionally placed such that volatiles and volatile-generating components are not lost or compromised after introduction to the mixing process. The configuration of the screw must be satisfactory to achieve an appropriate level of feeding, mixing dispersively and/or distributively, melting, blending, and throughput rate determined by the formulation and processing requirements. The extruder 50 is attachedly connected to the melt pump 80 as shown in Figure 3 at the locus similarly identified by the dotted line 40a for dynamic mixing section 2a illustrated in Figure 3a.

Analogously feeding section 1 may be connected via feed screw outlet 12 to inlet 14c in the static mixing section 2c in Figure 3 and/or to inlet 14d in the static mixing section 2d in Figure 3b. Process operations may require use of a booster pump 30 and/or a melt pump 80 to facilitate transfer and pressurization of the material flow into the static mixer 60. Details of static mixer 60 and/or bypass static mixer 100 are disclosed in discussions of the current invention which follow. Static mixer 60 is connected to melt pump 80 positionally as indicated by dotted line 40b.

Mixing sections may be used alone or in combination where dynamic, extrusional, and/or static mixing as described herein are connected in series and/or in parallel. Exemplary of this is dynamic mixing section 2a attached directly to static mixing section 2d at inlet 14d or extrusional mixing section 2b attached directly to static mixing section 2d at inlet 14d or alternatively to static mixing section 2c at inlet 14c, bypass static mixer 100 as detailed below. Extrusional mixing section 2b alternatively may be attached to another extrusional mixing section in series and/or in parallel of similar or different design type or configuration. Temperatures and process parameters may be the same or different in the various mixing sections and mixing units may be attached in combinations greater than two serially or otherwise.

Volatile ingredients or volatile generating ingredients, liquid or solid, may be added utilizing the feeding section (or sections) 1 herein described connected at one or more locations including but not limited to inlets 14a, 14b, 14c, or 14d. For dynamic mixing, volatiles are added at inlet 14a or preferably at inlet position 75 proximal to inlet 14c. Where dynamic mixing is attached serially to static mixing (not shown in Figure 3), addition of the volatiles is preferably performed at the inlet of the static mixer as is exemplified by a modification of inlet 14d for static mixer 60 (Figure 3b) as is understood by one skilled in the art. For extrusional mixing, volatiles are added at inlet 14b, preferably at an inlet positionally near the end of the extruder 50 as indicated by inlet position 70 or alternatively at inlet position 75 proximal to inlet 14c. For extrusion mixing serially attached to static mixing prior to gear pump 80 (not shown in Figure 3), addition of volatiles may be accomplished at the inlet of the static mixer as is exemplified by a modification of inlet 14d for static mixer 60 (Figure 3b) as previously described for serial dynamic and static mixing. For static mixing, introduction of volatiles may be done at inlet 14d in Figure 3b or at inlet position 75 proximal to inlet 14c in Figure 3.

Various levels of mixing and shear are achieved by the differing styles of mixing processes. Static mixing typically has the least shear and relies more on thermal energy. Dynamic mixing depends tremendously on blade design and mixer design. Extrusional mixing varies with type of screw, number of screws, and the screw profile and is quite capable of significant generation of shear energy. Therefore, energy is introduced into the mixing process in terms of both shear or mechanical energy and thermal energy. Heating, and/or cooling, of the units may be achieved electrically, by steam, or by circulation of thermally controlled liquids such as oil or water. Mixing continues until a formulation reaches an appropriate temperature or other criterion of consistency or viscosity as determined or known specifically for the process by those appropriately skilled in the art.

On exit from the mixing stage 2a, 2b, 2c, or 2d, or any combination thereof, the molten or fluidized material optionally passes to and through a melt pump 80 which generates additional pressure on the melt, preferably at least 10 bar and more preferably 30 to 250 bar or more. Pressures required are dependent on the material being processed and are significantly affected by the pelletization process 3 which follows mixing as well as on the throughput rate or flow rate of the process. Melt pump 80 may be a centrifugal or positive displacement reciprocating or rotary pump, and preferably is a rotary pump which may be a peristaltic, vane, screw, lobe, progressive cavity, or gear pump, and more preferably is a gear pump. Seals must be compatible with the material being processed, chemically and mechanically, the details of which are well understood by those skilled in the art.

The pressurized melt passes through a filter 90 which is preferably a basket filter or screen changer, and is more preferably a screen changer of 200 mesh or coarser, and even more preferably a multilayer screen changer of two or more screens of differing mesh, most preferably a series of filters exemplary of which is 20 mesh, 40 mesh, and 80 mesh. The screen changer may be manual, plate, slide plate, rotary plate, single or dual bolt, and may be continuous or discontinuous.

The use of melt pump 80 and/or filter 90 are included herein and their use is strongly and optionally dependent on the containment of the volatiles or volatile-generating ingredients in the formulation. Pressures may be sufficient from extrusional mixing 2b to forego use of melt pump 80 whereas use of static and/or dynamic mixing, 2a or 2d, may require facilitation of pressurization to insure progress through and egress of the formulation from the apparatus. The filter 90 provides a safety mechanism, where employed, to insure oversize particles, lumps, amorphous masses, or agglomerates are not propagated to the bypass static mixer 100 or pelletization process 3. Alternatively, introduction of volatiles and related volatile-generational components may be performed at inlet position 75 proximal to inlet 14c in Figure 3 as previously delineated. Where additional pressurization and/or screening is a requisite process component, introduction via inlet position 75 proximal to inlet 14c is the preferred approach.

Static mixer 60 in Figure 3b may be used to heat the mixture being formed to generate a uniform molten mass or may be used effectively as a melt cooler to reduce the temperature of the molten mass. When static mixers are used in series, each unit may be used to heat and further mix the formulation wherein the temperatures, design, geometries and configurations, physical size, and process conditions may be the same or different. A static mixer in the series may be heating the mixture to achieve better dispersive and distributive mixing whereas a second static mixer may actually be cooling the mixture to facilitate further processing. A static mixer 60 or melt cooler is a heat exchanger of the coil type, scrape wall, shell and tube design, or U-style tube design or any other comparable style and preferably is a shell and tube design which includes static mixing blades of any appropriate configuration within the individual tubes to further mix the material and bring more of the material in intimate contact with the wall of the tube outside of which is a flow preferably of, but not limited to, oil or water to provide warming or cooling as appropriate. The temperature and flow rate of the circulating medium is carefully regulated by a control unit, not shown. The important criterion for selection of conditions in static mixing or melt cooling is to do a maximum amount of work to effect mixing with a minimum pressure drop while maintaining the pressure required for proper admixture. Pressures generated by the extruder 50 and/or the melt pump 80, where present, must be sufficient to maintain flow of the molten or fluid mass through the filter 90, where applicable, into and through the bypass static mixer 100, and into and through the pelletization section 3. Alternatively, an optional melt pump 80 may be positionally attached to outlet 130 and inlet 205 to maintain or increase pressure into and through the pelletization section 3.

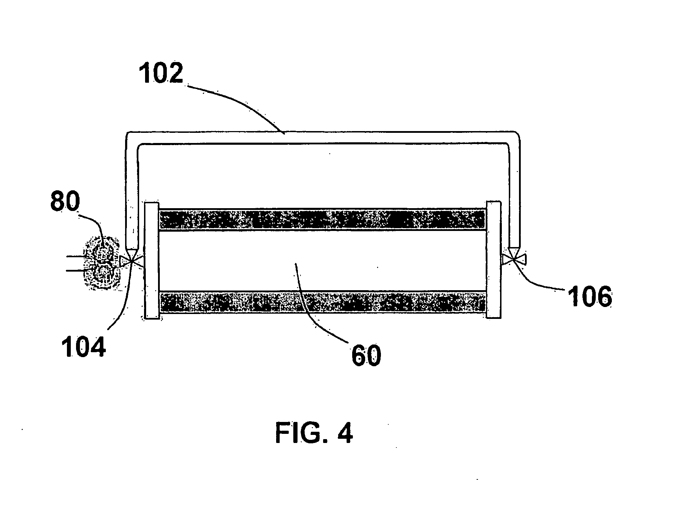

The optional bypass static mixer 100 in Figure 3 has a distinct advantage over prior art where a static mixer 60 would have to physically be removed from the melt flow pathway for maintenance or cleaning, and is not always necessary in a particular process. To simplify this challenge, a "spool" or straight large bore pipe that may or may not have coolant connection was inserted into the pathway to allow flow effectively bypassing the unnecessary static mixer. Alternatively a bypass line 102 was inserted into the flow path as shown in Figure 4 with a diverter valve 104 used to switch flow from the static mixer 60 into the bypass line 102. Similarly a second diverter valve 106 was required to reconnect the bypass flow back into the mainstream at or near the outlet of static mixer 60.

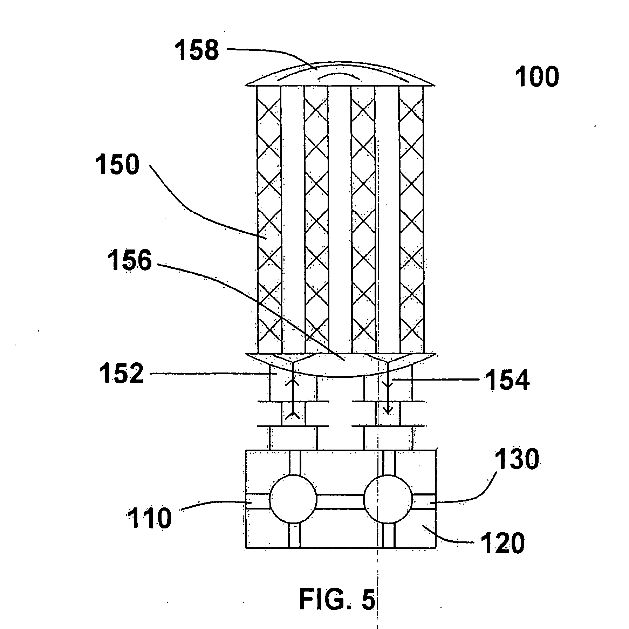

The outlet of optional filter 90 is attachedly connected to the bypass static mixer 100 in Figure 3 via inlet 110 of bypass diverter valve 120 detailed in Figure 5. Inlet 110 directs melt flow into the static mixing component 150 of the novel bypass static mixer 100 through static mixer inlet 152. The melt flow passes through static mixing component 150 and exits through static mixer outlet 154 into the outlet 130 of the bypass diverter valve 120. A two-pass or double pass heat exchanger is illustrated in Figure 5 wherein the base 156 of the static mixing component 150 is attachedly connected as described through inlet 152 and outlet 154 to the bypass diverter valve 120. The top 158 of the static mixing component 150 is distal from the bypass diverter valve 120.

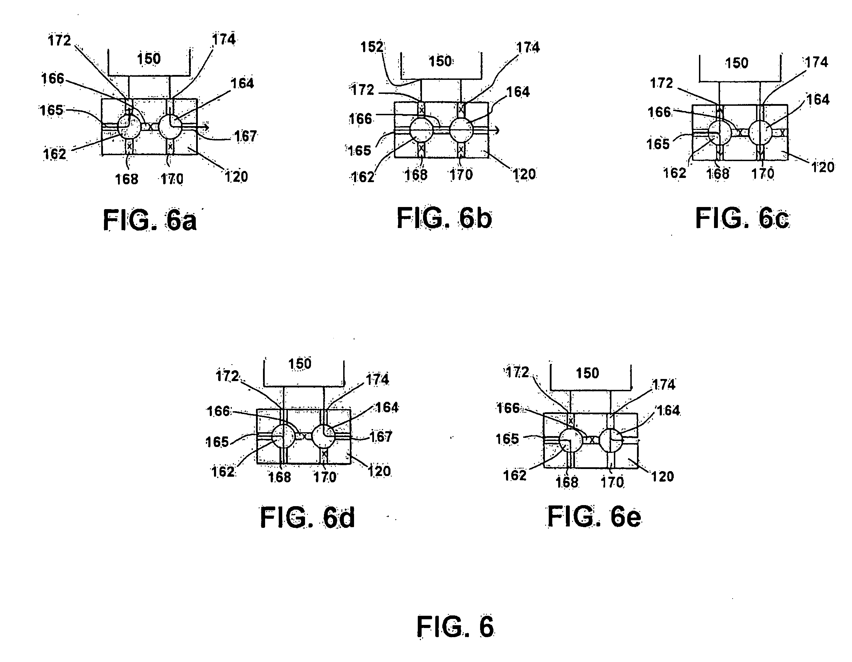

Figure 6 illustrates four modes of operation of the bypass diverter valve 120 in conjunction with the static mixing component 150 as detailed in accordance with Figure 5. An "X" in a valve line of the bypass diverter valve 120 indicates that the valve line is closed. Figure 6a illustrates operation of the bypass diverter valve in conjunction with the static mixing component 150 in vertical orientation as detailed above. More specifically, bypass valve line 166 between valve components 162 and 164 is closed, as well as valve drain lines 168 and 170. As such, liquid or molten material or extrudate entering bypass diverter valve 120 through valve entry line 165 is directed by valve component 162 to static mixing component 150 through valve static mixer entry line 172. Thermally modified material exiting the static mixing component 150 via static mixer exit line 174 is directed by valve component 164 out of bypass diverter valve 120 through valve outlet line 167 toward the pelletization section 3.

Figure 6b illustrates the bypass mode for bypass diverter valve 120. As such, bypass valve line 166 is open, valve drain lines 168 and 170 remain closed, and valve static mixer entry line 172, connecting to inlet 152 of static mixing component 150, and static mixer exit line 174 are also both closed. As such, liquid or molten material or extrudate flows directly from valve entry line 165 through the bypass diverter valve 120, thus bypassing the static mixing component 150.

Figure 6c illustrates a first drain mode in which the bypass valve line 166 is closed, valve drain lines 168 and 170 are open, as is valve static mixer entry line 172 and static mixer exit line 174, so that the molten or liquid formulation in the static mixing component 150 can drain away. Similarly, valve entry line 165 and valve outlet line 167 are open so that liquid or molten formulation or extrudate upstream and/or downstream, respectively, from the bypass diverter valve 120 can also drain out through valve drain lines 168 and 170, respectively.

In an alternate drain mode shown in Figure 6d, the bypass valve line 166 is closed. Liquid or molten material in the static mixing component 150 proximal to valve drain line 168 as well as material upstream of the bypass diverter valve 120 drain through valve entry line 165 and exit via valve drain line 168. Material, molten or liquid, in the static mixing component 150 proximal to the static mixer exit line 174 drain through that line past valve component 164, out valve outlet line 167, and then pass through multipositional and multidirectional diverter valve 200 (from Figure 3).

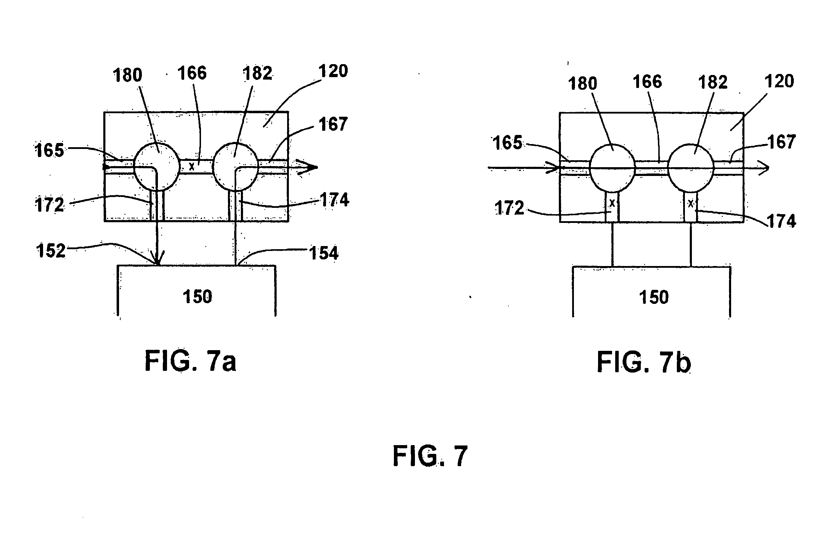

Figure 7 illustrates an alternate arrangement of the static mixing component 150 and the bypass diverter valve 120 in accordance with another preferred embodiment of the present invention. In this embodiment, the static mixing component 150 is vertically suspended below the bypass diverter valve 120 and the inlet 152 to, and exit 154 from, the static mixing component 150 are both mounted at the top of the static mixing component 150 and the base of the bypass diverter valve 120. In Figure 7a, the liquid or molten or extruded material enters valve 180 through valve inlet line 165. With bypass line 166 closed and valve static mixer inlet line 172 open, valve 180 directs the flow into the static mixing component 150. During steady state process conditions, material exiting the static mixing component 150 at outlet 154 enters the bypass diverter valve 120 through static mixer outlet line 174, and flow is directed by valve 182 out through valve outlet line 167.

In the bypass mode, illustrated in Figure 7b, the valve static mixer inlet line 172 and static mixer outlet line 174 are both closed, while the bypass line 166 is opened allowing the material to bypass the static mixing component 150 directly to valve outlet line 167.

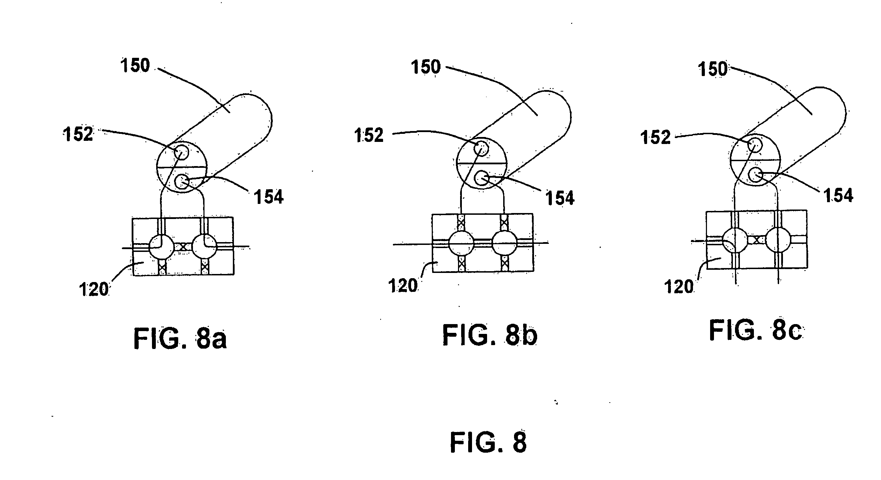

Figure 8 illustrates a third orientation of the static mixing component 150 with respect to the bypass diverter valve 120 in accordance with another preferred embodiment of the instant invention. More specifically, static mixing component 150 is positioned horizontally relative to bypass diverter valve 120. As shown, both the inlet 152 and outlet 154 are positioned at the end of the static mixing component 150 adjacent to the bypass diverter valve 120. The normal operating mode by which the melt, liquid, or extrudate is directed by the bypass diverter valve 120 is illustrated in Figure 8a. The bypass mode follows as Figure 8b illustrates, and the drain mode is shown in Figure 8c. In each operation, bypass diverting valve 120 operates in the same manner as described previously for valve components 162 and 164 and, therefore, will not be repeated here. The orientation of the static mixer 100 and bypass diverter valve 120 as herein described may be pendulous, horizontal, or vertically disposed or may be positionally inclined at any angle inclusive between the aforementioned positions.

The preferred design of the bypass diverter valve 120 in accordance with the present invention is of a single-body housing capable of being heated by jacket using steam or other heat transfer fluid or by electric heater cartridges. It has a plurality of inlet and outlet bores and connections as shown in Figures 5, 6, 7, and 8. The valve components 162 and 164 as well as valve components 180 and 182 are preferably in the form of movable bolts, valve components 162 and 180 being upstream of the static mixing component 150 and valve components 164 and 182 are downstream similarly. The bolts contain but are not limited to 2 bores exemplary of which are valve components 164, 180 and 182, or 3 bores of which valve component 162 is an example or more bores. The respective bores may be straight-through, form a 90° turn or in the shape of a "tee or T", and are specifically placed along the length of the bolt. Each of these bores is positionally placed by means of a fluid-controlled cylinder or equivalent device, and will adjustably maintain good alignment with the proper inlets and/or outlets of the bypass diverter valve 120, based on the desired position required by the operator running the process, as will be understood by those skilled in the art. The positioning of the fluid powered cylinders, and thus the bolts' position, can be controlled by manually operating a fluid flow valve or by automatic control such as by PLC, or both.

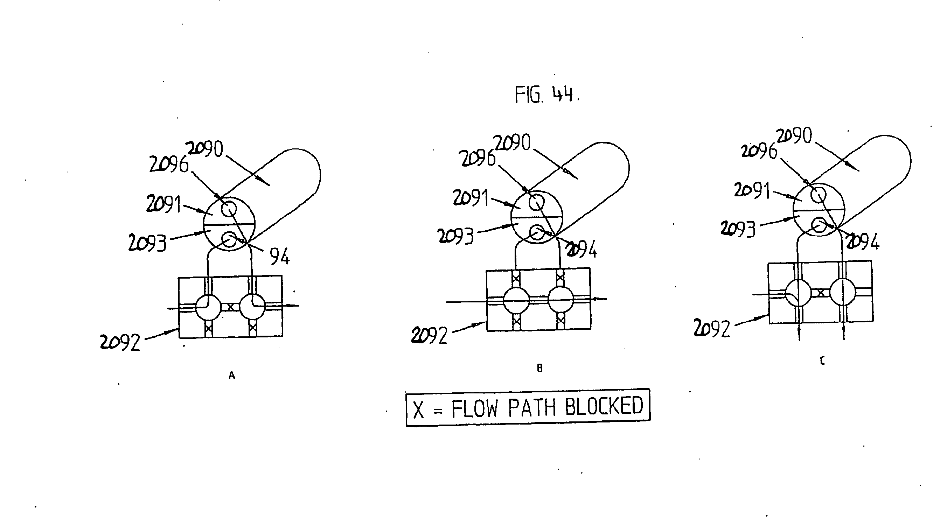

Figure 44 illustrates another embodiment of the melt cooler in which the orientation of the melt cooler with respect to the diverter valve is the same as is shown in Figure 8. More specifically, melt cooler 2090 is shown positioned horizontally with respect to the diverter valve generally designated by reference numeral 2092. As shown, both the inlet 2094 and outlet 2096 are positioned at the end of the melt cooler 2090 adjacent the diverter valve 2092. In this embodiment, the inlet 2094 is positioned in the bottom portion 2093 of melt cooler 2090 and the outlet 2096 is positioned in the top portion 2091 of melt cooler 2090. The normal operating mode by which the hot melt polymer is directed by the diverter valve 2092 through the melt cooler 2090 is shown in the left-hand illustration of Figure 44, marked "A." The bypass mode is shown in the center illustration of Figure 44, marked "B," and the drain mode is shown in the right-hand illustration, marked "C." In each mode of operation, the diverter valve 2092 operates in the same manner as described above and, therefore, the description of the operation is not repeated here.

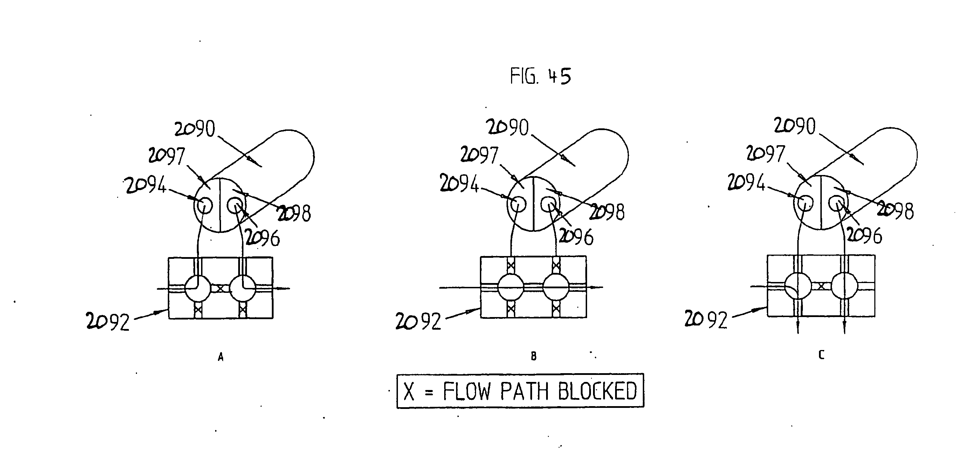

Figure 44 illustrates another embodiment of the invention in which the orientation of the melt cooler with respect to the diverter valve is the same as is shown in Figure 8. More specifically, melt cooler 2090 is shown positioned horizontally with respect to the diverter valve generally designated by reference numeral 2092. As shown, both the inlet 2094 and outlet 2096 are positioned at the end of the melt cooler 2090 adjacent the diverter valve 2092. In this embodiment, the inlet 2094 and the outlet 2096 are located in opposing portions 2097 and 2098 of the melt cooler in a side-by-side configuration. The normal operating mode by which the hot melt polymer is directed by the diverter valve 2092 through the melt cooler 90 is shown in the left-hand illustration of Figure 45, marked "A." The bypass mode is shown in the center illustration of Figure 45, marked "B," and the drain mode is shown in the right-hand illustration, marked "C." In each mode of operation, the diverter valve 2092 operates in the same manner as described above and, therefore, the description of the operation is not repeated here.

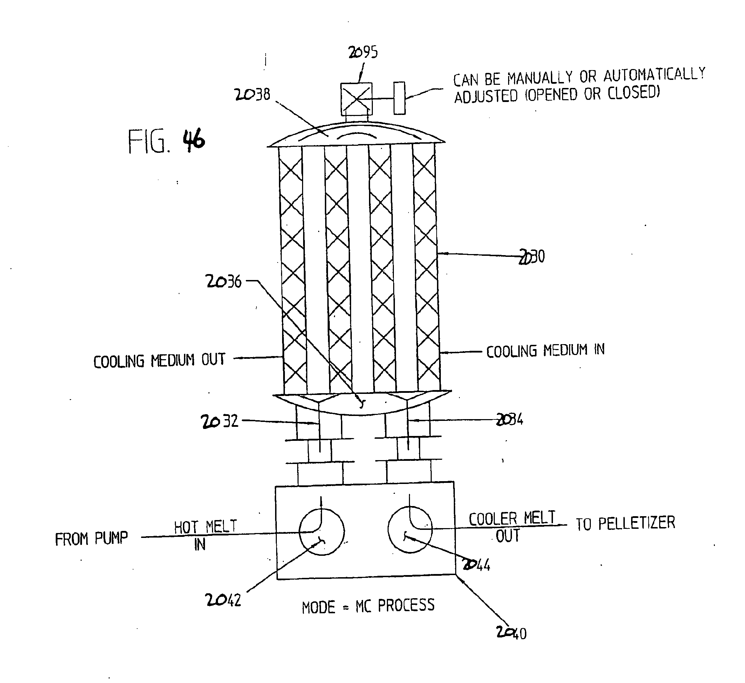

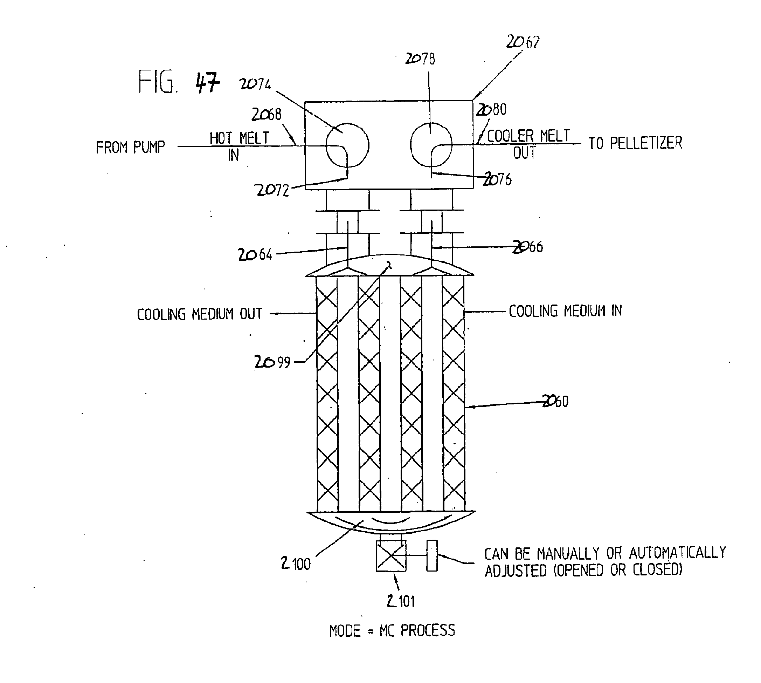

As shown in Figures 46 and 47, respectively, melt cooler 2030 and melt cooler 2060 can be configured to vent compressible fluids and to drain the polymeric melt and other fluids. Figure 46 illustrates a vent 2095 located on the top 2038 of melt cooler 2030. Figure 47 illustrates a vent and drain 2101 located on the bottom 2100 of melt cooler 2060.

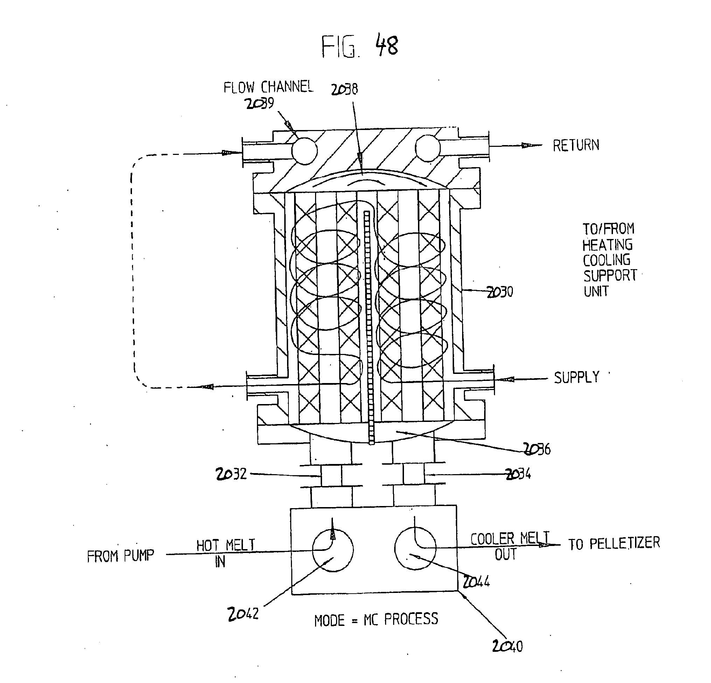

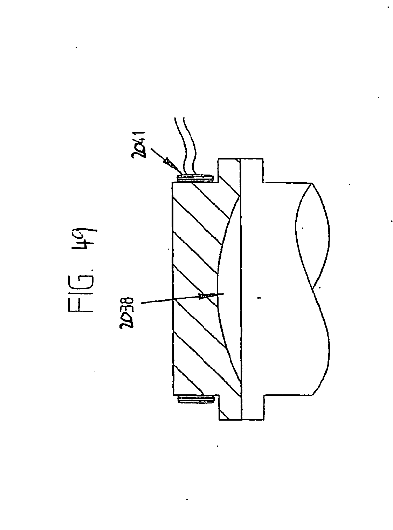

To provide for the desired melt flow regimes in the top 2038 of melt cooler 2030, the top 2038 can be heated. For example, as illustrated in Figure 48, the top 2038 can be heated or cooled by a thermal transfer fluid that passes through flow channel 2039. In another possible heating configuration as illustrated in Figure 49, the top 2038 can be heated electrically, such as for example, by an electric heater 2041. Controlling the temperature of the top 2038 ensures that the melt does not cool below a predetermined temperature as it turns through top 2038 from a first process side of the melt cooler to a second process side of the melt cooler.

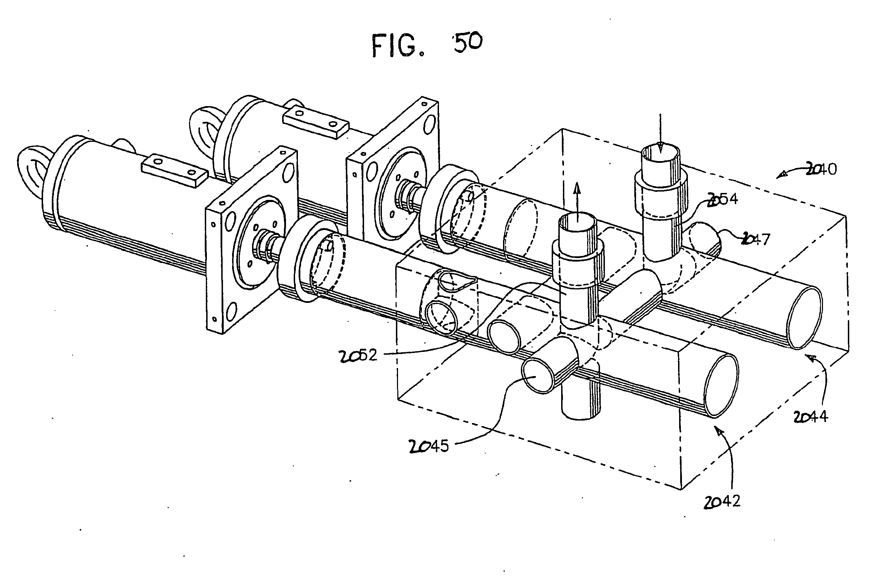

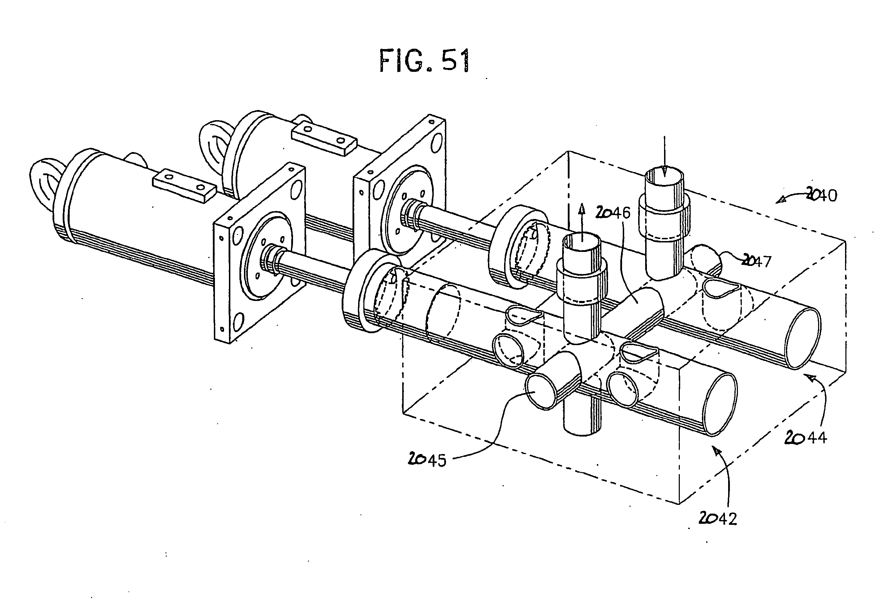

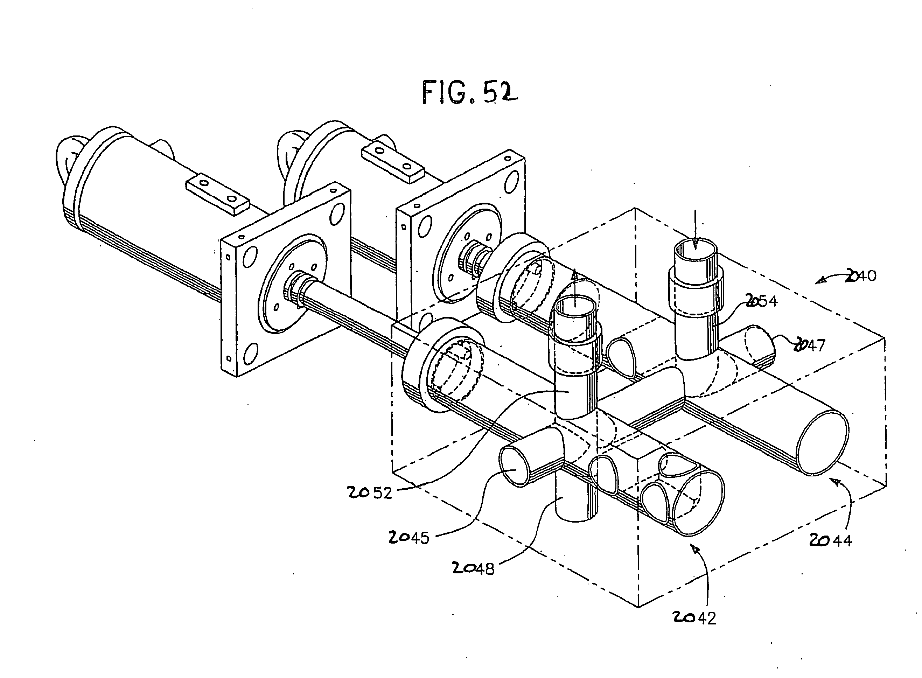

As indicated above, Figures 50, 51, and 52 provide detailed views of the diverter valve 2040 in, respectively, the cooling mode, the bypass mode, and the drain mode of operation. The diverter valve 2040 has a body housing capable of being heated by jacket using steam or other thermal transfer fluid or by electric heater cartridges. In a preferred embodiment, the first movable valve component 2042 is a hydraulically actuable bolt having three sets of flow channels therein, and the second movable valve component 2044 is a hydraulically actuable bolt having two sets of flow channels therein. In other possible embodiments of the diverter valve 2040, the bolts can include two or three sets of flow channels, either as a straight-through flow channel or as a 90° turn flow channel or as a tee-flow channel, specifically placed along the bolt length. Each of these flow channels is moved into the required position by a fluid controlled cylinder, and aligns with the corresponding required inlets and/or outlets of the diverter valve, based on the desired position required by the operator running the process, as will be understood by those skilled in the valve art. The positioning of the fluid powered cylinders, and thus the bolt position, can be controlled by manually operating a fluid flow valve or by automatic control such by a PLC, or by both.

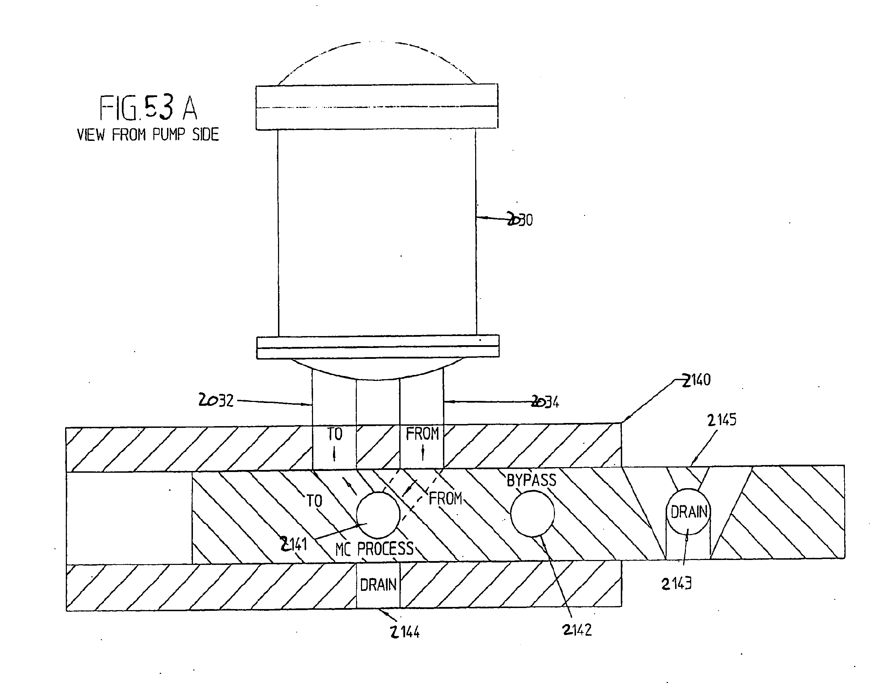

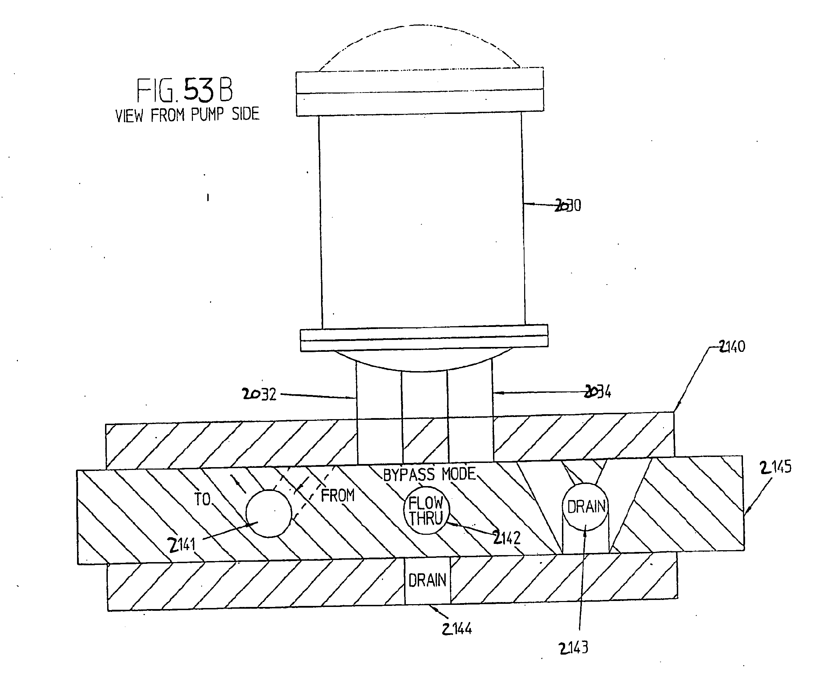

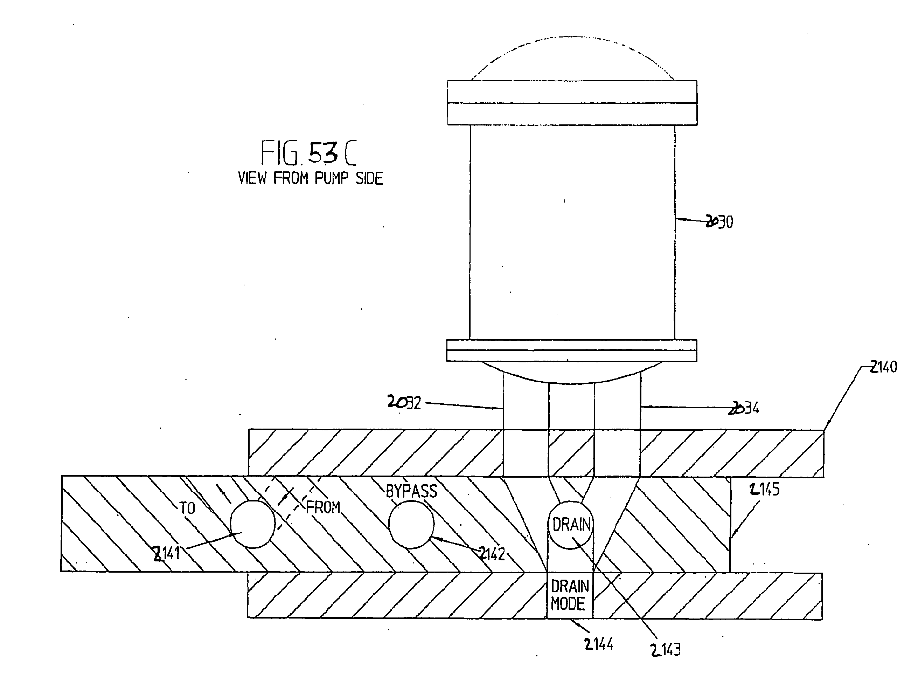

According to another embodiment of the invention, the melt cooler 2030 is oriented perpendicular to the melt flow path through a diverter valve 2140. As illustrated in Figures 53A, 53B, and 53C, the diverter valve 2140 has a single movable valve component 2145. Movable valve component 2145 is a hydraulically actuable bolt having three sets of flow channels therein, including a cooling flow channel 2141, a bypass flow channel 2142, and a drain flow channel 2143. The single bolt embodiment of the diverter valve provides a relatively short melt flow path and an economical valve construction.

Where employed, the bypass static mixer 100 as shown, for example, in Fig. 5 provides a heretofore unachievable level of control of the volatile ingredients over prior art devices. Use of the bypass static mixer 100 as a replacement of the static mixer 60 is well within the scope of the invention. The gains to be realized are in the greatly facilitated purging capacity of the bypass diverter valve. Orientation of valve 162 allows upstream flow to be diverted prior to entry into the static mixing component 150 as illustrated in Figure 6e where inlet line 165 and drain line 168 are the only open pathways as well as the bypass variations as herein described. Should the additional modification of the process liquid, melt, or extrudate not be necessary for a particular application, the bypass pathway is of minimal distance wherein temperature and pressurization can be maintained. Purging processes or purging materials can be passed through the components with sufficient facility without risk of unwanted expansion, loss of volatiles, and/or with reduced likelihood of hazardous flammability issues, and without significant inhibition of process flow. Minimization of downtime is readily achievable through elimination of component removal for routine maintenance or repair.

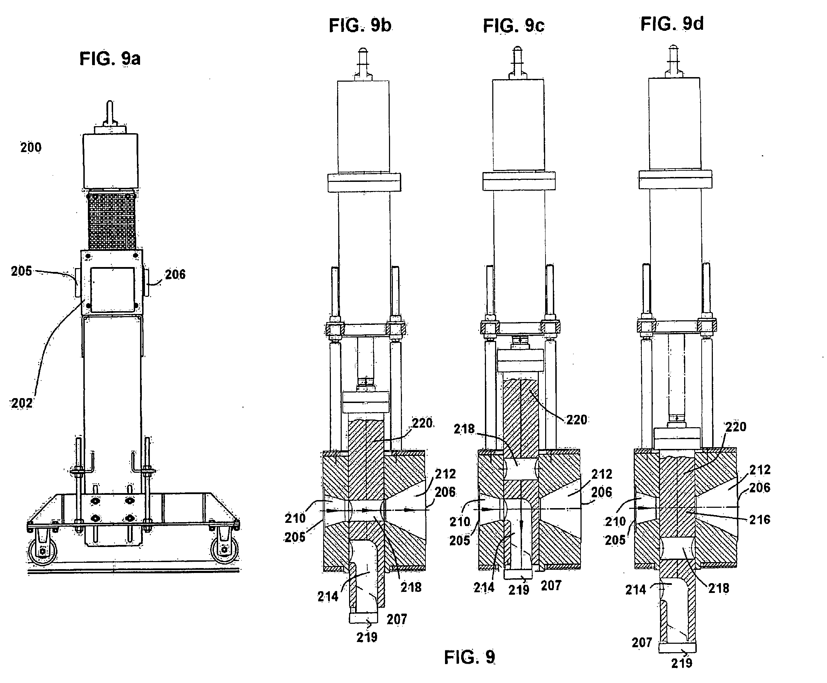

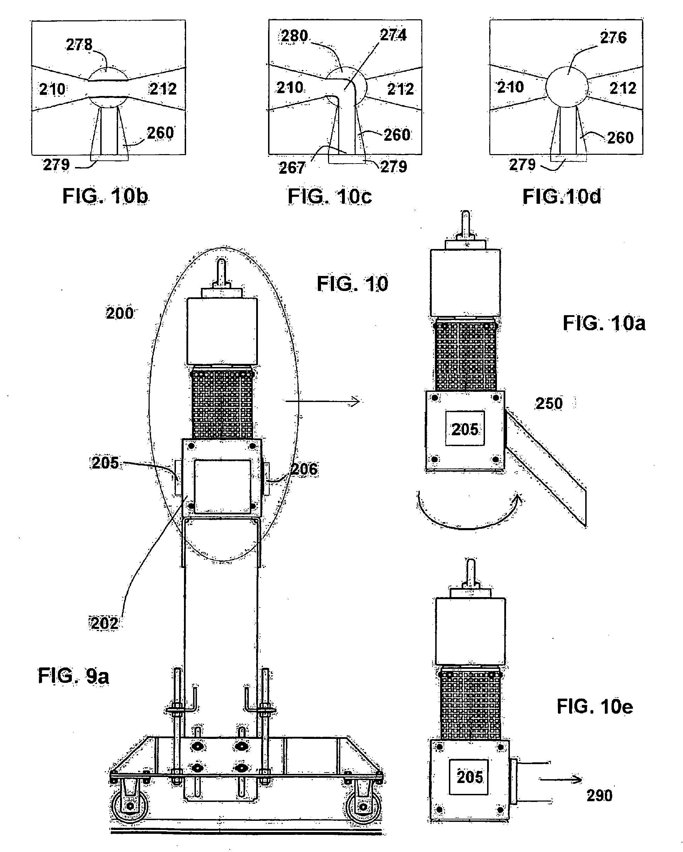

The component or components of the mixing section 2 are attachedly connected to the multidirectional diverter valve 200, as indicated in Figure 3 where the outlet 130 of the bypass static mixer 100 is attached to inlet 205. Figure 9a illustrates inlet 205 and outlet 206 attached to housing 202 of one embodiment of the multipositional and multidirectional diverter valve 200.

Two or more modes of flow are available through the multipositional and multidirectional diverter valve 200 as illustrated in Figures 9b and 9c, with the blocking position illustrated in Figure 9d. In the operational flow mode shown in Figure 9b, flow proceeds through inlet 205 into inlet tube 210 which is in open communication with flow pathway 218 through the movable diverter bolt 220. Flow progresses through flow pathway 218 which is in open communication with exit tube 212. One or more modal pathways may be so constructed in positionally differing arrangement so as to allow one or more than one flow pathway, not illustrated, to be available.

Similarly, in the divert flow mode illustrated in Figure 9c, flow proceeds through inlet 205 into inlet tube 210 which is in open communication with flow diversion pathway 214 through the movable diverter bolt 220. Flow progresses through flow diversion pathway 214 which is in open communication with diversion outlet 207 and restrictor plug 219. Molten, liquid, or extruded material may be diverted or removed from the process via this pathway.

To prevent loss of volatiles, unwanted or premature expansion, or undue exposure to the environment, Figure 9d illustrates a flow blocking position obtained by obstruction of the flow path between inlet tube 210 and outlet tube 212. The movable diverter bolt 220 is extended in length as compared to prior art designs to accommodate addition of a solid flow blocking portion 216. The movable diverter bolt 220 may be actuated electromechanically, hydraulically, pneumatically, or a combination thereof.

The flow blocking position 216 in operation alone or in coordination with aforementioned purging mechanisms through bypass diverter valve 120 allows start-up with or without volatiles by allowing diversion of flow at one or more points during the process. The flow blocking position 216 allows more facile exchange of downstream equipment by completely blocking the flow to that equipment thus disallowing the undesirable loss of potentially flammable volatiles, premature or unwanted expansion of molten or liquid material into atmospherically exposed flow areas during exchange processes which commonly result in delayed throughput. Purging at start-up or during operation may optionally occur at one or both valves in the bypass diverter valve 120 and/or in the divert flow mode described above. Pressure may be maintained on volatile-containing material by implementation of the flow blocking position herein described which facilitates the minimization of loss of those volatiles and reduces or eliminates the unwanted or premature expansion.

Figure 10 illustrates a second embodiment of the present invention in which the multidirectional diverter valve 200 is designed to allow side-discharge of the diverted flow. Figure 10a illustrates a 90° rotation of the multidirectional diverter valve 200 from Figure 9a to show the attachment of diverter chute 250 to the housing 202. Alternatively, the diverted flow may pass through diversion pipe 290 similarly attached to housing 202. As in Figure 9, three or more modes of flow are available through the multidirectional diverter valve 200 as illustrated in Figures 10b, 10c, and 10d. In the operational flow mode shown in Figure 10b, flow proceeds through inlet 205 into inlet tube 210 which is in open communication with flow pathway 278 through the movable diverter bolt 280. Flow progresses through flow pathway 278 which is in open communication with exit tube 212. One or more modal pathways may be so constructed in positionally differing arrangement so as to allow one or more than one flow pathway, not illustrated, to be available in accordance with prior art documentation.

Similarly, in the divert flow mode illustrated in Figure 10c, flow proceeds through inlet 205 into inlet tube 210 which is in open communication with flow diversion pathway 274 through the movable diverter bolt 280. Flow progresses through flow diversion pathway 274 which is in open communication with diversion outlet tube 260 and restrictor plug 279. Molten, liquid, or extruded material may be diverted or removed from the process via this pathway. The diverted flow passes through diversion outlet tube 260 to and through outlet 267 to which is attachably connected diverter chute 250 or diversion pipe 290 as further illustrated in Figures 10a and 10e, respectively.

To prevent loss of volatiles, unwanted or premature expansion, or undue exposure to the environment, Figure 10d illustrates the flow blocking position obtained by obstruction of the flow path between inlet tube 210 and outlet tube 212. The movable diverter bolt 280 is extended in length as compared to prior art designs to accommodate addition of a solid flow blocking portion 276. The movable diverter bolt 280 may be actuated electromechanically, hydraulically, pneumatically or any combination thereof.

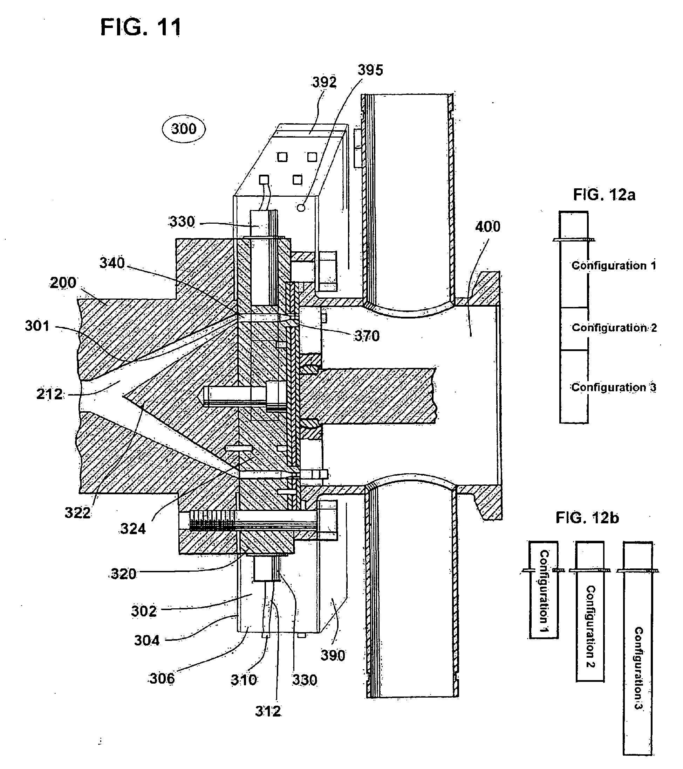

Referring again to Figure 3, multipositional and multidirectional diverter valve 200 is attached at outlet 206 to the pelletization section 3 at inlet 301 of the shielded die 300, the details of which are illustrated in Figures 11, 12, 13, and 14. The shielded die 300 is an embodiment of the current invention which provides a barrier of protection to prevent the heating elements from serving as a possible source of ignition from volatiles or spills, for example, and allows greater utility of heating element designs typically not available to hazardous or potentially hazardous environments.

Turning now to Figure 11, the shield 302 is composed of a baseplate 304 attached and/or sealed to either the body of the multipositional and multidirectional diverter valve 200 or to the die 320, itself, and to sides 306 of sufficient width to encompass the die 320. Geometry of the baseplate 304 and faceplate 390 described below may be rectangular, square, round or similar design wherein rectangular or square is preferred to facilitate ease of attachment and sealing of the sides 306 which must contour to that geometry for the necessary sealing. Contact points 310 are connected to sides 306 in sufficient number and geometry to connect each and all heating elements 330 within the die 320 through connecting wires 312. Connecting wires 312 must be suitably rated to provide appropriate current to the heating elements. The faceplate 390 of the shield 302 is attached and/or tightly sealed to the die 320 itself or to the body of the transport fluid box or waterbox 400 as is detailed below. With final assembly of the shield 302 or on closing the transport fluid box or waterbox over the pelletizer face, shield clamps 392 are tightly fitted across the side or sides 306 and overlap both the baseplate 304 and faceplate 390 to sufficiently seal the shield 302. Gasket material or other appropriate methods of sealing the shield 302 are well known to those skilled in the arts. The shield 302 is purged by inert gas, preferably air or nitrogen, through port 395 which may be positioned at and is not limited to any locus on the walls or sides of the shield. An optional outlet port, not shown, is well within the scope of the current invention and may be implemented as is deemed necessary by someone skilled in the art wherein required as necessitated by the sealing characteristics of the shield design implemented.

The die 320 in Figure 11 is a single-body style consisting of a nose cone 322 attached to die body 324 into which are fitted heating elements 330 and through which are bored multiple die holes 340 which vary in number and orientation pattern and may be 3.5 mm in diameter or smaller and preferably are 1.5 mm or smaller. The die holes 340 may be any combination of design including but not limited to increasing or decreasing taper or cylindrical or any combination thereof and segments may vary in length as necessitated by the process and materials. Preferably the die holes are placed singularly or collectively in groups or pods in one or more concentric rings as determined by the diameter of the outlet 206 of the multidirectional diverter valve 200 to which it is fittedly attached.

Heating elements 330 may be a cartridge or more preferably a coil type element and may be of sufficient length inside the die body 324 to remain outside the circumference of the die holes as illustrated in Figure 11 and detailed in Figures 12a and 12b as configuration 1 or may extend into and near the center of the die body without passing the center in length, configuration 2 in Figures 12a and 12b, or may extend past the center in length but not of sufficient length to contact the ring of die holes diametrically opposed, configuration 3. Positioning of the die holes will obviously vary as would be readily recognized by one skilled in the art to accommodate the appropriate configuration of the heating elements 330 and one or more lengths or designs of heating elements are optionally included within the scope of the present invention.

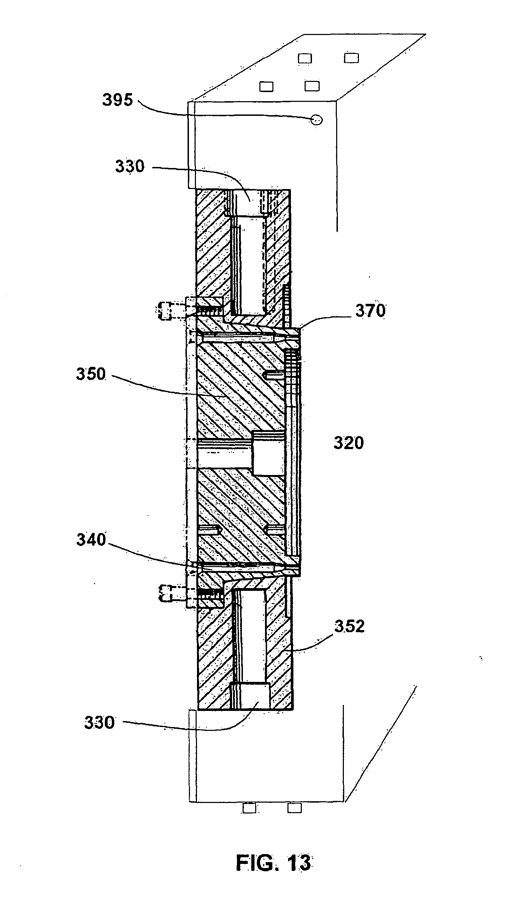

A preferred design of die 320 is illustrated in Figure 13 in which the die body is of a removable center or insert configuration. The heating elements 330 are of a cartridge or, more preferably, a coil configuration and are inserted into the outer die body component 352 whereby they are constrained in length to suitably fit within the confines of the outer die body component 352. The die holes 340 are contained within removable insert 350 and are variable in design, dimension, and placement as detailed in the foregoing discussion. The removable insert 350 is fixedly attached to outer die body component 352 by ordinary mechanisms.

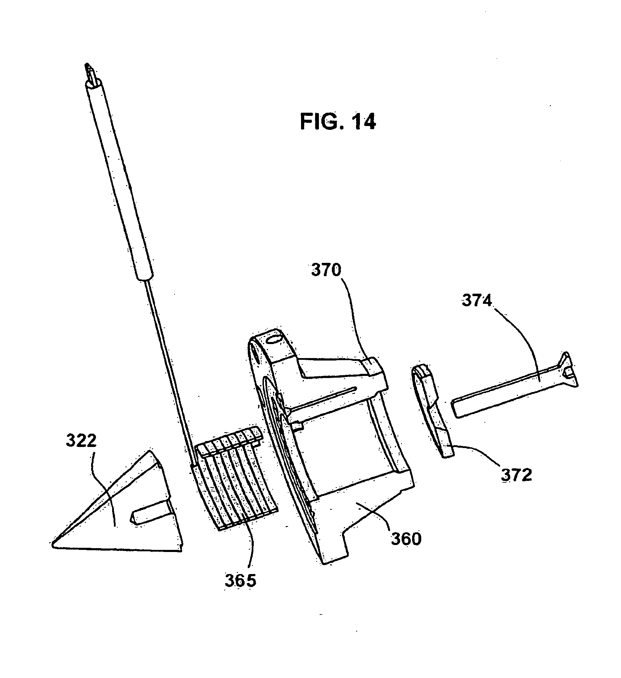

Figure 14 shows another preferred design of die 320 in which the die body is of a removable center or insert configuration with multiple heating zones for enhanced heating efficiency and more facile thermal transfer to the molten or liquid materials as they pass through the die holes 340. The outer die body component, not shown, is comparable to that described for Figure 13. The heated removable insert 360 of the more preferred design has an open center to which is fitted a heating element 365, preferably a coiled heating element, which may be thermally controlled in common with other heating elements in the outer die body component or more preferably, is autonomously regulated thermally thus allowing multizone heating capacity within the die 320.

The die 320 in all configurations (Figures 11, 12, 13, and 14) may contain an appropriate hardface 370 fixedly attached for a cutting surface as illustrated in Figure 14 which is preferably an abrasion resistant, wear resistant, and where required, is a corrosion resistant material and through which pass the die holes 340 for extrusion of the molten, liquid extrudate. Tungsten carbide, titanium carbide, ceramics or mixtures thereof, are common materials for hardface applications as is understood by those skilled in the art and are cited by way of example alone or in combination without intent to be limiting or otherwise restrictive within the scope of the present invention.

Surface treatments, surface finishing, polishing, or hard surfacing of die 320 are also within the scope of the present invention to provide additional protection to the die body exemplary of which is nickel phosphide, chrome plating, nitriding, or comparable treatment, physical or chemical, without intent of limitation or restriction on the extant invention.

The bolting mechanism for the nose cone 322 is illustrated in Figure 14 by way of example without limitation. A cover plate 372 is positionally attached by bolt 374 to the face of the die body 320 or removable insert 350 or heated removable insert 360, Figures 11, 13, and 14 respectively, which may be less than or at least equal to the height dimension of the hardface 370. Alternatively, gasket material or other materials for sealing of the cover plate 372 may be used as required.

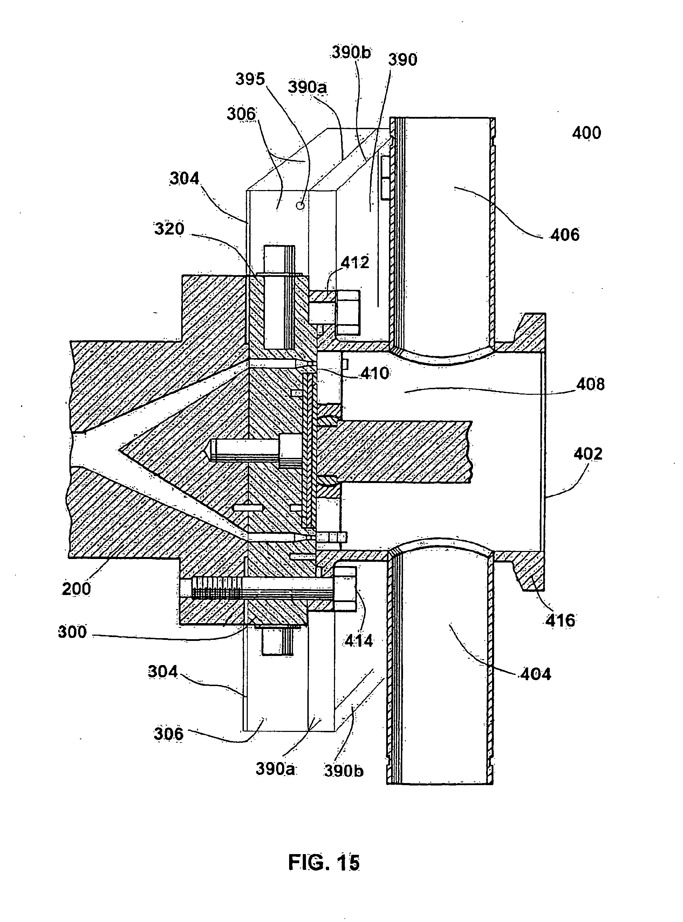

Referring once again to Figure 3, the shielded die 300 is fixedly attached to transport fluid box or waterbox 400 as detailed in Figures 15, 16, 17, and 18a,b,c. Figure 15 illustrates a configuration of a one-piece transport fluid box or waterbox 400 which comprises a housing 402 to which is connected inlet pipe 404 and outlet pipe 406 of similar diameter and geometry and diametrically opposed positionally and interconnectedly attached to a rectangular, square, or preferably cylindrical or other geometrically open cutting chamber 408 surrounding and of sufficient diameter to completely encompass the die face 410 (representationally equivalent to the surface of hardface 370 in Figures 11, 13, and 14). Housing 402 has mounting flange 412 through which a plurality of mounting bolts 414 pass to sealingly attach the transport fluid box or waterbox 400 and shielded die 300 to multidirectional diverter valve 200. Flange 416 on housing 402 allows attachment to the pelletizer 900 (see Figure 3) as is detailed below. Components which are free to rotate within the cutting chamber 408 are described later in this disclosure.

Figure 15 also illustrates baseplate 304 and sides 306 of the shielded die 300 as described above. The baseplate 304 may be attached and/or sealed to the multidirectional 1 diverter valve 200 or more preferably to die 320 as has been detailed. Faceplate 390 may be attached to transport fluid box or waterbox 400 utilizing mounting bolts 414 as indicated by position 390b or more preferably is sealingly attached to the die 320 as is indicated by position 390a. Appropriate sizing of the sides 306 must be positionally accommodating to allow proper fit and sealing.

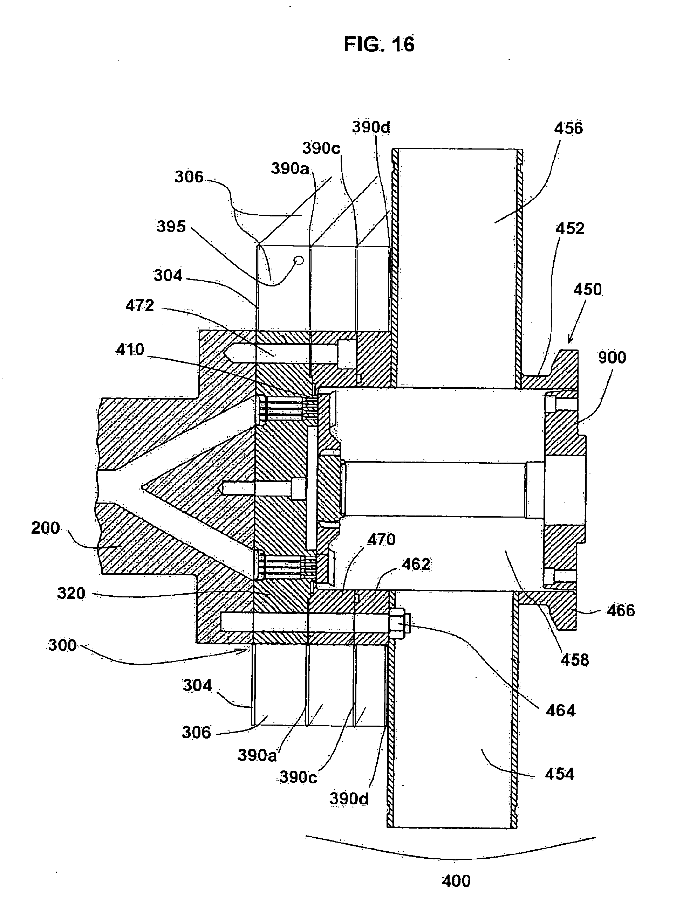

Similarly, Figure 16 illustrates a two-piece configuration of transport fluid box or waterbox 400 comprising a main body 450 with housing 452 to which is connected inlet pipe 454 and outlet pipe 456 of similar diameter and geometry and diametrically opposed positionally and interconnectedly attached to a rectangular, square, or preferably cylindrical or other geometrically open cutting chamber 458 surrounding and of sufficient diameter to completely encompass the die face 410 (representationally equivalent to the surface of hardface 370 in Figures 11, 13, and 14)comparably described above and as completely assembled as herein described. Housing 452 has mounting flange 462 through which a plurality of mounting bolts 464 pass. Mounting flange 462 sealingly attaches to adapter ring 470 of comparable diameter, both inside and outside dimensions, through which pass a plurality of countersink bolts 472. Mounting bolts 464 and countersink bolts 472 are preferably alternating positionally and sealingly attach the components of and thus the complete transport fluid box or waterbox 400 and shielded die 300 to multidirectional diverter valve 200. Flange 466 on housing 452 of the main body 450 allows attachment to the pelletizer 900 (see Figure 3) as is detailed below. Components which are free to rotate within the cutting chamber 408 in Fig. 15 and/or cutting chamber 458 in Fig. 16 are described later in this disclosure. Separate attachment of the adapter ring 470 to and through the die 320 allows the main body 450 to be removed for cleaning or maintenance while leaving die body 320 and therefore the shielded die 300 sealingly attached to multidirectional diverter valve 200.

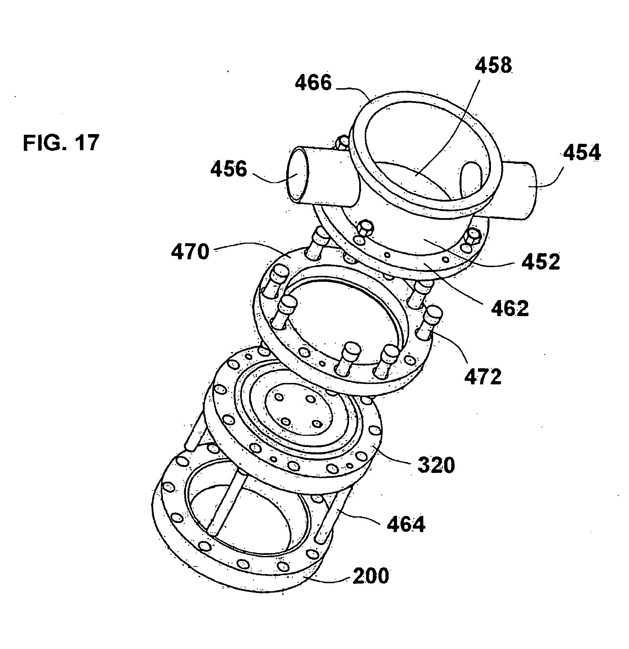

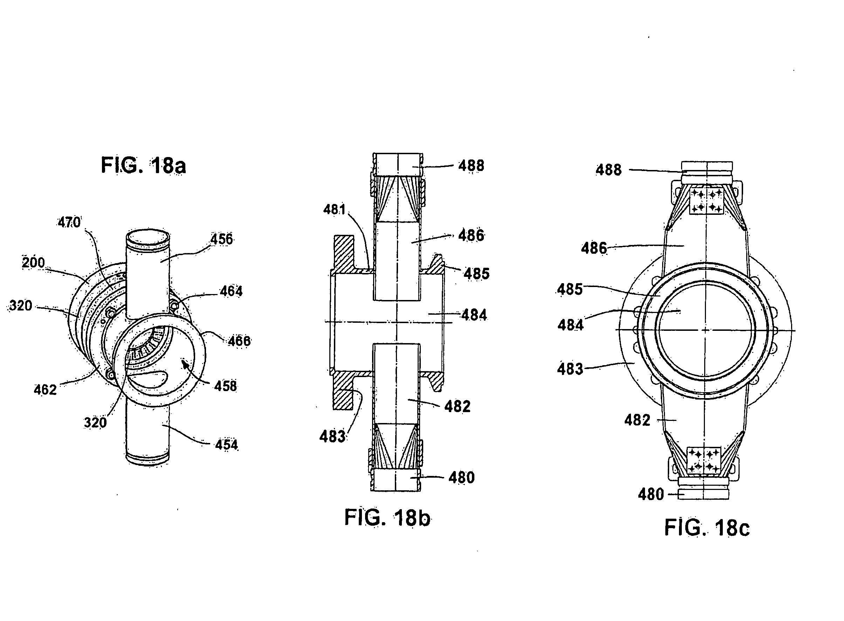

Figure 16 further illustrates baseplate 304 and sides 306 of the shielded die 300 as described above. The baseplate 304 may be attached and/or sealed to the multidirectional diverter valve 200 or more preferably to die 320 as has been detailed. Faceplate 390 may be attached to the main body 450 of transport fluid box or waterbox 400 utilizing mounting bolts 464 as indicated by position 390d or preferably is attached sealingly to the adapter ring as indicated by position 390c, and more preferably is sealingly attached to the die 320 as is indicated by position 390a. Appropriate sizing of the sides 306 must be positionally accommodating to allow proper fit and sealing as before. Attachments of the baseplate 304 and faceplate 390 may be by bolting through flanges on the respective plates to the outer surface of the components if not bolted in position as described above by mounting bolts 414 (Figure 15) or 464 (Figure 16). Positioning of baseplate 304 and faceplate 390 fixedly and sealingly attached to the die 320 provides the preferred protection from possible ignition or contact of the heating elements previously detailed to volatiles or possible outside contamination. All positions (390a, b, c, and d) offer a distinct advantage over prior art without benefit of the shielding and are inclusive within the embodiments of the current disclosure. An exploded view of the two-piece configuration of transport fluid box or waterbox 400 is illustrated in Figure 17 with a complete assembly illustrated in Figure 18. All numbers retained to be consistent wherein similar parts have similar numbers in Figures 16, 17, and 18a.

Figures 18b and 18c illustrate an alternative design for the transport fluid box or waterbox inlet and outlet in which inlet 480 is fixedly attached to a rectangular or square inlet tube 482 which taperingly increases along its length as it approaches the housing 481 to which it is attachedly connected and within which is cutting chamber 484. Similarly attached to housing 481 and diametrically opposed to inlet tube 482 is rectangular or square outlet tube 486 which taperingly decreases along its length to outlet 488 to which it is fixedly attached. Flange 483 and flange 485 in Figures 18b and 18c compare in design and purpose to flanges 462 and 466 in Figure 18a previously described.

Figures 18a, b, and c illustrate the preferred diametrically opposed inlets and outlets. Alternatively, the inlets, 454 and 480, and outlets, 456 and 488, may be located at any angle from 20° to the preferred 180° relative to and defined by the position of outlet to inlet and may be opposingly or staggeringly attached to housing 481 by way of example. Dimensions of the inlet and outlet may be the same or different and the inlet and outlet may be similar or different in design. Preferably the inlet and outlet so identified are of similar dimension and design, and are diametrically opposed.

Once again returning to the principle disclosure illustration in Figure 3, pelletizer 900 is shown in the non-operational open position. Attached to the pelletizer is flow guide 800, and cutter hub 600 with cutter blades 700. Upon operation of the equipment, pelletizer 900 is moved into position such that it can be fixedly attached to flange 416 of the one-piece configuration of transport fluid box or waterbox 400 or flange 466 on the main body 450 of the two-piece configuration of transport fluid box or waterbox 400 as detailed in Figures 15 and 16, respectively. Attachment is most preferably made but not limited to quick disconnects but may be through another mechanism. In the operating configuration, the cutter hub 600 and cutter blades 700 freely rotate within the cutting chamber 408 (Figure 15) or 458 (Figure 16). Details of all illustrated components are contained within the ensuing discussions.

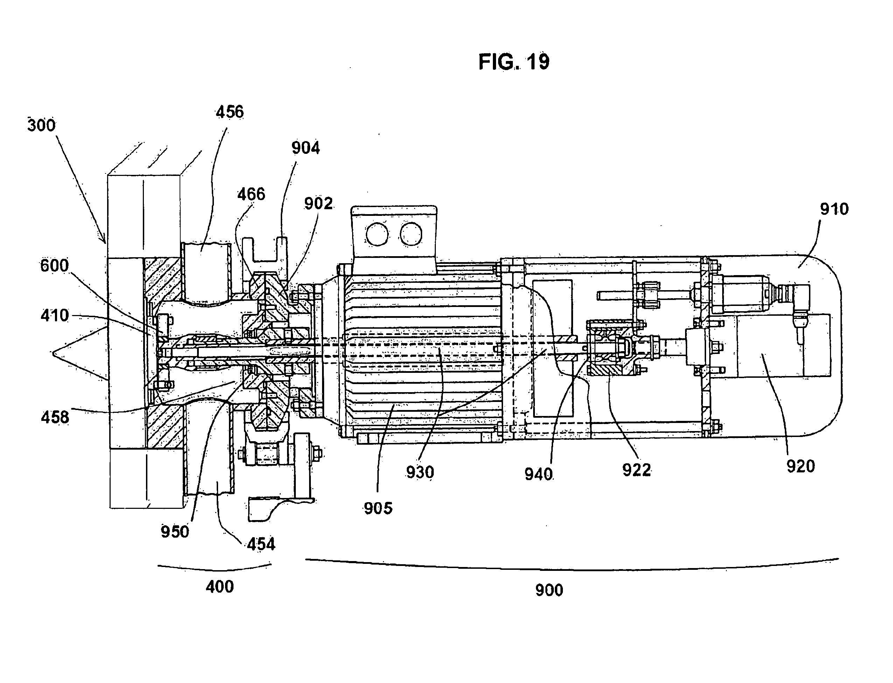

The pelletizer 900 of the instant invention is shown diagramatically in Figure 19 and may be adjustable positionally in terms of cutter hub 600 relationally to die face 410. Figure 19 represents the pelletizer 900 in operational position wherein it is sealingly attached via pelletizer flange 902 to transport fluid box or waterbox flange 466 tightly held by removable quick disconnect clamp 904, for example. Positional adjustment of the pelletizer may be achieved manually, spring-loaded, hydraulically, pneumatically, or electromechanically, or may be achieved by any combination of these mechanisms acting cumulatively in one direction or opposingly in counter-direction of forces applied to insure appropriateness of position as necessitated to achieve even wear, increased longevity, avoidance of undue extrusion leading to melt wrap around the cutter hub or the die face 410, and consistency of the pelletized product. A preferred design is of the hydraulic-pneumatic mechanism detailed in Figure 19 comprising a motor 905, housing 910, and containing hydraulic cylinder 920 engagedly attached to coupling 922. A rotor shaft 930 connects coupling 922 to the cutter hub 600 at the die face 410 and passes through thrust bearing 940 and sealing mechanism and preferably a mechanical sealing mechanism 950 in fluid contact with cutting chamber 458 of transport fluid box or waterbox 400. Inlet pipe 454 and outlet pipe 456 indicate flow direction of fluids, preferably water, into the cutting chamber 458, admixture of fluids and pellets in the cutting chamber 458, and subsequently, flow of the pellet slurry formed away from the cutter hub 600 as well as die face 410 and out of the cutting chamber 458.

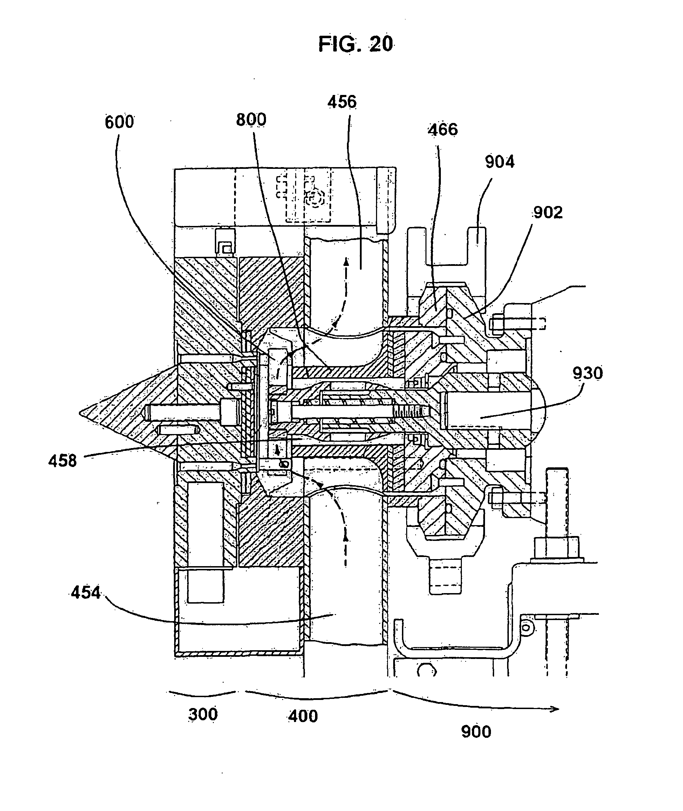

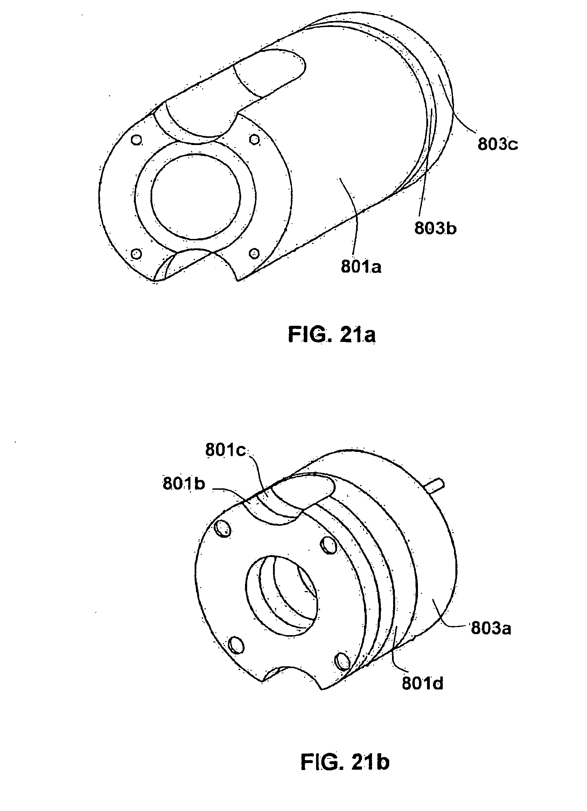

To increase fluid velocity through the cutting chamber 458, improve pellet quality, reduce freeze off, avoid wrapping of melt around die face 410, generate or increase head pressure, and improve pellet geometry, Figure 20 illustrates a preferred configuration in which flow guide 800 is positioned in the cutting chamber 458 effectively reducing the fluid volume of that region. The shielded die 300, transport fluid box or waterbox 400, and pelletizer 900, shown only partially, are positionally the same as in Figure 19. The hollow shaft rotor preferably is attached to cutter hub 600 in cutting chamber 458 with appropriate inlet pipe 454 and outlet pipe 456 as previously described. The pelletizer 900 is sealingly and removably attached by transport fluid box or waterbox 400 through use of quick disconnect clamp 904 on pelletizer flange 902 and transport fluid box or waterbox flange 466 as before. Figures 21a and b show two possible different configurations for flow guide 800 in which sections may be of similar or different segmental length having consistent outside diameter which is less than the diameter of cutting chamber 458 and may be varied in accordance with the requisite diminution of volume desired in that cutting chamber 458. Flow guide spacer sections 803 may be uniform circumferencially and diametrically as indicated singly by 803a, or plurally in 803b and 803c but may vary in segmental length and are not limited in plurality to two as shown. To direct and/or restrict flow, flow directing segments 801 singly in 801a or unlimited plurally in 801b, 801c, and 801d, for example, are modified by longitudinally extending grooves which are arcuate in transverse configuration with the deepest grooved section positioned proximal to the cutter hub 600. The preferred configuration of a series of segments is not intended to be limited as to number of segments and a single flow guide component of comparable geometry and functionality is well within the scope of the present invention.

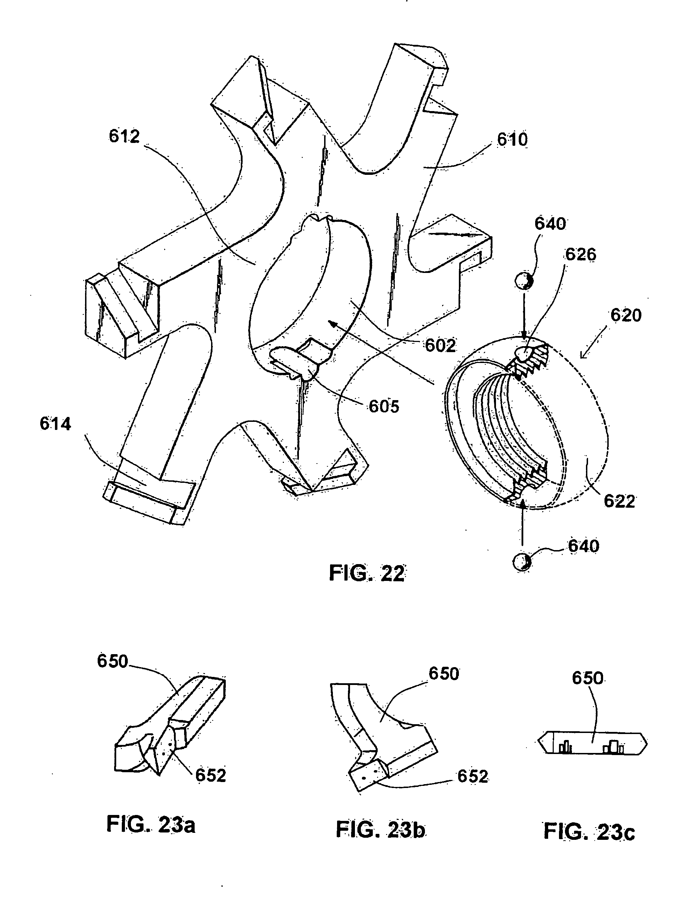

Continuing with Figure 19, cutter hub 600 is attached by screwing onto the threaded end of the rotor shaft 930 of pelletizer 900. The cutter hub 600 may be rigidly mounted to the rotor shaft 930 and may contain any number of cutter arms 610 in balanced proportion placed circumferentially about the cutter hub 600 as illustrated in Figure 22. Alternatively and preferably, the cutter hub 600 is flexibly attached to rotor shaft 930 using an adapter 620 in which the adapter 620 is attachedly and threadedly connected to rotor shaft 930. Adapter 620 has a partial spherical outer surface 622 matching a similar partial spherical inner surface bore 602 in the cutter hub 600. Diametrically opposed and recessed into the partial spherical inner surface bore 602 are longitudinal recesses 605 which extend to the edge of the cutter hub 600 and into which fit ball 640. Similarly diametrical recesses 626 for ball 640 are located on adapter 620 positionally oriented such that longitudinal recess 605 and diametrical recess 626 align to interlockingly affix balls 640 once adapter is inserted orthogonally into position and rotated to a position parallel to cutter hub 600. This allows free oscillation of the cutter hub 600 about the diametrically positioned balls 640 on fixedly attached adapter 620 to rotor shaft 930 which permits rotational self-alignment of the cutter hub 600.

The cutter arms 610 and body of cutter hub 612 may be square or preferably rectangular in cross-section as shown in Figure 22 or may be more streamlined to give an extended hexagonal cross-section as illustrated in Figure 23c. Figures 23a and 23b show segments of streamline cutter hub 650. Cutter blades (not shown) are fixedly attached by screw or similar mechanism at flattened angular groove 614, Figure 22, or at flattened angular notch 652, Figure 23a and b.

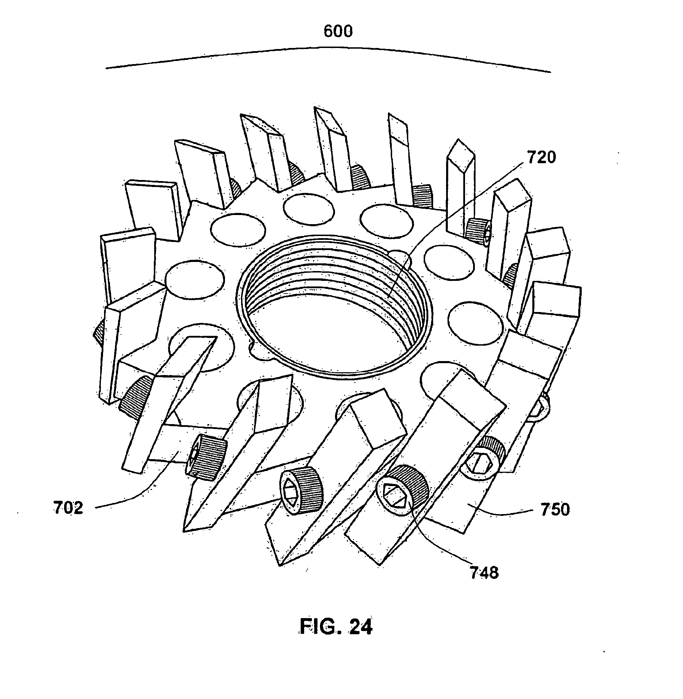

Alternatively, Figure 24 illustrates the preferred steep-angle cutter hub 600, in which cutter arms 610 as shown in Figure 22 are optionally replaced by cutter blade support 702 to which are attached cutter blade 750 preferably by screw 748 while other mechanisms are known to those skilled in the arts and are not limited as herein described. Adapter 720 allows self-aligning flexibility with threaded attachment to rotor shaft 930, Figure 19, as detailed previously. Other cutter hub designs which are functionally equivalent are within the scope of the present invention as are known to those skilled in the art.

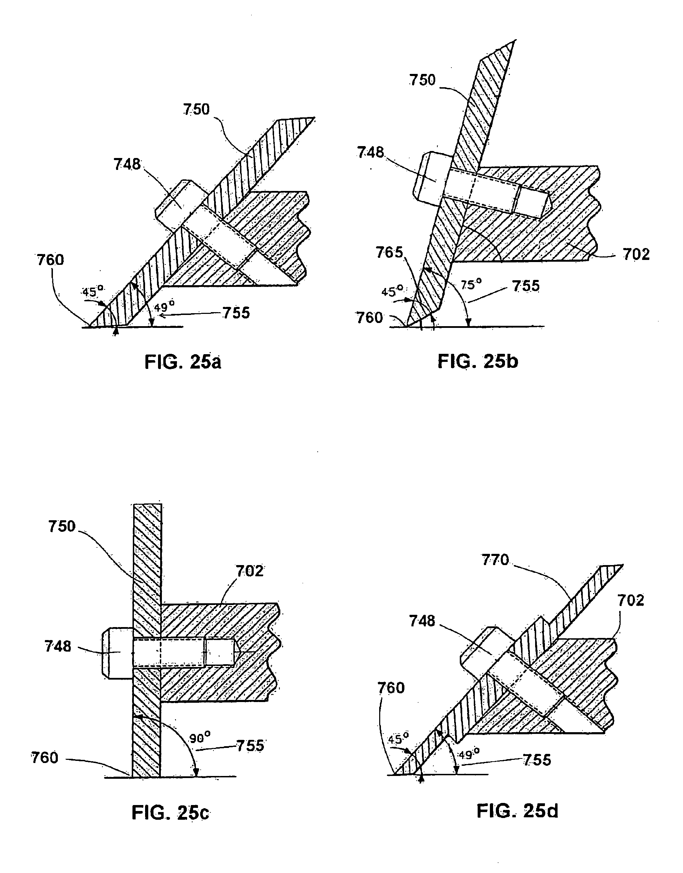

Figure 25 illustrates various angularly inclined positions and shapes of the cutter blades 750 which are readily disclosed in the prior art. The blade angle 755 may vary from 0° to 110° or greater, Figures 25a, b, and c, relative to die hard face 370, Figure 11, with a blade angle 755 of 60° to 79° preferred, Figure 25b, and a blade angle of 75° more preferred. The blade cutting edge 760 may be square, beveled, or angled as has been demonstrated by prior art and is preferably at a blade cutting angle 765 of 20° to 50° and more preferred at 45°. Alternatively, and most preferred, is a half-thickness blade 770 as illustrated in Figure 25d which may be similarly attached, similarly angled, and with comparable blade cutting angles and preferences as described above. Additionally blade designs, dimensionally and compositionally, may prove useful depending on other process parameters.

The cutter blade 750 compositionally includes but is not limited to tool steel, stainless steel, nickel and nickel alloys, metal-ceramic composites, ceramics, metal or metal carbide composites, carbides, vanadium hardened steel, suitably hardened plastic, or other comparably durable material and may be annealed, hardened, and/or surface treated as is well known to those skilled in the arts. Wear-resistance, corrosion resistance, durability, wear lifetime, chemical resistance, and abrasion resistance are some of the important concepts influencing the utility of a particular blade relative to the formulation being pelletized. Blade dimensions of length, width, and thickness as well as number of blades used relationally with cutter hub design are not limited within the scope of the present invention.

An important preferred embodiment of the present invention is maintenance of pressure on the pellets formed until such time has passed to allow the molten extrudate to be successfully pelletized, superficially cooled at least, and transported to the dewatering and/or drying stages without loss or with only minimal loss of volatiles and without unwanted or premature expansion due to those volatiles being released or generated by ingredients designed to release them. Figure 3 illustrates the relative position of the pressurized bypass 1000 which is an important component to facilitate the maintenance and/or enhancement of the pressurization process.

Water or comparable fluid for use in the bypass loop and pellet transportation is obtained from reservoir 1600 or other sources and is transported toward the transport fluid box or waterbox 400 through pump 500 which may be of any design and/or configuration to provide sufficient fluid flow into and through the optional heat exchanger 520 and transport pipe 530 to and into pressurized bypass 1000. The heat exchanger 520 similarly may be of any design of suitable capacity to maintain the temperature of the water or other transport fluid at a temperature appropriately suitable to maintain the temperature of the pellets being formed such that pellet geometry, throughput, and pellet quality are satisfactory without tailing, and where wrap-around of molten plastic on the cutting face, agglomeration of pellets, cavitation, and/or accumulation of pellets in the transport fluid box or waterbox are avoided. Temperatures and flow rates as well as composition of the transport fluid will vary with the material or formulation being processed. Transport fluid temperatures are maintained at least 20°C below the melting temperature of the polymer and preferably are maintained at a temperature of 30°C to 100°C below the melt temperature. Maintenance of the transport fluid temperature is more preferably maintained from 0°C to 100°C, still more preferred from 10°C to 70°C, and most preferably from 15°C to 60°C.

Additionally processing aids, flow modifiers, surface modifiers, coatings, surface treatments including antistats and various additives known to those skilled in the arts may be accommodated in the transport fluid. Piping, valving, and bypass components must be of suitable construction to withstand the temperature, chemical composition, abrasivity, corrosivity, and/or pressure requisite to the proper transport of the pellet-transport fluid mixture. The pressure required by the system is determined by the transport distance, vertical and horizontal, pressure level needed to suppress unwanted volatilization of components or premature expansion, pellet-transport fluid slurry flow through valving, coarse screening, and ancillary process and/or monitoring equipment. Pellet to transport fluid ratios must similarly be of varying proportions to be satisfactorily effective in eliminating or alleviating the above-mention complicating circumstances exemplary of which are pellet accumulation, flow blockage or obstruction, and agglomeration. Piping diameter and distances required are determined by the material throughput, thus the flow rate and pellet-transport fluid ratio, and time required to achieve an appropriate level of cooling and/or solidification of the pellets to avoid undesirable volatilization and/or premature expansion. Valving, gauges, or other processing and monitoring equipment must be of sufficient flow and pressure rating as well as of sufficient throughpass diameter to avoid undue blockage, obstruction or otherwise alter the process leading to additional and undesirable pressure generation or process occlusion. Transport fluid and additive composition must be compatible with the components of the pellet formulation and must not be readily absorbed into or adsorbed onto any of the components in that formulation. Any excess of the transport fluid and/or additives must be readily removable from the pellets by such methods as rinsing, aspiration, evaporation, dewatering, solvent removal, filtration, or any similar technique understood by those skilled in the arts.

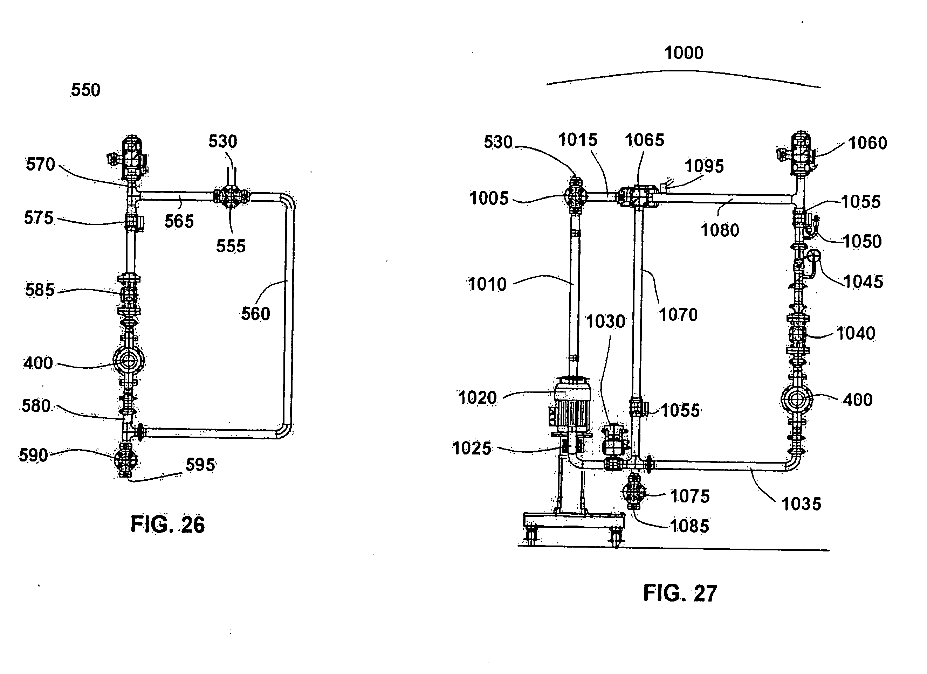

The standard transport fluid box waterbox bypass 550, as illustrated in Figure 26, allows the transport fluid, preferably water, from inlet pipe 530 to enter three-way valve 555 and be redirected into the bypass flow or toward the transport fluid box or waterbox 400. To bypass the transport fluid box or waterbox 400, the transport fluid is directed by three-way valve 555 into and through bypass pipe 565 into outlet pipe 570. To achieve this, blocking valve 575 is closed. Alternatively, to allow water to flow to and through the transport fluid box or waterbox 400 the three-way valve 555 is directed to allow flow into and through pipe 560 and into pipe 580 with blocking valve 575 open and with drain valve 590 closed. Water proceeds into and through transport fluid box or waterbox 400 and transports pellets into and through sight glass 585 through blocking valve 575 and into 570 for downstream processing as described below. To drain the system and allow cleaning or maintenance of the transport fluid box or waterbox 400 or die hardface 370 or to replace any of the shielded die 300 components, three-way valve 555 directs flow into and through pipe 565 and into pipe 570. With blocking valve 575 now closed and drain valve 590 open, the water remaining entrapped below 575, in components 585, 400, 560, and 580 drains out drain 595 for recycling or disposal.

Alternative to the process as described above and to maintain pressure essential to avoidance of loss of volatiles or premature expansion, the pressurized bypass 1000, as illustrated in Figure 3 and detailed in Figure 27, is a preferred embodiment of the present invention. Transport fluids, preferably water, are supplied from pipe 530 into inlet three-way valve 1005. Flow may be directed through pipe 1010 for pressurization or alternatively to pipe 1015.

Pressurization is achieved on flow through pipe 1010 by passing fluid into and through pressure pump 1020 to pipe 1025 and through exhaust valve 1030 with flow blocked by bypass three-way valve 1065. The pressurized fluid passes through pipe 1035 into and through transport fluid box or waterbox 400 and transports pellets through an appropriately pressure-rated sight glass 1040 and sequentially into and through pressure gauge 1045 and vacuum break check valve 1050 with blocking valve 1055 open allowing the pellet / fluid slurry to pass through outlet 1060 for further processing as described below. To achieve this, drain valve 1075 is closed.

Alternatively, standard flow is achieved analogous to the comparative process detailed above whereby inlet three-way valve 1005 directs flow through pipe 1015 into bypass three-way valve 1065 which directs the standard flow through pipe 1070 into and through pipe 1035 into transport fluid box or waterbox 400 and transports pellets through an appropriately pressure-rated sight glass 1040 and sequentially into and through pressure gauge 1045 and vacuum break check valve 1050 with blocking valve 1055 open allowing the pellet / fluid slurry to pass through outlet 1060 for further processing as described below. To achieve this, drain valve 1075 is closed and pressure pump 1020 is effectively bypassed.

Draining of the system occurs when inlet three-way valve 1005 directs flow into pipe 1015 and bypass three-way valve directs flow into pipe 1080 with blocking valve 1055 closed and drain valve 1075 open. Flow into the system is effectively drained through outlet 1085 for recycling or disposal.

The pressurization loop and transport fluid box or waterbox 400 are effectively bypassed by closing blocking valve 1055 and directing flow by inlet three-way valve 1005 into and through pipe 1015 and into bypass three-way valve 1065 which redirects flow through pipe 1080 and through outlet 1060. Control of switching mechanisms and power regulation and distribution are provided through one or more appropriately interfaceable electrical panels 1090, Figure 3, as is well understood by those skilled in the art. Air nozzle 1095 allows bursts of air to be introduced during cleaning cycles as described below which effectively remove pellets which may become lodged in pipe 1080 during operation in which flow proceeds through the transport fluid box or waterbox 400 and the pellet / fluid slurry produced is propagated through the appropriate apparatus to outlet 1060 as detailed in the foregoing discussion.

Pressurized flow, greater than atmospheric pressure, preferably five bar or greater, and most preferably 10 bar, passes from outlet 1060 into pipe 1097 which must be capable of maintaining the requisite pressure and must be of length and diameter appropriate to transport the pellet/fluid slurry mixture at throughput rates, temperature, and volumes necessary for the process. The length of pipe and composition must be such that maintenance of temperature or cooling as required by the process is achieved.

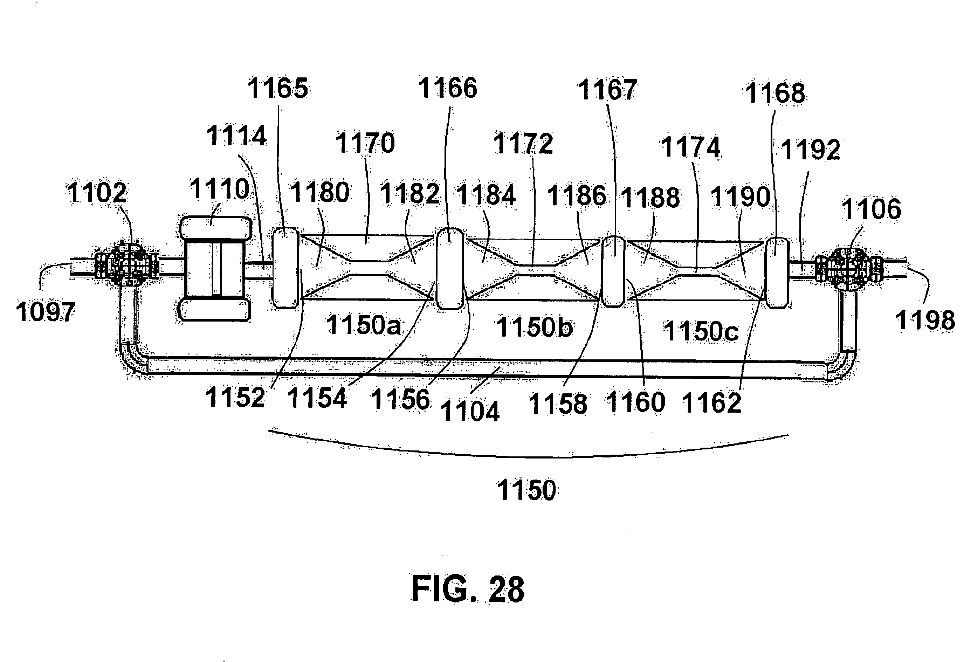

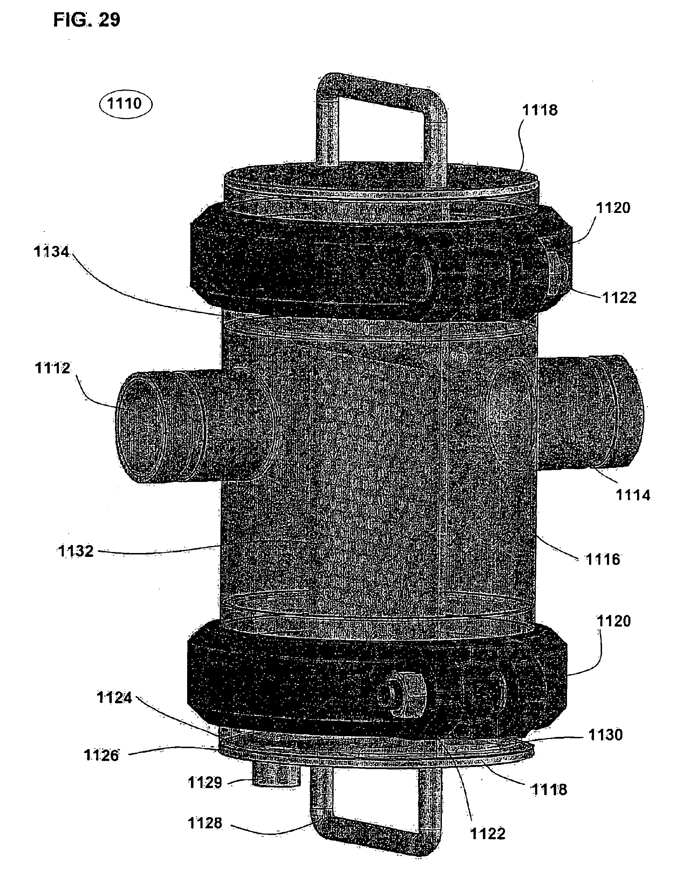

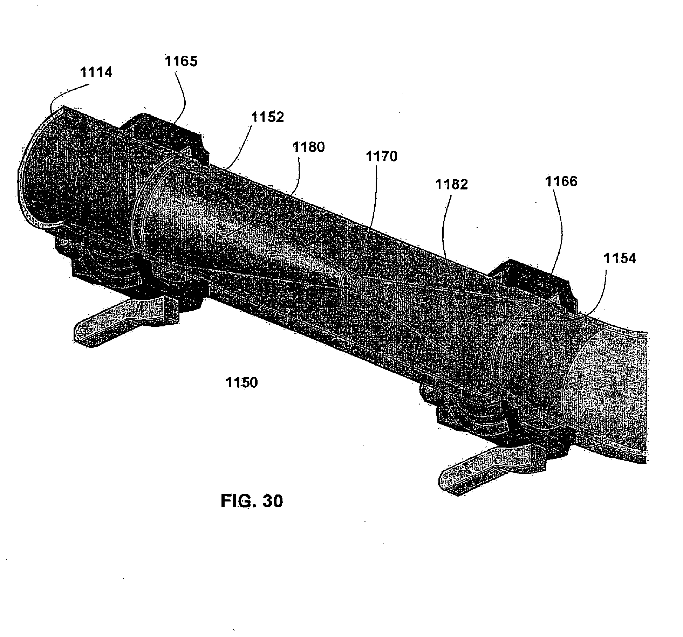

According to a preferred embodiment of the present invention, the pipe 1097 is of sufficient length to require one or more pressure supplement devices 1100 as shown positionally in Figure 3. Pipe 1097 is connected to optional inlet three-way valve 1102 as illustrated in Figure 28 which directs the pellet / fluid slurry through bypass line 1104 into outlet three-way valve 1106 and into pipe 1198 effectively serving as a bypass to the pressure supplement device components. Alternatively, the pellet / fluid slurry is directed by inlet three-way valve 1102 into and through basket filter 1110 (see Figure 29) into one or more conical devices 1150 (illustrated in Figure 30 and detailed below), preferably two or more in series, in which the flow channel is alternately reduced and enlarged diametrically to expedite the desired level of pressurized flow through the system, a phenomenon described by the well-known Bernoulli effect to those skilled in the art. Flow out of the conical devices passes into and through the outlet three-way valve 1106 and into pipe 1198.

Referring now to Figure 29, basket filter 1110 has fluid inlet pipe 1112 which is diametrically opposed to fluid outlet pipe 1114 attached to cylindrical housing 1116 which is of a height and diameter appropriate to accommodate the throughput rate and volume required by the process. The housing 1116 has a top and bottom endcap 1118 of comparable diameter which are sealingly attached by clamps 1120 and tightened securely by bolt 1122 or equivalent mechanism. Gaskets and/or other sealing materials may be used to prevent loss of fluid or diminution of pressure as is understood by those skilled in the art.

Endcap 1118 is composed of a cylindrical pipe section 1124 of equivalent diameter to housing 1116 which is sufficiently wide to be attached by clamp 1120. Fixedly attached to cylindrical pipe 1124 is cover plate 1126, of equivalent outer diameter, and handle 1128. To the opposite face of cover plate 1126 are fixedly attached flanges 1130 which are spaced at a distance apart sufficient to allow basket screen 1132 to insert and be held tightly in place and drain 1129.

The basket screen 1132 is equivalent in length to the distance between the top and bottom cover plates 1126 and of equivalent width to the inner diameter of cylindrical housing 1116. The thickness must be sufficient to withstand the flow velocity and pressure of the process and is preferably 18 Gauge or 1,19 mm (0.0468"). The screen may be woven, punched, perforated, or pierced and is preferably a perforated plate which may be steel, stainless steel, nickel or nickel alloy, plastic or other appropriate durable material and is most preferably a perforated stainless steel plate in which the maximum perforation is of comparable diameter to the smallest diameter of the conical device or devices 1150 as described below. Fixedly attached to cylindrical housing 1116 are two, and preferably four, rollers 1134 which are placed such that the basket screen 1132 fits tightly between them and is free to be removed for cleaning. Rollers 1134 are of sufficient length to traverse the diameter of the cylindrical housing 1116 at the attachment points and are positioned at a distance from the cover plate 1126 at a distance greater than is the length of cylindrical pipe 1124. Rollers preferably are comparably positioned at equivalent distance from both the top and bottom cover plates 1126.

The conical, biconical, or hyperboloid device or devices, and preferably conical device or devices 1150 consist of a cylinder with inlet 1152 diametrically of common dimension as fluid outlet pipe 1114 as shown in Figure 30. The taper 1180 may begin at the inlet 1152 or alternatively may begin at a distance appropriate to allow appropriate pressure and decreases diametrically to that of the cylindrical constriction 1170. This cylindrical constriction 1170 is of diameter and length sufficient to create an appropriate pressure for the process and connects with taper 1182 which increases diametrically for an appropriate length to outlet 1154 which may be the same or different in diameter than inlet 1152. Where only one conical device 1150 is utilized outlet 1154 is attached to outlet pipe 1192 which is equivalent in diameter to outlet 1154.

Preferably two or more conical devices are used, and most preferably three are used in series as illustrated in Figure 28, in which the diameters of the cylindrical constrictions 1170, 1172, and 1174 may be of the same or different diameter and/or length as necessitated by process conditions. The length of cylindrical constrictions 1170, 1172, and 1174 may be from zero inches, essentially a point, to any length less than that of the entire length of the conical device 1150. The lengths of each conical device 1150 may be the same or different, and they are separately identified as 1150a, 1150b, and 1150c in Figure 30 for clarification of illustration. Similarly, the inlets 1152, 1156, and 1160 may be equivalent or different diameters and lengths as can be outlets 1154, 1158, and 1162. Tapers 1180, 1184, and 1188 may be the same or different in length and degree of taper to cylindrical constrictions 1170, 1172, and 1174, respectively. Tapers 1182, 1186, and 1190 increase in diameter from cylindrical constrictions 1170, 1172, and 1174, respectively and increase diametrically to that of outlet 1154, 1158, and 1162, respectively with lengths and degree of taper appropriate to satisfy the process requirements.

Preferably conical devices 1150a, 1150b, and 1150c are identical in overall length in which cylindrical constriction 1170 is diametrically larger than cylindrical constriction 1172 which is larger than cylindrical constriction 1174 whose lengths may vary as necessitated for optimization of pressurization and flow. Inlet 1152 must be comparable to outlet pipe 1114 diametrically. Similarly, outlet 1154 and inlet 1156 are diametrically equivalent as are outlet 1158 and inlet 1160, outlet 1162 and outlet pipe 1192. All conical devices 1150 are clamped in place and preferably are clamped by quick disconnects as illustrated in Figure 28 for clamps 1165, 1166, 1167, and 1168 which are sized appropriately for the diameters of the respective conical device 1150 or conical devices 1150a, 1150b, and 1150c which may be dissimilar or are preferably equivalent diametrically.

Outlet pipe 1192 connects to outlet three-way valve 1106 where the aforementioned bypass is utilized or directly to pipe 1198 for downstream processing in its absence. Pipe 1198 must be of suitable length and diameter to accommodate the volume flow rate and throughput for the process and to allow cooling of the pellets to achieve a sufficient level of outer shell formation to complete solidification to allow downstream dewatering, drying, and post-processing with minimal or no loss of volatiles and/or without unwanted or premature expansion.

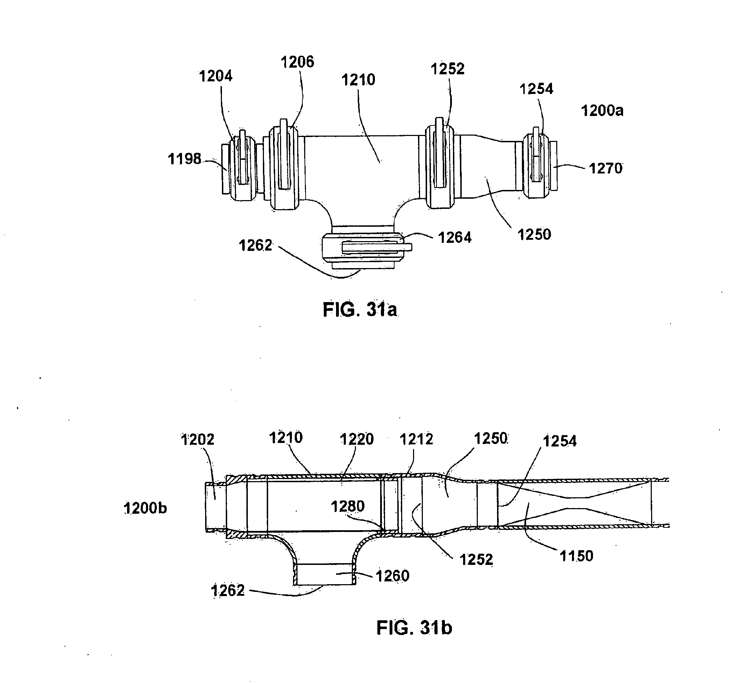

Once the pellet is sufficiently solidified for processing, it is transported via pipe 1198 optionally to and through a pressurized dewaterer 1200 or directly to and through an agglomerate catcher/dewatering unit 1300 and into the drying unit 1400 as illustrated in Figure 3. The pressurized dewaterer 1200 is attachedly connected to pipe 1198 at inlet 1202 as shown in Figure 31. Inlet 1202 is fittingly attached to housing 1210 which are clamped in position preferably by quick disconnect clamps 1204 and 1206 respectively. The housing 1210 is connected at outlet 1212 to reducing pipe 1250 longitudinally and distally positioned relative to inlet 1202 and clamped as before, preferably with quick disconnect clamp 1252. Dewatering outlet 1260 is orthogonally positioned relative to inlet 1202 and is attachedly connected to dewatering pipe 1262 by clamp 1264, preferably quick disconnects as above.

Within housing 1210, preferably larger in diameter than pipe 1198, is cylindrical screen element 1220 which is of at least comparable inner diameter as are inlet 1202 and/or outlet 1212 and preferably is slightly larger diametrically than are inlet 1202 and/or outlet 1212. Dewatering outlet may be equivalent or different in diameter as compared with inlet 1202 and/or outlet 1212 and is preferably larger in diameter. Inlet 1202 and outlet 1212 may be equivalent or different in inner diameter, and are preferably equivalent allowing the screen element 1220 to remain cylindrical across its length which is equivalent to the distance across the pressurized dewaterer 1200 between inlet 1202 and outlet 1212. Screen element 1220 is fixedly attached at the inlet 1202 and outlet 1212 as is exemplified in Figure 31a.

Alternatively, as shown diagrammatically in Figure 31b, inlet 1202 and/or outlet 1212 may larger in diameter than is pipe 1198 and may be tapered or angularly reduced in diameter sufficient to be equivalent to the diameter of the screen such that a lip 1280 is formed against which the screen member 1220 is tightly and fittingly positioned. The lip 1280 as shown in Figure 31b is preferably at outlet 1212 and allows the screen to be held in place by the fluid pressure against it. This preferred design allows the screen element to be replaced periodically as necessary.

Cylindrical screen element 1220 may be perforated, woven, pierced, or punched and may be in one or more layers fixedly attached in which the screen openings are sufficiently small to prevent loss of pellets in the dewatering process. Successive layers may be the same or different structurally and compositionally and may be similar or different in terms of screen size opening. The screen may be steel, stainless steel, nickel or nickel alloy, plastic, or any durable composition as is known to someone skilled in the art. Similarly the thickness or gauge of the metal must be sufficient to withstand the flow velocity, vibration, and throughput, and flexible enough to be formed into cylindrical contour without any leakage of pellets under the pressure constraint of the processing.

Attached at outlet 1212 is reducing pipe 1250 which may be the same or different diameter of inlet 1202. More specifically, reducing inlet 1252 must fittingly attach to outlet 1212 and be of comparable diameter for clamping as described above. Reducing outlet 1254 must be comparable in inner diameter to that of inlet 1202 and is preferably smaller in diameter to maintain pressure within the pressurized dewater 1200. Alternatively, outlet 1212 or reducing outlet 1254 may be attached to a similar conical device or series of conical devices 1150 previously described, not shown in Figure 3 or in Figures 31a and/or 31b. Pipe 1270 is attached to reducing outlet 1254 or to the outlet from the conical device or devices 1150.

The pressurized dewater 1200 is designed to accommodate pressurized flow of the pellet / fluid slurry into and through it which has sufficiently cooled to avoid loss of volatiles and unwanted or premature expansion. The flow is maintained at least under comparable pressure by the reducing outlet 1254 and/or under comparable or greater pressure optionally by addition of one or more conical devices 1150. The pressure forces significant reduction of fluid, or "dewatering", used generically as described herein, to concentrate the pellet / fluid slurry for further downstream processing.

Dewatering results in removal of transport fluid through dewatering outlet 1260 into pipe 1262 with the rate of dewatering controlled by valve 1280 (Figure 3). The fluid removed may be recycled to reservoir 1600 or elsewhere for purification or modification or it may be removed from the process or discarded as appropriate. The concentrated pellet/fluid slurry is transported through pipe 1270 to undergo additional dewatering, drying, and downstream processing as required. Figure 3 diagrammatically illustrates the agglomerate catcher/dewatering device 1300, the dryer 1400, and downstream processes 2000.

The dryer 1400 may be any apparatus for achieving a controlled level of moisture for materials which may be flake, globular, spherical, cylindrical, or any geometric shape. It may be achieved but is not limited by filtration, centrifugal drying, forced or heated air convection, or a fluidized bed and is preferred to be a centrifugal dryer, and is most preferred to be a self-cleaning centrifugal dryer 1400.

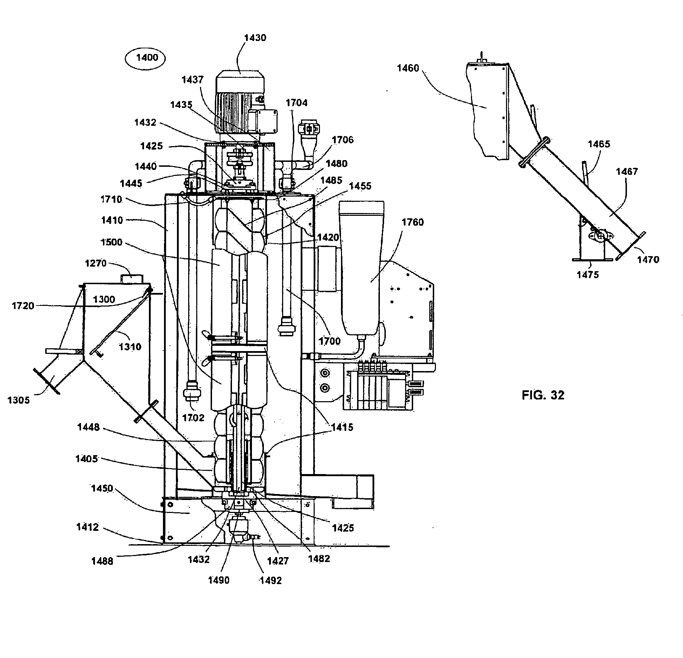

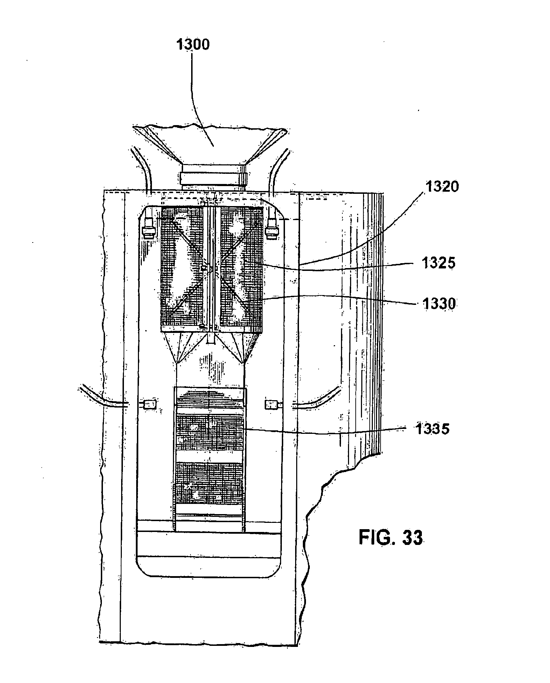

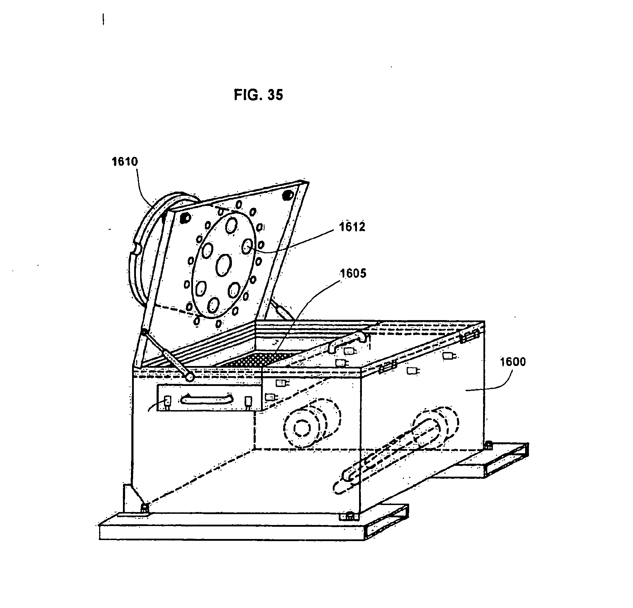

Turning now to Figure 32, the pipe 1270 discharges the pellets and fluid slurry or concentrated slurry into an agglomerate catcher 1300 which catches, removes and discharges pellet agglomerates through a discharge chute 1305. The agglomerate catcher 1300 includes an angled round bar grid, perforated plate or screen 1310 which permits passage of fluid and pellets but collects adhered, clumped, or otherwise agglomerated pellets and directs them toward the discharge chute 1305. The pellets and fluid slurry then optionally pass into a dewaterer 1320, Figures 32 with additional detail in Figure 33, which includes at least one vertical or horizontal dewatering foraminous membrane screen 1325 containing one or more baffles 1330 and/or an inclined foraminous membrane screen 1335 that enables fluid to pass downwardly into a fines removal screen 1605 and therethrough to the water reservoir 1600 (Figures 3 and 35). The pellets which still retain moisture on their surfaces are discharged from dewaterer 1320 into the lower end of the self-cleaning centrifugal dryer 1400 at a slurry inlet 1405, Figure 32.

As illustrated in Figure 32, the self-cleaning centrifugal pellet dryer 1400 includes but is not limited to a generally cylindrical housing 1410 having a vertically oriented generally cylindrical screen 1500 mounted on a cylindrical screen support 1415 at the base of the screen, and a cylindrical screen support 1420 at the top of the screen. The screen 1500 is thus positioned concentrically within the housing 1410 in radially spaced relation from the inside wall of the housing.

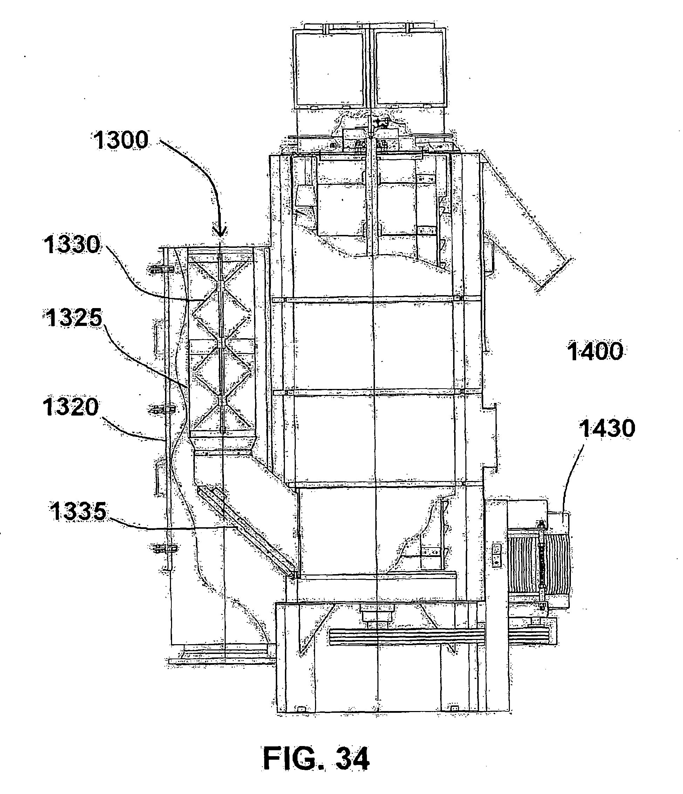

A vertical rotor 1425 is mounted for rotation within the screen 1500 and is rotatably driven by a motor 1430 which may be mounted at and/or connected to the base of the dryer (Figure 34) or at the top of the dryer and is preferably mounted atop the upper end of the dryer, Figure 32. The motor 1430 is connected to the rotor 1425 by a drive connection 1435 and through a bearing 1440 connected with the upper end of the housing. The connection 1445 and bearing 1440 support the rotor 1425 and guide the rotational movement of the upper end of the rotor. The slurry inlet 1405 is in communication with the lower end of the screen 1500 and rotor 1425 through the lower screen support section 1450 at connection 1448, and the upper end of the housing and rotor is in communication with a dried pellet discharge chute 1460 through a connection, not shown, in the upper screen support section 1455 at the upper end of the housing. A diverter plate 1465 in outlet 1467 can divert dried pellets out of exit 1470 or exit 1475.

The housing 1410 is of sectional construction connected at a flanged coupling, not shown, at a lower end portion of the dryer and a flanged coupling, not illustrated, at the upper end portion of the dryer. The uppermost flange coupling is connected to a top plate 1480 which supports bearing structure 1440 and drive connection 1435 which are enclosed by a housing or guard 1437. A coupling 1432 atop the housing 1437 supports the motor 1430 and maintains all of the components in assembled relation.

The lower end of the housing 1410 is connected to a bottom plate 1412 on top of a water tank or reservoir 1600 by a flange connection 1610 as illustrated in Figure 35. Apertures 1612 communicate the lower end of the dryer housing with the reservoir 1600 for discharge of fluid from the housing 1410 into the reservoir 1600 as the surface moisture is removed from the pellets. This removal is achieved by action of the rotor which elevates the pellets and imparts centrifugal forces to the pellets so that impact against the interior of the screen 1500 will remove moisture from the pellets with such moisture passing through the screen and ultimately into the reservoir 1600 in a manner well known in the art.

The self-cleaning structure of the disclosed dryer includes a plurality of spray nozzle or spray head assembly 1700 supported between the interior of the housing 1410 and the exterior of the screen 1500 as illustrated in Figure 32. The spray nozzle assembly 1700 is supported at the end of spray pipes 1702 extending upwardly through top plate 1480 at the upper end of the housing with the upper ends 1704 of the spray pipes 1702 being exposed. Hoses or lines 1706 feed high pressure fluid, preferably water at a flow rate of at least 151 l/min (40 gpm), and preferably about 227 l/min (60 gpm) to about 303 l/min (80 gpm), and more preferably at 303 l/min (80 gpm) or higher to the spray nozzles 1700. The hoses 1706 can optionally feed off a single manifold (not shown) mounted on the dryer 1400.

There are preferably at least three spray nozzle assemblies 1700 and related spray pipes 1702 and lines 1706. The spray nozzle assembly 1700 and pipes 1702 are oriented in circumferentially spaced relation peripherally of the screen 1500 and oriented in staggered vertical relation so that pressurized fluid discharged from the spray nozzles 1700 will contact and clean the screen 1500, inside and out, as well as the interior of the housing 1410. Thus, any collected pellets that may have accumulated or lodged in hang-up points or areas between the outside surface of the screen 1500 and inside wall of the housing 1410 are flushed through apertures 1612 into the reservoir 1600, Figure 35. Similarly, leftover pellets inside the screen 1500 and outside the rotor 1425 are flushed out of the dryer and will not contaminate or become mixed with pellets passing through the dryer during a subsequent drying cycle in which a different type pellet is dried.

The region between the screen support section 1450 at the lower end of the dryer and the inner wall of the housing 1410 includes flat areas at the port openings and seams that connect the components of the dryer housing together. The high pressure water from the spray nozzle assembly 1700 effectively rinses this region as well. The base screen support section 1450 is attached to the bottom plate 1412 of the housing 1410 and reservoir 1600 by screws or other fasteners to stationarily secure the housing and screen to the reservoir 1600. The base screen support section 1450 is in the form of a tub or basin as shown in Figure 32. Alternatively, in other dryers the base screen support section 1450 may be in the form of an inverted tub or inverted base (not shown).

The rotor 1425 includes a substantially tubular member 1427 provided with inclined rotor blades 1485 thereon for lifting and elevating the pellets and subsequently impacting them against the screen 1500. In other dryers, the rotor 1410 can be square, round, hexagon, octagon or other shape in cross-section. A hollow shaft 1432 extends through the rotor 1425 in concentric spaced relation to the tubular member 1427 forming the rotor. The hollow shaft guides the lower end of the rotor as it extends through an opening 1482 in a guide bushing 1488 at the lower end of the rotor 1425, as well as aligned openings in bottom plate 1412 and the top wall of the reservoir 1600, respectively. A rotary coupling 1490 is connected to the hollow shaft 1432 and to a source of fluid pressure, preferably air (not shown) through hose or line 1492 supply to pressurize the interior of the hollow shaft 1432.

The hollow shaft 1432 includes apertures to communicate the interior of the hollow rotor member 1427. These holes introduce the pressurized fluid, preferably air, into the interior of the rotor 1425. The rotor 1425 in turn has apertures in the bottom wall which communicate the bottom end of the rotor 1425 with the interior of the base or tub section 1450 to enable the lower end of the rotor 1425 and the tub section 1450 to be cleaned. Any pellets flushed from the rotor and inside screen 1500 are discharged preferentially through the dried pellet outlet chute 1460.

The top of the rotor 1410 inside top section 1455 is also a hang-up point and subjected to high pressure fluid, preferably air, to dislodge accumulated pellets. As shown in Figure 32, a nozzle 1710 directs the high pressure air across the top of the rotor 1425 to drive any accumulated pellets out of the top section and preferentially into the pellet outlet chute 1460. The nozzle 1710 is fed by an air hose or line, not shown, which extends through top plate 1480 and is connected to a high pressure air source.

In addition to hang-up points or areas occurring in the dryer structure, the agglomerate catcher 1300 can also be cleaned by a separate pipe or hose 1720 controlled by a solenoid valve which directs high pressure fluid onto the pellet contact side of the angled agglomerate grate or catcher plate and bar rod grid 1310 to clean off any agglomerates which are then discharged through the discharge tube or chute 1305.

A hose and nozzle supply bursts of air to discharge chute or pipe 1460 in a direction such that it cleans the top of the rotor 1425 and the pellet discharge outlet 1460. The air discharge blows any pellets past any pipe connections and the diverter plate 1465 in outlet 1467 for discharge of dried pellets out of the dryer.

The rotor 1425 is preferably turning continuously during the full cleaning cycle. Solenoid valves are provided to supply air preferably at about 60 psi to 80 psi, or more, to additional hang-up points not shown which include the water box bypass air port, rotor air ports, top section air port, pellet outlet air port and diverter valve air port. The solenoid valves include timers to provide short air bursts, preferably about three seconds, which cleans well and does not require a lot of time. A clean cycle button (not shown) activates the cleaning cycle with the water box bypass air port being energized first to allow air to purge the bypass with a multiplicity of air bursts, preferably five or more. The top section air port is then activated. This is followed sequentially with activation of the diverter plate 1465. This valve closes prior to activation of the spray nozzle assembly 1700 which washes the screen for one to ten seconds, preferably about six seconds. The blower 1760 must be deactivated during the water spray cycles and is then reactivated when the spray nozzle pump is de-energized thus completing one cleaning cycle. The cycle as herein described is not limited in scope and each component of the cycle may be varied in frequency and/or duration as necessitated to achieve appropriate removal of the residual pellets.

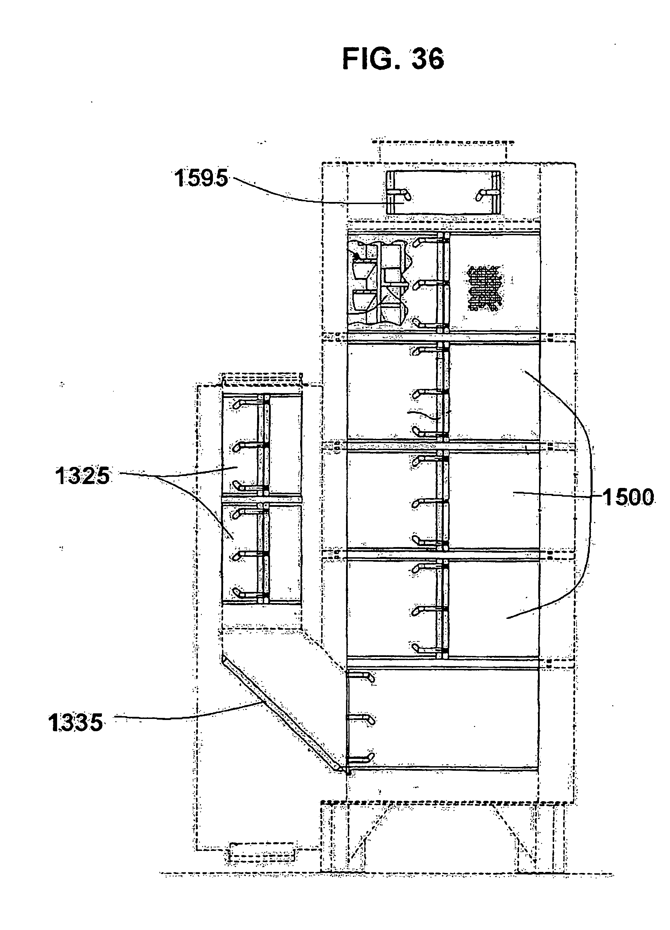

The screens for the process include none, one or more horizontal or vertical dewatering screens 1325, inclined dewatering screen 1335, port screens 1595, and/or one or more cylindrically attachable screens 1500 as illustrated in Figure 36. The size, composition, and dimensions of the screens must accommodate the pellets being generated and may be perforated, punched, pierced, woven, or of any other configuration known to those skilled in the arts and may be the same or different in construction, composition, and style. As the pellet size decreases in diameter, preferably the screens will be composed of two or more layers which may be of similar or different composition, design, and size. The screens are fixedly attached by latches, clamps, bolts, or any mechanism appropriately understood by those skilled in the arts.

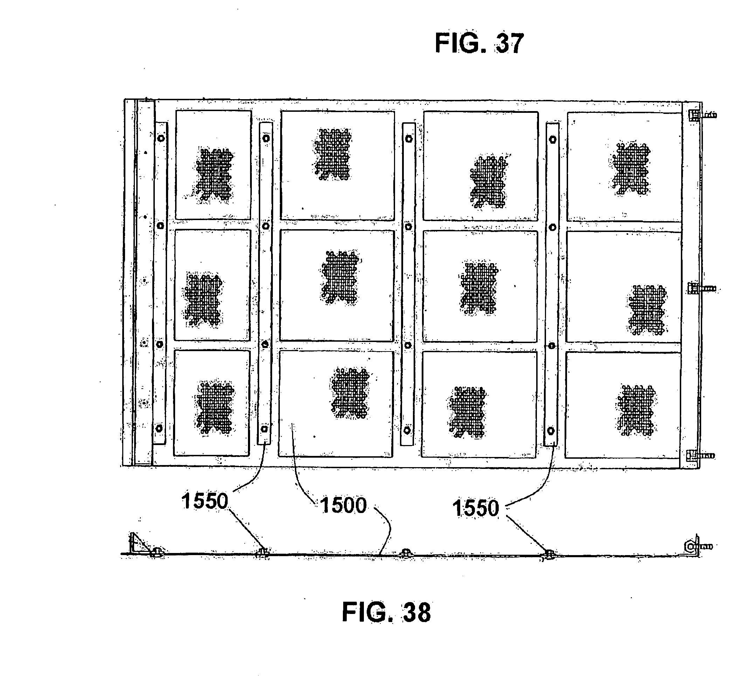

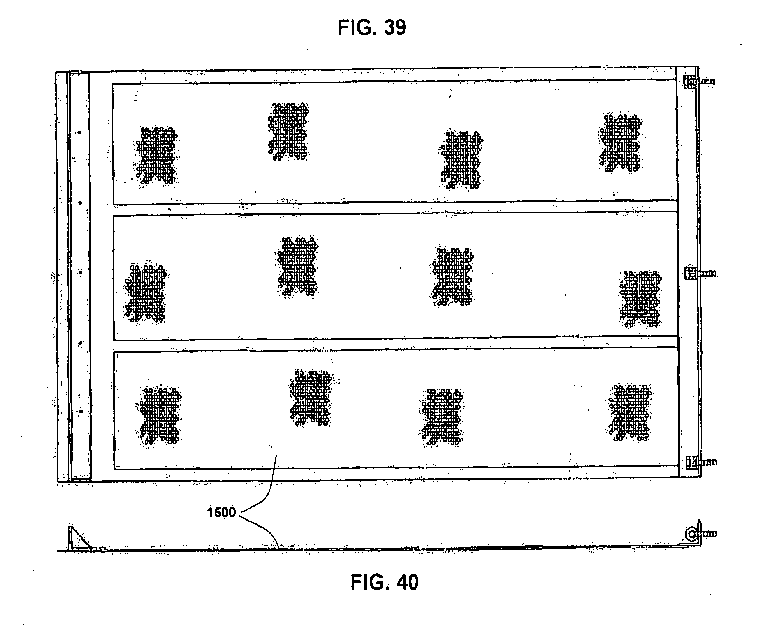

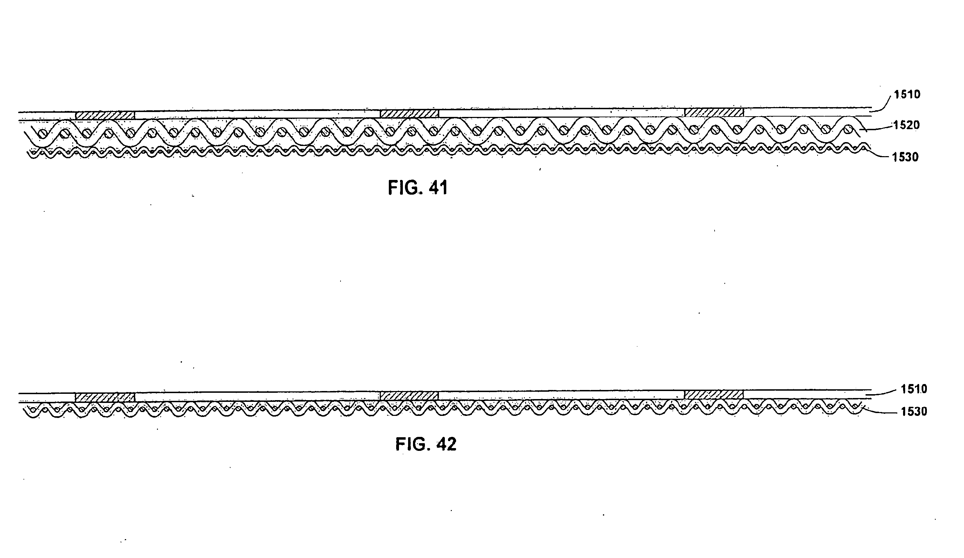

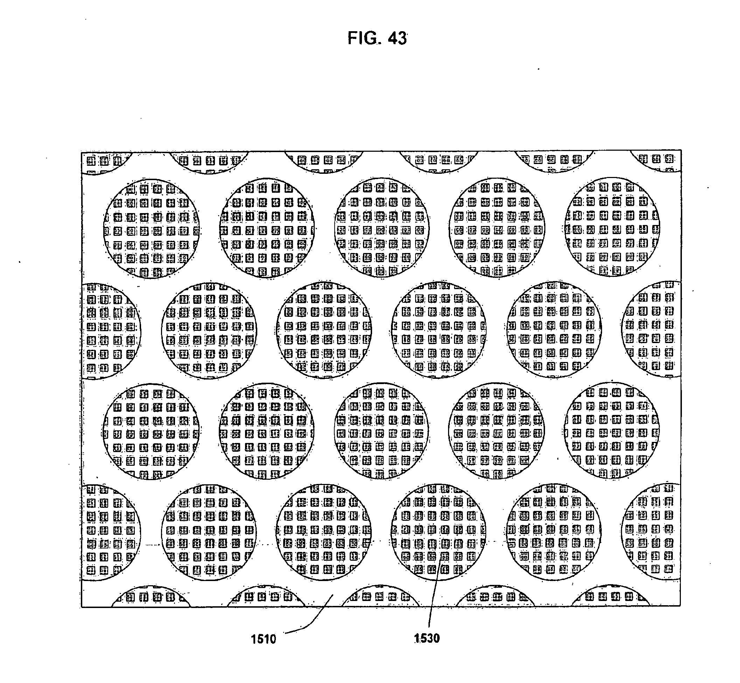

The screens 1500 are preferably of suitably flexible construction as to be circumferentially placed around the dryer 1400 and rotor 1425 and may contain deflector bars 1550 as illustrated in Figures 37, face view, and Figure 38, edge view, which are bolted in placed effectively segmentalizing the screen area into approximately equal areas. Alternatively, the screens may by free of deflector bars as seen face view in Figure 39 with an edge view illustrated in Figure 40. Preferably screens 1500 are compositionally two or more layers functionally consisting of an outer support screen and an inner screen which accomplishes the effective drying of the pellets and smaller micropellets. Additionally, one or more screen layers may be sandwiched between the outer support screen and the inner screen depending upon the particular application. Figure 41 illustrates an edge view of a three-layer composition and Figure 42 illustrates a similar edge view of a two-layer composition. Figure 43 illustrates a surface view of a two-layer screen composition in which the view is from the side of the support layer through which is visualized the finer mesh screen layer.

The outer support screen 1510 may be composed of molded plastic or wire-reinforced plastic and compositionally may be polyethylene, polypropylene, polyester, polyamide or nylon, polyvinyl chloride, polyurethane, or similarly inert material which capably maintains its structural integrity under chemical and physical conditions anticipated in the operation of the centrifugal pellet dryers. Preferably the outer support screen 1510 is a metal plate of suitable thickness to maintain the structural integrity of the overall screen assembly and flexible enough to be contoured, exemplarily cylindrically, to fit tightly and positionally in the appropriate centrifugal pellet dryer. The metal plate is preferably 18 gauge to 24 gauge and most preferably is 20 to 24 gauge in thickness. The metal may compositionally be aluminum, copper, steel, stainless steel, nickel steel alloy, or similarly non-reactive material inert to the components of the drying process. Preferably the metal is stainless steel and most preferably is Grade 304 or Grade 316 stainless steel as necessitated environmentally by the chemical processes undergoing the drying operation.

The metal plate may be pierced, punched, perforated, or slotted to form openings which may be round, oval, square, rectangular, triangular, polygonal, or other dimensionally equivalent structure to provide open areas for separation and subsequent drying. Preferably the openings are round perforations and geometrically staggered to provide the maximum open area while retaining the structural integrity of the outer support screen. The round perforations are preferably at least 1,9 mm (0.075 inches) in diameter and are positionally staggered to provide an open area of at least 30%. More preferred is an open area geometric orientation such that the effective open area is 40 percent or more. Most preferred are round perforations having a diameter of at least 4,8 mm (0.1875 inches) which are positionally staggered to achieve an open area of 50 percent or more.

Alternatively, the outer support screen may be an assembled structure or screen composed of wires, rods, or bars, stacked angularly or orthogonally, or interwoven, and welded, brazed, resistance welded or otherwise permanently adhered in position. The wires, rods, or bars may be plastic or wire-reinforced plastic compositionally similar to the molded plastic described above or may be metal, similarly and compositionally delineated as above and may be geometrically round, oval, square, rectangular, triangular or wedge-shaped, polygonal or structurally similar. The wires, rods, or bars across the width or warp of the screen may be the same as or different dimensionally as the wires, rods, or bars longitudinally contained as the weft, shute, or otherwise known to those skilled in the art.

Preferably the wires, rods, or bars are a minimum of 0,5 mm (0.020 inches) in the narrowest dimension, more preferably are at least 0,8 mm (0.030 inches) in the narrowest dimension, and most preferably are about 1,2 mm (0.047 inches) in the narrowest dimension. Open areas are dimensionally dependent on the proximal placement of adjacent structural elements and are positionally placed so as to maintain a percent open area of at least, about 30 per cent, more preferably above about 40 percent, and most preferably about 50 percent or greater.

The optional middle screen 1520 or screens and the inner screen 1530 are structurally similar to that described herein for the outer support screen. Dimensionally and compositionally the screens in the respective layers may be similar or different. The percent open area of the respective screens may be similar or different wherein lesser percent open area will reduce the effective open area of the screen and the least percent open area will be the most restrictive and therefore the delimiting percent open area for the screen assembly. The orientation of any screen relative to other layers of the assembly as well as the dimension and structural composition of the screens may be similar or different.

The inner screen 1530 is preferably a woven wire screen which may be in a square, rectangular, plain, Dutch or similar weave wherein the warp and weft wire diameters may be the same or different dimensionally or compositionally. More preferably the inner screen is a plain square or rectangular weave wire screen wherein the warp and weft wires are similar compositionally and dimensionally and the open area is 30 percent or greater. Even more preferably, the inner layer screen is plain square or rectangular 30 mesh or larger mesh grade 304 or grade 316 stainless steel wherein the warp and weft wires are of a size to allow at least 30 percent open area and most preferably are 50 percent open area. Still more preferred is an inner screen of a plain square or rectangular weave of 50 mesh or greater mesh, with a percent open area of 50 percent or greater. If incorporated, the middle screen 1520 would be of a mesh intermediate between the support screen 1510 and the inner screen 1530 and may be similar or different structurally, geometrically, compositionally, and orientationally. The two-layer screen is a preferred composition as delineated in the disclosure.

Pellets discharged from the pellet discharge chute 1460 may be sized, sieved, packaged, additionally dried or subjected to further processing such as fluidization or transported for storage or immediate manipulation in accordance with the process requirements.

The dryer 1400 and screens 1500 may be treated or coated for optimization of performance, reduction of static charge, improved wear resistance, enhancement of corrosion resistance, better abrasion resistance, facilitation of drying or similar process improvement.

Volatiles as described include but are not limited to materials, gas or liquid, that tend to evaporate or are evolved on heating under normal processing conditions or which on reaction with other materials evolve gas or liquids or which thermally disassociate or decompose to evolve gas or liquids or which evolve byproducts as a consequence of further polymerization. Included herein are processing compounds, slip agents, flow modifiers, fragrances, flavors, rheology modifiers, plasticizers, flame retardants, compatibilizers, antistatic agents, ultraviolet absorbers, scavenging agents, monomers, cross-linking agents, expanding agents, liquid dye components, tackifiers, solubilizing agents, dispersing agents or the like. Also included are condensation by-products such as water, alcohol or similar byproducts evolved by possible polymerization reactions or depolymerization reactions.

Without intending to be bound by any theory, application and maintenance of pressure after pelletization allows the pellets so formed to be controllably cooled such as to initially seal the outer shell or layer of the pellet quickly, and to slowly and controllably allow dissipation of the internal heat of the pellet as well as heat evolved by any crystallization or reaction of the material being processed. This minimum sealing time is 1 second or more and preferably is from 2 seconds to 45 seconds. Such control allows any volatile component to remain uniformly dispersed or dissolved in the material matrix without potentially out-gassing prematurely. Such loss of volatiles, out-gassing, or vaporization of components leads to poor surface quality, lack of control of cell size in pre-expansion materials, and unwanted or even pre-mature expansion and foaming. Formation of voids, pinholes, haze, pockmarks, and other internal and surface blemishes are common occurrence without the control permissible with pressurization of the pellet/fluid slurry downstream of the dieface as herein described.

As particle sizes of fillers and pigments are diminished to micron, sub-micron, and nanometer dimensions, the surface areas often increase astronomically as do the absorption and adsorption capacities of these materials. The vastly diminished particle size relative to the matrix materials, particularly polymers, significantly affects the matrix material's ability to satisfactorily wet out the particles thus leading to potential entrapment of moisture, solvents, gases such as air or carbon dioxide, and the like. Under heated process conditions such materials may be prone to volatilization or out-gassing leading particularly to voids and microvoids which are often readily visualized. Furthermore, such entrapment materials may lead to localized modification or decomposition of the matrix material leading to additional volatile generation.

Exemplary of materials and common volatility problems addressed by the disclosed apparatus herein are included, without intending to be limited, loss of slip agents as is common from polyolefins such as polyethylenes and polypropylenes; loss of expanding agents from polyolefins, polystyrenes and other aryl substituted alkenyl polymers, substituted vinyl polymers, polyesters, polyamides, fluoro-olefins and halo-olefins, asphalts, adhesives, polyurethanes, biodegradable polymers, copolymers and polymer blends; premature decomposition and corrosive out-gassing from or loss of flame-retardants; void formation from condensation polymers such as polyamides, polyesters, and polycarbonates; loss of cross-linking agents; outgassing of air or moisture from high surface area carbon compounds, pigments, nanomaterials including nanocomposites and nanofillers, and micronized powders and fillers; volatilization of moisture from hygroscopic or deliquescent materials such as cellulosics, starches, polysaccharides, biofibers, polyhydroxy ultraviolet dyes, fillers, polar pigments, polyurethanes, polyethers, polyesters, polyamides, polysulfones, polythioethers; loss of low molecular weight or oligomeric prepolymers; loss of reactive components or monomers from reactive extrusion processes; loss of fragrances or flavors and volatility stabilizers from masterbatch formulations; loss of coalescing materials from formulations; volatilization of entrapped gas, moisture, and by-products from static, dynamic, and extrusional processes; or premature reaction of expanding agent generating compounds which liberate gas such as nitrogen or carbon dioxide.

## Claims

1. Method for producing polymer pellets, in particular expandable polymer pellets, containing a volatile and/or volatile generating agent, wherein a polymer melt containing the volatile and/or volatile generating agent is provided from a polymer melt source (2) to an underwater pelletizer (900) by means of which said polymer melt is cut into pellets containing the volatile and/or volatile generating agent, wherein said pellets are conveyed away from said underwater pelletizer (900) by means of a fluid flowing through a piping (1000) into a dewatering and/or drying device (1300, 1400) where the pellets are separated from said fluid, wherein said pellets are kept in said fluid flow for at least a minimum sealing time until an outer shell of the pellets is sealed and the volatile and/or volatile generating agent is trapped within the pellets,
**characterized in that**
said piping (1000) includes fluid flow pressurization means (1035, 1070, 1080, 1010, 1015; 1150) including a pressurization loop (1010, 1035), through which said fluid flow is urged and by means of which said fluid flow is pressurized, and that
incoming transport fluid is connected to an outlet (1060) by means of a pressurized multiple bypass loop (1015, 1080, 1070, 1010, 1035) by means of which the incoming transport fluid bypasses the pelletization section of the underwater pelletizer (900) or is directed to the pressurization loop (1010, 1035) containing a pressure pump or series of pumps to and sequentially through a pelletizer transport fluid box (400) and through respective components to the outlet (1060), or bypasses the pressurization loop (1010, 1035) directly to the transport fluid box (400) through the respective components and to the outlet (1060), and that
by means of fluid flow pressurization (1035, 1070, 1080, 1010, 1015; 1150), said fluid flow is continuously kept at a pressure above a volatilization pressure over at least said minimum sealing time, said volatilization pressure corresponding to the minimum pressure above which said volatile and/or volatile generating agent is kept in said polymer,

2. Method according to claim 1, wherein the respective components contain pressure-rated sight glass (1040), pressure gauge (1045), vacuum break check valve (1050), and blocking valve (1055).

3. Method according to claim 1 or claim 2, wherein said fluid flow is kept above said volatilization pressure by at least 1 Bar.

4. Method according to one of the preceding claims, wherein said fluid flow is continuously kept at a pressure of 5 Bar or more over said minimum sealing time period.

5. Method according to the preceding claim, wherein said fluid flow is continuously kept at a pressure of 10 Bar or more over said minimum sealing time period.

6. Method according to one of the preceding claims, wherein said minimum sealing time period is at least 1 second or more.

7. Method according to the preceding claim, wherein said minimum sealing time period is preferably between 2 seconds to 45 seconds.

8. Method according to one of the preceding claims, wherein said fluid flow is kept at a cooling temperature to slowly cool the pellets to a sealing temperature in said fluid flow where at least the outer shell of the pellets is sealed and the volatile and/or volatile generating agent is trapped within the pellets.

9. Method according to the preceding claim, wherein said fluid flow is kept at a temperature at least 20°C below the melting temperature of the polymer, preferably at a temperature 30°C to 100°C below the melting temperature of the polymer.

10. Method according to one of the two preceding claims, wherein the fluid flow is kept at a temperature from 0°C to 100°C.

11. Method according to one of the three preceding claims, wherein the fluid flow is kept at a temperature from 10°C to 70°C.

12. Method according to one of the four preceding claims, wherein the fluid flow is kept at a temperature from 15°C to 60°C.

13. Method according to one of the five preceding claims, wherein said fluid flow is directed through at least one heat exchanger connected to said piping (1000).

14. Method according to one of the preceding claims, wherein the fluid flow is pressurized to a pressure above the said volatilization pressure over the entire fluid flow path from a cutting chamber (400) of said underwater pelletizer to said pressure supplement device and/or pressurized dewaterer (1100, 1200).

15. Method according to one of the preceding claims, wherein said fluid pressurization means (1150) includes flow restriction means of the Bernoulli type through which the fluid flow is urged .to expedite the desired level of pressurized flow through the piping.

16. Method according to one of the preceding claims, wherein the fluid flow is urged through a series of conical, biconical and/or hyperboloid flow restriction means (1150) connected to said piping, thus maintaining the desired fluid flow pressure level.

17. Method according to the preamble of claim 1 or anyone of the preceding claims, wherein said polymer melt containing the volatile and/or volatile generating agent is continuously kept at a pressure above the volatilization pressure by means of melt pressurization, said volatilization pressure corresponding to the minimum pressure above which said volatile and/or volatile generating agent is kept within the polymer melt.

18. Method according to the preceding claim, wherein the polymer melt is kept at a pressure above the said volatilization pressure by at least 1 Bar or more.

19. Method according to one of the two preceding claims, wherein the polymer melt is kept at a pressure of at least 10 bar.

20. Method according to one of the three preceding claims, wherein the polymer melt is kept at a pressure of at least 30 bar to 250 bar.

21. Method according to one of the preceding claims, wherein the polymer melt is urged through a diverter valve (200) upstream of said underwater pelletizer (900) which diverter valve is obstructing the melt flow path to the underwater pelletizer until sufficient mixing of the polymer and the volatile and/or volatile generating agent is achieved.

22. Method according to anyone of the preceeding claims wherein said volatile or volatile generating agent is gas or liquid which evaporates, is evolved, or is released on heating under normal processing conditions or upon reaction or which thermally dissociates or decomposes.

23. Apparatus for producing polymer pellets containing a volatile and/or volatile generating agent, in particular in accordance with the method of one of the preceding claims, said apparatus comprising a polymer melt source (2) for providing polymer melt containing the volatile and/or volatile generating agent, an underwater pelletizer (900) for pelletizing the polymer melt into pellets, a fluid flow generator for generating a fluid flow through a piping (1000) connected to said underwater pelletizer (900) for conveying the pellets away from said underwater pelletizer, and a dewatering and/or drying device (1300, 1400) for separating the pellets from said fluid, wherein said piping (1000) being designed such that said pellets are kept in said fluid flow for at least a minimum sealing time period until an outer shell of the pellets is sealed and the volatile and/or volatile generating agent is trapped within the pellets, **characterized in that**
said fluid flow generator and/or said piping (1000) includes fluid flow pressurization means (1035, 1070, 1080, 1010, 1015; 1150) including a pressurization loop (1010, 1035), through which said fluid flow is urged and by means of which said fluid flow is pressurized, and that a pressurized multiple bypass loop (1015, 1080, 1070, 1010, 1035) is provided which connects incoming transport fluid to an outlet (1060) which bypasses the pelletization section of the underwater pelletizer (900) or directs the incoming transport fluid to the pressurization loop (1010, 1035) containing a pressure pump or series of pumps to and sequentially through a pelletizer transport fluid box (400) and through respective components to the outlet (1060), or bypasses the pressurization loop (1010, 1035) directly to the transport fluid box (400) through the respective components and to the outlet (1060), and that
the said fluid flow pressurization means (1035, 1070, 1080, 1010, 1015; 1150) is for continuously keeping the fluid flow at a pressure above a volatilization pressure over at least said minimum sealing time, said volatilization pressure corresponding to the minimum pressure above which said volatile and/or volatile generating agent is kept in said polymer.

24. Apparatus according to the preceding claim, wherein the respective components contain pressure-rated sight glass (1040), pressure gauge (1045), vacuum break check valve (1050), and blocking valve (1055).

25. Apparatus according to claim 23 or 24, wherein said fluid flow pressurization means includes flow restriction means (1150) of the Bernoulli type connected to said piping for expediting the desired level of pressurized flow through the piping (1000) in accordance with the Bernoulli effect.

26. Apparatus according to claim 23 or 24, wherein the fluid flow pressurization means includes at least one, preferably a series of conical, biconical and/or hyperboloid flow restriction means (1150) connected to said piping.

27. Apparatus according to the preceding claim, wherein a biconical pressure device (1150) and/or a series of biconical pressure devices (1150) is provided, that reduces the diameter of the flow pipe through a conical section to a smaller, restrictive diameter orifice or bore to achieve and maintain pressurization on the incoming pellet/fluid slurry flow which then passes through a second increasing diameter cone section to additional pipe or to a series of one or more additional biconical pressure devices that contain progressively smaller diameter restrictive orifices or bores.

28. Apparatus according to one of the two preceding claims, wherein a filter basket prior to the biconical pressure device (1150) allows pressurized flow of the pellet/fluid slurry from the pelletizer (900) through at least one screen with openings of a geometry such that agglomerates larger than the smallest constriction of the biconical pressure device are removed avoiding clogging.

29. Apparatus according to the preceding claim, wherein the at least one screen is perforated, slotted, pierced, woven, molded and/or punched metal and/or durable plastic, wherein preferably said at least one screen comprises two or more adhered, welded, and/or sintered layers of similar or different composition, structure, and design which are in series of progressively smaller opening sizes.

30. Apparatus according to one of the preceding claims 23-29, wherein said underwater pelletizer (900) includes an explosion-proof multi-orifice die.

31. Apparatus according to the preceding claim, wherein said explosion proof multiorifice die is of single-body construction containing heating elements of coil and/or cartridge design varying in length to remain outside the circumferentially positioned die holes and/or to pass through said die holes proximal to insertion of heating element and/or to through-penetrate die body to die holes diametrically opposed to insertion of heating element.

32. Apparatus according to the preceding claim, wherein said explosion proof multiorifice die of single-body construction contains means for heating thermally regulated by circulation of steam and/or thermal transfer fluid.

33. Apparatus according to the two preceding claims, wherein said explosion proof multiorifice die is of multi-component construction containing heating elements of cartridge or coil design in an outer component of a removable center die or in both the outer component and the removable center component.

34. Apparatus according to one of the preceding claims 30 to 33, wherein said explosion proof multiorifice die contains a plurality of die holes, tapered and/or cylindrical, 0.2 mm to 3.5 mm in diameter.

35. Apparatus according to one of the preceding claims 30 to 34, wherein said explosion proof multiorifice die contains a plurality of circumferentially and staggerdly positioned die holes.

36. Apparatus according to one of the preceding claims 30 to 35, wherein said explosion proof multiorifice die is comprised of a hard face material, ceramic material, and/or combination thereof, and/or wherein the body of said die is hardened and/or treated for enhanced corrosion, abrasion, and wear resistance.

37. Apparatus according to one of the preceding claims 33 to 36, wherein said explosion proof multiorifice die encompasses the heating elements of said die with an enclosure of such geometry to effectively shield said heating elements from exposure to potentially flammable vapors and/or volatiles and through which groundedly attach power connections to said heating elements.

38. Apparatus according to the preceding claim, wherein the explosion proof shield is fixedly and sealedly attached as a single or multi-component unit to the die body itself or to upstream or downstream components proximal to the die such that the shielding obtained prevents potential ignition of vapors or volatiles.

39. Apparatus according to one of the preceding claims 23 to 38, further comprising a diverter valve (200) with controllable flow blockage position upstream of said underwater pelletizer (900).

40. Apparatus according to the preceding claim, wherein said diverter valve (200) contains
(a) one or more positionally distinct through directional bores for flow of molten material from one or more mixing process to one or more pelletization process; and
(b) a directionally distinct purge bore; and a positionally distinct blocking position which has no through bore thus inhibiting molten material flow.

41. Apparatus according to one of the preceding claims 23 to 40, wherein the underwater pelletizer (900) is provided with a transport fluid box (400) that contains a single or multi-sectional flow guide to direct flow through said transport fluid box (400) reducing the volume of that transport fluid box (400) increasing the transport fluid velocity therethrough and providing additional head pressure to the pellet / fluid slurry generated.

42. Apparatus according to one of the preceding claims 23 to 41, wherein a melt cooler and valving system is provided, said system comprising: a melt cooler (100; 150; 2030; 2060; 2090) that cools the polymeric melt, including a melt cooler inlet line that conveys the melt to the cooler, and a melt cooler outlet line that conveys the cooled melt from the cooler; and a diverter valve (120; 2040; 2094) configured to convey the melt to and from the cooler during a cooling mode of operation, to convey the melt around the cooler during a bypass mode of operation, and to drain the melt from the cooler and from the diverter valve during a drain mode of operation.

43. Apparatus according to claim 42, wherein the diverter valve (120; 2040; 2094) includes a hot melt inlet line, a first movable valve component, a hot melt outlet line to the melt cooler, a hot melt bypass line, a cooled melt inlet line from the melt cooler, a second movable valve component, a cooled melt outlet line, and a melt drain line.

44. Apparatus according to claim 43, wherein to configure the diverter valve (120; 2040; 2094) for the cooling mode the first movable valve component is positioned so as to open the hot melt outlet line to the melt cooler, close the hot melt bypass line, and close the melt drain line, and the second movable valve component is positioned so as to open the cooled melt inlet line from the melt cooler, thereby providing a melt flow path through the melt cooler and out of the diverter valve through the cooled melt outlet line, and/or wherein to configure the diverter valve (120; 2040; 2094) for the bypass mode the first movable valve component is positioned so as to close the hot melt outlet line to the melt cooler and close the melt drain line, and the second movable valve component is positioned so as to close the cooled melt inlet line from the melt cooler, thereby providing a melt flow path around the melt cooler and out of the diverter valve through the cooled melt outlet line, and/or wherein to configure the diverter valve (120; 2040; 2060; 2094) for the drain mode the first movable valve component is positioned so as to open the hot melt outlet line to the melt cooler, close the hot melt bypass line, and open the melt drain line, and the second movable valve component is positioned so as to open the cooled melt inlet line from the melt cooler, thereby providing a melt flow path from the hot melt inlet line and from a first process side of the melt cooler out of the diverter valve through the melt drain line, and providing a melt flow path from a second process side of the melt cooler out of the diverter valve through the cooled melt outlet line.

45. Apparatus according to one of claims 42 to 44, wherein the melt cooler (100; 2030) is located in a vertical orientation above the diverter valve (120; 2040).

46. Apparatus according to one of claims 42 to 45, wherein the melt cooler (100; 2030; 2090) is a double pass, shell and tube heat exchanger, wherein preferably a process side of the heat exchanger includes static fluid mixing elements therein, and/or wherein the heat exchanger has a jacketed top head that is heated by a thermal heat transfer fluid or by an electric heater cartridge.

47. Apparatus according to one of claims 42 to 46, wherein a top portion of the melt cooler (2030) has a heated vent configured to release a compressible fluid therefrom and/or to facilitate drainage of the melt from a bottom portion of the cooler.

48. Apparatus according to one of claims 42 to 44, wherein the melt cooler (2060) is located beneath the diverter valve (2062) in a vertical orientation and includes a melt drain line and a vent configured to release a compressible fluid in a bottom portion thereof.

49. Apparatus according to one of claims 42 to 44, wherein the melt cooler (150; 2090) is located in a horizontal orientation above the diverter valve (120; 2094), wherein preferably one of (a) to (c) is given: (a) the melt cooler inlet line is located in a top portion of the melt cooler, and the melt cooler outlet line is located in a bottom portion of the melt cooler, (b) the melt cooler inlet line and the melt cooler outlet line are located in opposing portions of the melt cooler in a side-by-side configuration,(c) the melt cooler inlet line is located in a bottom portion of the melt cooler, and the melt cooler outlet line is located in a top portion of the melt cooler.

## Patentansprüche

1. Verfahren zum Herstellen von Polymergranulat, insbesondere von expandierbarem Polymergranulat, das einen flüchtigen Bestandteil und/oder ein einen flüchtigen Bestandteil erzeugendes Mittel enthält, wobei eine den flüchtigen Bestandteil und/oder das den flüchtigen Bestandteil erzeugende Mittel enthaltende Polymerschmelze von einer Polymerschmelzequelle (2) zu einem Unterwassergranulator (900) geliefert wird, mittels dessen die Polymerschmelze zu Granulat geschnitten wird, das den flüchtigen Bestandteil und/oder das den flüchtigen Bestandteil erzeugende Mittel enthält, wobei das Granulat mittels eines Fluids, das durch eine Verrohrung (1000) in eine Entwässerungs- und/oder Trocknungsvorrichtung (1300, 1400) strömt, wo das Granulat von dem Fluid getrennt wird, weg von dem Unterwassergranulator (900) befördert wird, wobei das Granulat mindestens eine Mindestversiegelungszeit lang in der Fluidströmung gehalten wird, bis eine Außenhülle des Granulats versiegelt ist, und der flüchtige Bestandteil und/oder das den flüchtigen Bestandteil erzeugende Mittel in dem Granulat zurückgehalten wird,
**dadurch gekennzeichnet, dass**
die Verrohrung (1000) Mittel zur Druckbeaufschlagung der Fluidströmung (1035, 1070, 1080, 1010, 1015; 1150), einschließlich einer Druckbeaufschlagungsschleife (1010, 1035), durch die die Fluidströmung gezwungen wird und mittels derer die Fluidströmung druckbeaufschlagt wird, umfasst und dass
ein ankommendes Transportfluid mit einem Auslass (1060) mittels einer druckbeaufschlagten Mehrfachumgehungsschleife (1015, 1080, 1070, 1010, 1035) verbunden ist, mittels derer das ankommende Transportfluid den Granulationsabschnitt des Unterwassergranulators (900) umgeht oder zu der Druckbeaufschlagungsschleife (1010, 1035), die eine Druckpumpe oder eine Reihe von Pumpen enthält, zu und nacheinander durch einen Granulatortransportfluidkasten (400) und durch jeweilige Komponenten zu dem Auslass (1060) geleitet wird oder die Druckbeaufschlagungsschleife (1010, 1035) durch die jeweiligen Komponenten direkt zu dem Transportfluidkasten (400) und zu dem Auslass (1060) umgeht, und dass
mittels der Fluidströmungsdruckbeaufschlagung (1035, 1070, 1080, 1010, 1015; 1150) die Fluidströmung während mindestens der Mindestversiegelungszeit kontinuierlich bei einem Druck über einem Verflüchtigungsdruck gehalten wird, wobei der Verflüchtigungsdruck dem Mindestdruck entspricht, über dem der flüchtige Bestandteil und/oder das den flüchtigen Bestandteil erzeugende Mittel in dem Polymer gehalten wird.

2. Verfahren nach Anspruch 1, wobei die jeweiligen Komponenten ein für Druck ausgelegtes Schauglas (1040), einen Druckmesser (1045), ein Vakuumbrecherrückschlagventil (1050) und ein Absperrventil (1055) enthalten.

3. Verfahren nach Anspruch 1 oder 2, wobei die Fluidströmung um mindestens 1 Bar über dem Verflüchtigungsdruck gehalten wird.

4. Verfahren nach einem der vorhergehenden Ansprüche, wobei die Fluidströmung während des Mindestversiegelungszeitraums kontinuierlich bei einem Druck von 5 Bar oder mehr gehalten wird.

5. Verfahren nach dem vorhergehenden Anspruch, wobei die Fluidströmung während des Mindestversiegelungszeitraums kontinuierlich bei einem Druck von 10 Bar oder mehr gehalten wird.

6. Verfahren nach einem der vorhergehenden Ansprüche, wobei der Mindestversiegelungszeitraum mindestens 1 Sekunde oder mehr beträgt.

7. Verfahren nach dem vorhergehenden Anspruch, wobei der Mindestversiegelungszeitraum vorzugsweise zwischen 2 Sekunden bis 45 Sekunden liegt.

8. Verfahren nach einem der vorhergehenden Ansprüche, wobei die Fluidströmung bei einer Abkühlungstemperatur gehalten wird, um das Granulat langsam auf eine Versiegelungstemperatur in der Fluidströmung zu kühlen, wobei mindestens die Außenhülle des Granulats versiegelt wird und der flüchtige Bestandteil und/oder das den flüchtigen Bestandteil erzeugende Mittel in dem Granulat zurückgehalten wird.

9. Verfahren nach dem vorstehenden Anspruch, wobei die Fluidströmung bei einer Temperatur mindestens 20°C unter der Schmelztemperatur des Polymers gehalten wird, vorzugsweise bei einer Temperatur 30°C bis 100°C unter der Schmelztemperatur des Polymers.

10. Verfahren nach einem der zwei vorhergehenden Ansprüche, wobei die Fluidströmung bei einer Temperatur von 0°C bis 100°C gehalten wird.

11. Verfahren nach einem der drei vorhergehenden Ansprüche, wobei die Fluidströmung bei einer Temperatur von 10°C bis 70°C gehalten wird.

12. Verfahren nach einem der vier vorhergehenden Ansprüche, wobei die Fluidströmung bei einer Temperatur von 15°C bis 60°C gehalten wird.

13. Verfahren nach einem der fünf vorhergehenden Ansprüche, wobei die Fluidströmung durch mindestens einen mit der Verrohrung (1000) verbundenen Wärmetauscher geleitet wird.

14. Verfahren nach einem der vorhergehenden Ansprüche, wobei die Fluidströmung über den gesamten Fluidströmungsweg von einer Schnittkammer (400) des Unterwassergranulators zu der Druckunterstützungsvorrichtung und/oder dem druckbeaufschlagten Entwässerer (1100, 1200) auf einen Druck über dem Verflüchtigungsdruck druckbeaufschlagt wird.

15. Verfahren nach einem der vorhergehenden Ansprüche, wobei das Fluiddruckbeaufschlagungsmittel (1150) Strömungsbeschränkungsmittel des Bernoulli-Typs umfasst, durch die die Fluidströmung gezwungen wird, um den Sollwert der druckbeaufschlagten Strömung durch die Verrohrung zu beschleunigen.

16. Verfahren nach einem der vorhergehenden Ansprüche, wobei die Fluidströmung durch eine Reihe von konischen, bikonischen und/oder hyperboloiden Strömungsbeschränkungsmitteln (1150), die mit der Verrohrung verbunden sind, gezwungen wird, wodurch der Solldruckwert der Fluidströmung gehalten wird.

17. Verfahren nach dem Oberbegriff von Anspruch 1 oder einem der vorhergehenden Ansprüche, wobei die Polymerschmelze, die den flüchtigen Bestandteil und/oder das den flüchtigen Bestandteil erzeugende Mittel enthält, mittels Schmelzdruckbeaufschlagung kontinuierlich bei einem Druck über dem Verflüchtigungsdruck gehalten wird, wobei der Verflüchtigungsdruck dem Mindestdruck entspricht, über dem der flüchtige Bestandteil und/oder das den flüchtigen Bestandteil erzeugende Mittel in der Polymerschmelze gehalten wird.

18. Verfahren nach dem vorhergehenden Anspruch, wobei die Polymerschmelze um mindestens ein Bar oder mehr bei einem Druck über dem Verflüchtigungsdruck gehalten wird.

19. Verfahren nach einem der zwei vorhergehenden Ansprüche, wobei die Polymerschmelze bei einem Druck von mindestens 10 Bar gehalten wird.

20. Verfahren nach einem der drei vorhergehenden Ansprüche, wobei die Polymerschmelze bei einem Druck von mindestens 30 Bar bis 250 Bar gehalten wird.

21. Verfahren nach einem der vorhergehenden Ansprüche, wobei die Polymerschmelze durch ein Wegeventil (200) stromaufwärts des Unterwassergranulators (900) gedrückt wird, wobei das Wegeventil den Schmelzeströmungsweg zu dem Unterwassergranulator sperrt, bis ein ausreichendes Mischen des Polymers und des flüchtigen Bestandteils und/oder des den flüchtigen Bestandteil erzeugenden Mittels erreicht ist.

22. Verfahren nach einem der vorhergehenden Ansprüche, wobei der flüchtige Bestandteil oder das den flüchtigen Bestandteil erzeugende Mittel Gas oder Flüssigkeit ist, das/die bei Erwärmen unter normalen Verarbeitungsbedingungen oder bei Reaktion verdampft, herausgebildet wird oder freigesetzt wird oder das/die sich thermisch abspaltet oder zersetzt.

23. Vorrichtung zum Herstellen von Polymergranulat, das einen flüchtigen Bestandteil und/oder ein einen flüchtigen Bestandteil erzeugendes Mittel enthält, insbesondere gemäß dem Verfahren nach einem der vorhergehenden Ansprüche, wobei die Vorrichtung eine Polymerschmelzequelle (2) zum Liefern einer Polymerschmelze, die den flüchtigen Bestandteil und/oder ein den flüchtigen Bestandteil erzeugendes Mittel enthält, einen Unterwassergranulator (900) zum Granulieren der Polymerschmelze zu Granulat, einen Fluidströmungsgenerator zum Erzeugen einer Fluidströmung durch eine Verrohrung (1000), die mit dem Unterwassergranulator (900) verbunden ist, zum Befördern des Granulats weg von dem Unterwassergranulator und eine Entwässerungs- und/oder Trocknungsvorrichtung (1300, 1400) zum Trennen des Granulats von dem Fluid umfasst, wobei die Verrohrung (1000) so ausgelegt ist, dass das Granulat mindestens während eines Mindestversiegelungszeitraums in der Fluidströmung gehalten wird, bis eine Außenhülle des Granulats versiegelt ist und der flüchtige Bestandteil und/oder das den flüchtigen Bestandteil erzeugende Mittel in dem Granulat zurückgehalten wird, durch gekennzeichnet, dass
der Fluidströmungsgenerator und/oder die Verrohrung (1000) ein Fluidströmungsdruckbeaufschlagungsmittel (1035, 1070, 1080, 1010, 1015; 1150) umfasst, das eine Druckbeaufschlagungsschleife (1010, 1035) umfasst, durch welche die Fluidströmung gezwungen wird und mittels derer die Fluidströmung druckbeaufschlagt wird, und dass eine druckbeaufschlagte Mehrfachumgehungsschleife (1015, 1080, 1070, 1010, 1035) vorgesehen ist, die ankommendes Transportfluid mit einem Auslass (1060) verbindet, der den Granulationsabschnitt des Unterwassergranulators (900) umgeht und das ankommende Transportfluid zu der Druckbeaufschlagungsschleife (1010, 1035), die eine Druckpumpe oder eine Reihe von Druckpumpen enthält, zu und nacheinander durch einen Granulatortransportfluidkasten (400) und durch jeweilige Komponenten zu dem Auslass (1060) leitet oder die Druckbeaufschlagungsschleife (1010, 1035) durch die jeweiligen Komponenten direkt zu dem Transportfluidkasten (400) und zu dem Auslass (1060) umgeht, und dass
das Fluidströmungsdruckbeaufschlagungsmittel (1035, 1070, 1080, 1010, 1015; 1150) zum kontinuierlichen Halten der Fluidströmung über mindestens die Mindestversiegelungszeit bei einem Druck über einem Verflüchtigungsdruck dient, wobei der Verflüchtigungsdruck dem Mindestdruck entspricht, über dem der flüchtige Bestandteil und/oder das den flüchtigen Bestandteil erzeugende Mittel in dem Polymer gehalten wird.

24. Vorrichtung nach dem vorhergehenden Anspruch, wobei die jeweiligen Komponenten ein für Druck ausgelegtes Schauglas (1040), einen Druckmesser (1045), ein Vakuumbrecherrückschlagventil (1050) und ein Absperrventil (1055) enthalten.

25. Vorrichtung nach Anspruch 23 oder 24, wobei das Fluidströmungsdruckbeaufschlagungsmittel ein Strömungsbeschränkungsmittel (1150) des Bernoulli-Typs umfasst, das mit der Verrohrung zum Beschleunigen des Sollwerts der druckbeaufschlagten Strömung durch die Verrohrung (1000) gemäß der Bernoulli-Wirkung verbunden ist.

26. Vorrichtung nach Anspruch 23 oder 24, wobei das Fluidströmungsbeaufschlagungsmittel mindestens eines, vorzugsweise eine Reihe von konischen, bikonischen und/oder hyperboloiden Strömungsbeschränkungsmitteln (1150) umfasst, die mit der Verrohrung verbunden sind.

27. Vorrichtung nach dem vorhergehenden Anspruch, wobei eine bikonische Druckvorrichtung (1150) und/oder eine Reihe von bikonischen Druckvorrichtungen (1150) vorgesehen ist, die den Durchmesser des Strömungsrohrs durch einen konischen Abschnitt zu einer Mündung oder Bohrung kleineren, restriktiven Durchmessers reduziert, um eine Druckbeaufschlagung an der ankommenden Granulat-/Fluidschlickerströmung zu erreichen und zu halten, die dann durch einen zweiten Konusabschnitt zunehmenden Durchmessers zu einem zusätzlichen Rohr oder zu einer Reihe von einem oder mehreren zusätzlichen bikonischen Druckvorrichtungen tritt, die restriktive Mündungen oder Bohrungen zunehmend kleineren Durchmessers enthalten.

28. Vorrichtung nach einem der zwei vorhergehenden Ansprüche, wobei ein Filterkorb vor der bikonischen Druckvorrichtung (1150) eine druckbeaufschlagte Strömung des Granulat-/Fluidschlickers von dem Granulator (900) durch mindestens ein Sieb mit Öffnungen einer solchen Geometrie zulässt, dass Agglomerate, die größer als die kleinste Verengung der bikonischen Druckvorrichtung sind, entfernt werden, was ein Verstopfen vermeidet.

29. Vorrichtung nach dem vorhergehenden Anspruch, wobei das mindestens eine Sieb ein perforiertes, geschlitztes, durchstochenes, gewebtes, geformtes und/oder gestanztes Metall und/oder strapazierfähiges Plastikmaterial ist, wobei das mindestens eine Sieb vorzugsweise zwei oder mehr angeklebte, angeschweißte und/oder gesinterte Schichten von ähnlicher oder unterschiedlicher Zusammensetzung, Struktur und Auslegung umfasst, die der Reihe nach von zunehmend kleineren Öffnungsgrößen sind.

30. Vorrichtung nach einem der vorhergehenden Ansprüche 23 - 29, wobei der Unterwassergranulator (900) eine explosionssichere Düse mit mehrfachen Mündungen umfasst.

31. Vorrichtung nach dem vorhergehenden Anspruch, wobei die explosionssichere Düse mit mehreren Mündungen von Einzelkörperkonstruktion ist, die Heizelemente von Spulen- und/oder Patronenauslegung enthält, die von unterschiedlicher Länge sind, um außerhalb der um den Umfang positionierten Düsenlöcher zu bleiben und/oder um durch die Düsenlöcher proximal der Einführung des Heizelements zu treten und/oder um den Düsenkörper zu Düsenlöchern zu durchsetzen, die diametral gegenüber der Einführung des Heizelements liegen.

32. Vorrichtung nach dem vorhergehenden Anspruch, wobei die explosionssichere Düse mit mehreren Mündungen der Einzelkörperkonstruktion Mittel zum Beheizen enthält, die durch Umwälzen von Dampf und/oder Wärmeübertragungsfluid thermisch geregelt werden.

33. Vorrichtung nach den zwei vorhergehenden Ansprüchen, wobei die explosionssichere Düse mit mehreren Mündungen von einer aus mehreren Komponenten bestehenden Konstruktion ist, die in einer äußeren Komponente einer herausnehmbaren Mittendüse oder sowohl in der äußeren Komponente als auch in der herausnehmbaren Mittenkomponente Heizelemente von Patronen- oder Spulenauslegung enthält.

34. Vorrichtung nach einem der vorhergehenden Ansprüche 30 bis 33, wobei die explosionssichere Düse mit mehreren Mündungen mehrere Düsenlöcher, zulaufend und/oder zylindrisch, mit einem Durchmesser von 0,2 mm bis 3,5 mm enthält.

35. Vorrichtung nach einem der vorhergehenden Ansprüche 30 bis 34, wobei die explosionssichere Düse mit mehreren Mündungen mehrere um den Umfang versetzt positionierte Düsenlöcher enthält.

36. Vorrichtung nach einem der vorhergehenden Ansprüche 30 bis 35, wobei die explosionssichere Düse mit mehreren Mündungen aus einem harten Obermaterial, Keramikmaterial und/oder einer Kombination derselben besteht und/oder wobei der Körper der Düse für verbesserte Korrosions-, Abrieb- und Verschleißbeständigkeit gehärtet und/oder behandelt ist.

37. Vorrichtung nach einem der vorhergehenden Ansprüche 33 bis 36, wobei die explosionssichere Düse mit mehreren Mündungen die Heizelemente der Düse mit einer Umhüllung solcher Geometrie umgibt, um die Heizelemente effektiv vor einem Einwirken von potentiell entflammbaren Dämpfen und/oder flüchtigen Bestandsteilen abzuschirmen, und durch diese Stromanschlüsse geerdet an den Heizelementen anzubringen.

38. Vorrichtung nach dem vorhergehenden Anspruch, wobei die explosionssichere Abschirmung fest und versiegelt als eine aus einer einzigen Komponente oder mehreren Komponenten bestehenden Einheit an dem Düsenkörper selbst oder an stromaufwärts oder stromabwärts gelegenen Komponenten proximal zu der Düse angebracht ist, so dass die erhaltene Abschirmung ein potentielles Zünden von Dämpfen oder flüchtigen Bestandteilen verhindert.

39. Vorrichtung nach einem der vorhergehenden Ansprüche 23 bis 38, welche weiterhin ein Wegeventil (200) mit steuerbarer Strömungssperrstellung stromaufwärts des Unterwassergranulators (900) umfasst.

40. Vorrichtung nach dem vorhergehenden Anspruch, wobei das Wegeventil (200) enthält
(a) eine oder mehrere in der Position diskrete durchgehende Richtungsbohrungen für ein Strömen von geschmolzenem Material von einem oder mehreren Mischprozessen zu einem oder mehreren Granulationsprozessen; und
(b) eine in der Richtung diskrete Entleerungsbohrung; und eine in der Stellung diskrete Sperrstellung, die keine Durchgangsbohrung aufweist, wodurch sie ein Strömen von geschmolzenem Material unterbindet.

41. Vorrichtung nach einem der vorhergehenden Ansprüche 23 bis 40, wobei der Unterwassergranulator (900) mit einem Transportfluidkasten (400) versehen ist, der eine aus einem einzigen oder mehreren Abschnitten bestehende Strömungsführung enthält, um Strömung durch den Transportfluidkasten (400) zu leiten, was das Volumen dieses Transportfluidkastens (400) reduziert, was die Transportfluidgeschwindigkeit dadurch erhöht und zusätzlichen Staudruck an dem erzeugten Granulat-/Fluidschlicker vorsieht.

42. Vorrichtung nach einem der vorhergehenden Ansprüche 23 bis 41, wobei ein Schmelzekühler- und Ventilsystem vorgesehen ist, wobei das System umfasst: einen Schmelzekühler (100; 150; 2030; 2060; 2090), der die Polymerschmelze kühlt, wobei er eine Schmelzekühler-Einlassleitung, die die Schmelze zu dem Kühler befördert, und eine Schmelzekühler-Auslassleitung, die die gekühlte Schmelze von dem Kühler befördert, umfasst; und ein Wegeventil (120; 2040; 2094), das ausgelegt ist, um die Schmelze während eines Kühlbetriebsmodus zu und von dem Kühler zu befördern, um die Schmelze während eines Umgehungsbetriebsmodus um den Kühler zu befördern und um die Schmelze während eines Ablassbetriebsmodus aus dem Kühler und von dem Wegeventil abzulassen.

43. Vorrichtung nach Anspruch 42, wobei das Wegeventil (120; 2040; 2094) eine Heißschmelze-Einlassleitung, eine erste bewegliche Ventilkomponente, eine Heißschmelze-Auslassleitung zu dem Schmelzekühler, eine Heißschmelze-Umgehungsleitung, eine Einlassleitung für gekühlte Schmelze von dem Schmelzekühler, eine zweite bewegliche Ventilkomponente, eine Auslassleitung für gekühlte Schmelze und eine Schmelzeablassleitung umfasst.

44. Vorrichtung nach Anspruch 43, wobei zum Auslegen des Wegeventils (120; 2040; 2094) für den Kühlmodus die erste bewegliche Ventilkomponente so positioniert wird, dass die Heißschmelze-Auslassleitung zu dem Schmelzekühler geöffnet wird, die Heißschmelze-Umgehungsleitung geschlossen wird und die Schmelzeablassleitung geschlossen wird, und die zweite bewegliche Ventilkomponente so positioniert wird, dass die Einlassleitung für gekühlte Schmelze von dem Schmelzekühler geöffnet wird, wodurch ein Schmelzeströmungsweg durch den Schmelzekühler und aus dem Wegeventil durch die Auslassleitung für gekühlte Schmelze vorgesehen wird, und/oder wobei zum Auslegen des Wegeventils (120; 2040; 2094) für den Umgehungsmodus die erste bewegliche Ventilkomponente so positioniert wird, dass die Heißschmelze-Auslassleitung zu dem Schmelzekühler geschlossen wird und die Schmelzeablassleitung geschlossen wird, und die zweite bewegliche Ventilkomponente so positioniert wird, dass die Einlassleitung für gekühlte Schmelze von dem Schmelzekühler geschlossen wird, wodurch ein Schmelzeströmungsweg um den Schmelzekühler und aus dem Wegeventil durch die Auslassleitung für gekühlte Schmelze vorgesehen wird, und/oder wobei zum Auslegen des Wegeventils (120; 2040; 2060; 2094) für den Ablassmodus die erste bewegliche Ventilkomponente so positioniert wird, dass die Heißschmelze-Auslassleitung zu dem Schmelzekühler geöffnet wird, die Heißschmelze-Umgehungsleitung geschlossen wird und die Schmelzeablassleitung geöffnet wird, und die zweite bewegliche Ventilkomponente so positioniert wird, dass die Einlassleitung für gekühlte Schmelze von dem Schmelzekühler geöffnet wird, wodurch ein Schmelzeströmungsweg von der Heißschmelze-Einlassleitung und von einer ersten Prozessseite des Schmelzekühlers aus dem Wegeventil heraus durch die Schmelzeablassleitung vorgesehen wird und ein Schmelzeströmungsweg von einer zweiten Prozessseite des Schmelzekühlers aus dem Wegeventil heraus durch die Auslassleitung für gekühlte Schmelze vorgesehen wird.

45. Vorrichtung nach einem der Ansprüche 42 bis 44, wobei der Schmelzekühler (100; 2030) sich in einer vertikalen Ausrichtung über dem Wegeventil (120; 2040) befindet.

46. Vorrichtung nach einem der Ansprüche 42 bis 45, wobei der Schmelzekühler (100; 2030; 2090) ein zweiflutiger Rohrbündelwärmetauscher ist, wobei eine Prozessseite des Wärmetauschers vorzugsweise Mischelemente für statisches Fluid darin umfasst und/oder wobei der Wärmetauscher einen ummantelten oberen Kopf aufweist, der durch ein thermisches Wärmeübertragungsfluid oder durch eine elektrisch Heizerpatrone beheizt wird.

47. Vorrichtung nach einem der Ansprüche 42 bis 46, wobei ein oberer Abschnitt des Schmelzekühlers (2030) einen beheizten Abzug aufweist, der ausgelegt ist um daraus ein komprimierbares Fluid freizusetzen und/oder um einen Ablass der Schmelze von einem unteren Abschnitt des Kühlers zu erleichtern.

48. Vorrichtung nach einem der Ansprüche 42 bis 44, wobei der Schmelzekühler (2060) sich in einer vertikalen Ausrichtung unter dem Wegeventil (2062) befindet und eine Schmelzeablassleitung und einen Abzug umfasst, die ausgelegt sind, um ein komprimierbares Fluid in einem unteren Abschnitt desselben freizusetzen.

49. Vorrichtung nach einem der Ansprüche 42 bis 44, wobei sich der Schmelzekühler (150; 2090) in einer horizontalen Ausrichtung über dem Wegeventil (120; 2094) befindet, wobei vorzugsweise eines von (a) bis (c) gegeben ist: (a) die Schmelzekühler-Einlassleitung befindet sich in einem oberen Abschnitt des Schmelzekühlers und die Schmelzekühler-Auslassleitung befindet sich in einem unteren Abschnitt des Schmelzekühlers, (b) die Schmelzekühler-Einlassleitung und die Schmelzekühler-Auslassleitung befinden sich in gegenüberliegenden Abschnitten des Schmelzekühlers in einer Konfiguration Seite an Seite, (c) die Schmelzekühler-Einlassleitung befindet sich in einem unteren Abschnitt des Schmelzekühlers und die Schmelzekühler-Auslassleitung befindet sich in einem oberen Abschnitt des Schmelzekühlers.

## Revendications

1. Méthode de production de granulés de polymère, notamment des granulés de polymère expansibles, contenant un produit volatile et/ou un agent de génération volatile, dans laquelle une masse fondue de polymère contenant le produit volatile et/ou l'agent de génération volatile est fournie d'une source de fusion de polymère (2) à un granulateur immergé (900) au moyen duquel ladite masse fondue de polymère est découpée en granulés contenant le produit volatile et/ou l'agent de génération volatile, dans laquelle lesdits granulés sont évacués hors dudit granulateur immergé (900) au moyen d'un écoulement de fluide à travers une tuyauterie (1000) dans un dispositif d'égouttage mécanique et/ou de séchage (1300, 1400) où les granulés sont séparés dudit fluide, dans lequel lesdits granulés sont conservés dans ledit écoulement de fluide pour au moins un temps de soudage minimal jusqu'à ce qu'une coque des granulés est scellée et que le produit volatile et/ou l'agent de génération volatile est piégé à l'intérieur des granulés,
**caractérisée en ce que**
ladite tuyauterie (1000) comporte un moyen de pressurisation d'écoulement du fluide (1035, 1070, 1080, 1010, 1015 ; 1150) comportant une boucle de pressurisation (1010, 1035), à travers laquelle ledit écoulement de fluide est transporté rapidement et au moyen de laquelle ledit écoulement de fluide est pressurisé, et **en ce que**
le fluide de transport entrant est relié à une sortie (1060) au moyen d'une boucle pressurisée à dérivation multiple (1015, 1080, 1070, 1010, 1035) à l'aide de laquelle le fluide de transport entrant contourne la section de granulation du granulateur immergé (900) ou est dirigé vers la boucle de pressurisation (1010, 1035) contenant une pompe sous pression ou des séries de pompes reliées à une boîte de fluide de transport de granulateur (400) et passant par séquence à travers celle-ci et à travers les composants respectifs à la sortie (1060), ou contourne la boucle de pressurisation (1010, 1035) directement vers la boîte de fluide de transport (400) à travers les composants respectifs et à la sortie (1060), et **en ce que**
au moyen d'une pressurisation d'écoulement de fluide (1035, 1070, 1080, 1010, 1015; 1150), ledit écoulement de fluide est constamment maintenu à une pression au-dessus d'une pression de volatilisation pendant au moins un temps de soudage minimal, ladite pression de volatilisation correspondant à la pression minimale au-dessus de laquelle ledit produit volatile et/ou l'agent de génération volatile est maintenu dans ledit polymère.

2. Méthode selon la revendication 1, dans laquelle les composants respectifs contiennent un voyant nominal de pression (1040), un indicateur de pression (1045), une soupape d'arrêt à casse-vide (1050) et une vanne de séparation (1055).

3. Méthode selon la revendication 1 ou la revendication 2, dans laquelle ledit écoulement de fluide est maintenu au-dessus de ladite pression de volatilisation par au moins 1 bar.

4. Méthode selon une quelconque des revendications précédentes, dans laquelle ledit écoulement de fluide est maintenu constamment à une pression de 5 bars ou plus pendant ladite période minimale de temps de soudage.

5. Méthode selon la revendication précédente, dans laquelle ledit écoulement de fluide est maintenu constamment à une pression de 10 bars ou plus pendant ladite période minimale de temps de soudage.

6. Méthode selon une quelconque des revendications précédentes, dans laquelle ladite période minimale de temps de soudage est d'au moins 1 seconde ou plus.

7. Méthode selon la revendication précédente, dans laquelle ladite période minimale de temps de soudage est de préférence entre 2 à 45 secondes.

8. Méthode selon une quelconque des revendications précédentes, dans laquelle ledit écoulement de fluide est maintenu à une température de refroidissement pour refroidir lentement les granulés à une température de soudage dans ledit écoulement de fluide où au moins la coque extérieure des granulés est scellée et le produit volatile et/ou l'agent de génération volatile est piégé à l'intérieur des granulés.

9. Méthode selon la revendication précédente, dans laquelle ledit écoulement de fluide est maintenu à une température d'au moins 20°C au-dessous de la température de fusion du polymère, de préférence à une température de 30 à 100°C au-dessous de la température de fusion du polymère.

10. Méthode selon une quelconque des deux revendications précédentes, dans laquelle l'écoulement de fluide est maintenu à une température de 0°C à 100°C.

11. Méthode selon une quelconque des trois revendications précédentes, dans laquelle l'écoulement de fluide est maintenu à une température de 10□ à 70□.

12. Méthode selon une quelconque des quatre revendications précédentes, dans laquelle l'écoulement de fluide est maintenu à une température de 15□ à 60□.

13. Méthode selon une quelconque des cinq revendications précédentes, dans laquelle ledit écoulement de fluide est dirigé à travers au moins un échangeur thermique relié à ladite tuyauterie (1000).

14. Méthode selon une quelconque des revendications précédentes, dans laquelle l'écoulement de fluide est pressurisé à une pression au-dessus de ladite pression de volatilisation par le chemin d'écoulement de fluide entier à partir d'une chambre de sectionnement (400) dudit granulateur immergé vers ledit dispositif supplémentaire de pression et/ou ledit égoutteur mécanique (1100, 1200).

15. Méthode selon une quelconque des revendications précédente, dans laquelle ledit moyen de pressurisation de fluide (1150) comporte un moyen de restriction d'écoulement de type Bernoulli à travers lequel l'écoulement de fluide est transporté rapidement afin d'expédier le niveau désiré d'écoulement pressurisé à travers la tuyauterie.

16. Méthode selon une quelconque des revendications précédentes, dans laquelle l'écoulement de fluide est transporté rapidement à travers une série de moyens de restriction coniques, biconiques et/ou hyperboloïdes (1150) reliés à ladite tuyauterie, maintenant alors le niveau de pression d'écoulement désiré du fluide.

17. Méthode selon le préambule de la revendication 1 ou une quelconque des revendications précédentes, dans laquelle ladite masse fondue de polymère contenant le produit volatile et/ou l'agent de génération volatile est constamment maintenue à une pression au-dessus de la pression de volatilisation au moyen de la pressurisation de la masse fondue, ladite pression de volatilisation correspondant à la pression minimale au-dessus de laquelle ledit produit volatile et/ou l'agent de génération volatile est maintenu dans ledit polymère.

18. Méthode selon la revendication précédente, dans laquelle la masse fondue de polymère est maintenue à une pression au-dessus de ladite pression de volatilisation par au moins 1 bar ou plus.

19. Méthode selon une quelconque des deux revendications précédentes, dans laquelle la masse fondue de polymère est maintenue à une pression d'au moins 10 bars.

20. Méthode selon une quelconque des trois revendications précédentes, dans laquelle la masse fondue de polymère est maintenue à une pression d'au moins 30 bars à 250 bars.

21. Méthode selon une quelconque des revendications précédentes, dans laquelle la masse fondue de polymère est transportée rapidement à travers une vanne de déversement (200) en aval dudit granulateur immergé (900) dont la vanne de déversement obstrue le chemin d'écoulement de la masse fondue vers le granulateur immergé jusqu'à ce qu'un mélange suffisant du polymère et du produit volatile et/ou de l'agent de génération volatile est achevé.

22. Méthode selon une quelconque des revendications précédentes dans laquelle ledit produit volatile et/ou l'agent de génération volatile est du gaz ou du liquide qui s'évapore, est émis ou relâché par le chauffage dans des conditions de traitement normales, ou sous une réaction, ou qui se dissocie ou se décompose thermiquement.

23. Appareil de production de granulés de polymère contenant un produit volatile et/ou un agent de génération volatile, notamment en conformité avec la méthode selon une quelconque des revendications précédentes, ledit appareil comportant une source de fusion de polymère (2) pour fournir une masse fondue contenant le produit volatile et/ou l'agent de génération volatile, un granulateur immergé (900) pour transformer la masse fondue de polymère en granulés, un générateur d'écoulement de fluide pour générer un écoulement de fluide à travers une tuyauterie (1000) reliée audit granulateur immergé (900) pour évacuer les granulés hors dudit granulateur immergé, et un dispositif d'égouttage mécanique et/ou de séchage (1300, 1400) pour séparer les granulés dudit fluide, dans lequel ladite tuyauterie (1000) est conçue de manière telle que lesdits granulés sont maintenus dans ledit écoulement de fluide pour au moins un temps de soudage minimal jusqu'à ce qu'une coque extérieure des granulés est scellée et que le produit volatile et/ou l'agent de génération volatile est piégé à l'intérieur des granulés, **caractérisé en ce que**
ledit générateur d'écoulement de fluide et/ou ladite tuyauterie (1000) comporte un moyen de pressurisation d'écoulement du fluide (1035, 1070, 1080, 1010, 1015 ; 1150) comportant une boucle de pressurisation (1010, 1035), à travers laquelle ledit écoulement de fluide est transporté rapidement et au moyen de laquelle ledit écoulement de fluide est pressurisé, et **en ce qu'**une boucle pressurisée à dérivation multiple (1015, 1080, 1070, 1010, 1035) est présente, qui relie à une sortie (1060) le fluide de transport entrant qui contourne la section de granulation du granulateur immergé (900) ou dirige le fluide de transport entrant vers la boucle de pressurisation (1010, 1035) contenant une pompe sous pression ou des séries de pompes reliées à une boîte de fluide de transport de granulateur (400) et passant par séquence à travers celle-ci et à travers les composants respectifs à la sortie (1060), ou contourne la boucle de pressurisation (1010, 1035) directement vers la boîte de fluide de transport (400) à travers les composants respectifs et à la sortie (1060), et **en ce que**
ledit moyen de pressurisation d'écoulement de fluide (1035, 1070, 1080, 1010, 1015 ; 1150) est destiné à maintenir constamment l'écoulement de fluide à une pression au-dessus d'une pression de volatilisation pendant au moins un temps de soudage minimal, ladite pression de volatilisation correspondant à la pression minimale au-dessus de laquelle ledit produit volatile et/ou l'agent de génération volatile est maintenu dans ledit polymère.

24. Appareil selon la revendication précédente, dans lequel les composants respectifs contiennent un voyant nominal de pression (1040), un indicateur de pression (1045), une soupape d'arrêt à casse-vide (1050) et une vanne de séparation (1055).

25. Appareil selon la revendication 23 ou 24, dans lequel ledit moyen de pressurisation d'écoulement du fluide comporte un moyen de restriction d'écoulement (1150) de type Bernoulli relié à ladite tuyauterie afin d'expédier le niveau désiré d'écoulement pressurisé à travers la tuyauterie (1000) selon l'effet de Bernoulli.

26. Appareil selon la revendication 23 ou 24, dans lequel ledit moyen de pressurisation d'écoulement du fluide comporte au moins un, de préférence une série de moyens de restriction coniques, biconiques et/ou hyperboloïdes (1150) reliés à ladite tuyauterie.

27. Appareil selon la revendication précédente, dans lequel un dispositif de pression biconique (1150) et/ou une série de dispositifs de pression biconique (1150) est disponible, qui réduit le diamètre du conduit d'écoulement à travers une section conique vers un orifice ou un alésage plus petit à diamètre restrictif pour obtenir et maintenir la pressurisation sur l'écoulement de boue de granulés/fluide entrant qui passe alors à travers une seconde section conique à diamètre croissant vers un conduit supplémentaire ou vers une série d'un ou plusieurs dispositifs de pression biconiques supplémentaires qui contiennent des orifices ou des alésages restrictifs à diamètre progressivement plus petit.

28. Appareil selon une quelconque des deux revendications précédentes, dans lequel un panier de filtrage en amont du dispositif de pression biconique (1150) permet l'écoulement pressurisé de la boue de granulés/fluide à partir du granulateur (900) à travers au moins un écran avec des orifices d'une géométrie telle que des agglomérats plus grands que la plus petite contraction du dispositif de pression biconique sont retirés en évitant toute obstruction.

29. Appareil selon la revendication précédente, dans lequel au moins l'un des écrans est du métal perforé, entaillé, poinçonné, en treillis, moulé et/ou ajouré et/ou un plastique résistant, dans lequel, de préférence au moins ledit écran comprend deux ou plusieurs couches collées, soudées et/ou frittées de composition, structure et conception similaire ou différente qui sont en séries de tailles à orifices progressivement plus petits.

30. Appareil selon une quelconque des revendications précédentes 23 à 29, dans lequel ledit granulateur immergé (900) comporte une filière antidéflagrante à plusieurs orifices.

31. Appareil selon la revendication précédente, dans lequel ladite filière antidéflagrante à plusieurs orifices est de construction à corps simple comportant des éléments chauffants de conception à bobine et/ou à cartouche variant en longueur pour rester en dehors des trous de filière positionnés sur la circonférence et/ou pour passer à travers lesdits trous de filière à proximité de l'insertion d'un élément de chauffage et/ou traverser le corps vers des trous de filière opposés diamétralement à l'insertion de l'élément chauffant.

32. Appareil selon la revendication précédente, dans lequel ladite filière antidéflagrante à plusieurs orifices de construction à corps simple comporte un moyen pour le chauffage régulé thermiquement par la circulation de vapeur et/ou de fluide thermique de transfert.

33. Appareil selon les deux revendications précédentes, dans lequel ladite filière antidéflagrante à plusieurs orifices est de construction à plusieurs composants comportant des éléments de chauffage de conception à cartouche ou à bobine dans un composant externe d'une filière centrale amovible ou à la fois dans le composant externe et le composant central amovible.

34. Appareil selon une quelconque des revendications précédentes 30 à 33, dans lequel ladite filière antidéflagrante à plusieurs orifices comporte plusieurs trous de filière, coniques et/ou cylindriques, de 0,2 mm à 3,5 mm de diamètre.

35. Appareil selon une quelconque des revendications précédentes 30 à 34, dans lequel ladite filière antidéflagrante à plusieurs orifices comporte plusieurs trous de filière positionnés sur la circonférence et en alternance.

36. Appareil selon une quelconque des revendications précédentes 30 à 35, dans lequel ladite filière antidéflagrante à plusieurs orifices est composée d'un matériau à face dure, d'un matériau en céramique et/ou d'une combinaison de ceux-ci, et/ou dans lequel le corps de ladite filière est durci et/ou traité pour une résistance accrue à la corrosion, à l'abrasion et à l'usure.

37. Appareil selon une quelconque des revendications précédentes 33 à 36, dans lequel ladite filière antidéflagrante à plusieurs orifices renferme les éléments de chauffage de ladite filière avec une boîte de géométrie telle pour blinder lesdits éléments chauffants contre l'exposition aux vapeurs et/ou produits volatiles potentiellement inflammables et par là-même les connexions électriques par mise à la terre relatives auxdits éléments de chauffage.

38. Appareil selon la revendication précédente, dans lequel le blindage antidéflagrant est fixé de manière fixe et hermétique comme système à un seul ou à plusieurs composants au corps lui-même ou à des composants en amont ou en aval à proximité de la filière de sorte que le blindage obtenu empêche l'inflammation potentielle de vapeurs ou de produits volatiles.

39. Appareil selon une quelconque des revendications précédentes 23 à 38, comprenant par ailleurs une vanne de déversement (200) avec une position de blocage d'écoulement contrôlable en amont dudit granulateur immergé (900).

40. Appareil selon la revendication précédente, dans lequel ladite vanne de déversement (200) contient :
(a) un ou plusieurs alésages orientés de passage distinct de position pour l'écoulement de la matière fondue issue d'un ou plusieurs procédés de mélange relatifs à un ou plusieurs procédés de granulation ; et
(b) un alésage de purge distinct orienté ; et
une position de blocage distinct de position qui ne possède pas d'alésage de passage empêchant ainsi l'écoulement de matière fondue.

41. Appareil selon une quelconque des revendications précédentes 23 à 40, dans lequel le granulateur immergé (900) est doté d'une boîte de fluide de transport (400) qui contient un guide d'écoulement simple ou à plusieurs sections pour diriger l'écoulement à travers ladite boîte de fluide de transport (400) en réduisant le volume de ladite boîte de fluide de transport (400), en augmentant la rapidité du fluide de transport à travers celle-ci et en fournissant une pression de tête supplémentaire à la boue de granulés / fluides générée.

42. Appareil selon une quelconque des revendications précédentes 23 à 41, dans lequel un système refroidisseur de masse fondue et déchargeur, ledit système comprenant : un refroidisseur de masse fondue (100 ; 150 ; 2030 ; 2060 ; 2090) qui refroidit la masse fondue polymérique, comportant un conduit d'entrée de refroidisseur de masse fondue qui transporte la masse fondue vers le refroidisseur, et un conduit de sortie de refroidisseur de masse fondue qui transporte la masse fondue hors du refroidisseur ; et une vanne de déversement (120 ; 2040 ; 2094) configurée pour transporter la masse fondue vers le refroidisseur et hors de celui-ci pendant un mode d'exploitation de refroidissement, pour transporter la masse fondue autour du refroidisseur pendant un mode d'exploitation de dérivation, et pour évacuer la masse fondue hors du refroidisseur et hors de la vanne de déversement pendant un mode d'exploitation d'évacuation.

43. Appareil selon la revendication 42, dans lequel la vanne de déversement (120 ; 2040 ; 2094) comporte un conduit d'entrée de masse fondue chaude, un premier composant de vanne mobile, un conduit de sortie de masse fondue chaude vers le refroidisseur de masse fondue, un conduit de dérivation de masse fondue chaude, un conduit d'entrée de masse fondue refroidie issue du refroidisseur de masse fondue, un second composant de vanne mobile, un conduit de sortie de masse fondue refroidie, et un conduit d'évacuation de masse fondue.

44. Appareil selon la revendication 43, dans lequel, pour configurer la vanne de déversement (120 ; 2040 ; 2094) au mode de refroidissement, le premier composant de vanne mobile est positionné de manière à ouvrir le conduit de sortie de masse fondue chaude vers le refroidisseur de masse fondue, à fermer le conduit de dérivation de masse fondue chaude, et à fermer le conduit d'évacuation de masse fondue, et le second composant de vanne mobile est positionné de manière à ouvrir le conduit d'entrée de masse fondue refroidie à partir du refroidisseur de masse fondue, présentant alors un chemin d'écoulement de masse fondue à travers le refroidisseur de masse fondue et hors de la vanne de déversement à travers le conduit de sortie de masse fondue refroidie et/ou dans lequel, pour configurer la vanne de déversement (120 ; 2040 ; 2094) au mode de dérivation, le premier composant de vanne mobile est positionné afin de fermer le conduit de sortie de masse fondue chaude vers le refroidisseur de masse fondue et de fermer le conduit d'évacuation de masse fondue, et le second composant de vanne mobile est positionné afin de fermer le conduit d'entrée de masse fondue refroidie issue du refroidisseur de masse fondue, présentant alors un chemin d'écoulement de masse fondue autour du refroidisseur de masse fondue et hors de la vanne de déversement à travers le conduit de sortie de masse fondue refroidie et/ou dans lequel, pour configurer la vanne de déversement (120 ; 2040 ; 2060 ; 2094) au mode d'évacuation, le premier composant de vanne mobile est positionné de manière à ouvrir le conduit de sortie de masse fondue chaude vers le refroidisseur de masse fondue, à fermer le conduit de dérivation de masse fondue chaude, et à ouvrir le conduit d'évacuation de masse fondue, et le second composant de vanne mobile est positionné de manière à ouvrir le conduit d'entrée de masse fondue refroidie à partir du refroidisseur de masse fondue, présentant alors un chemin d'écoulement de masse fondue à partir du conduit d'entrée de masse fondue et à partir d'un premier côté de procédé du refroidisseur de masse fondue en dehors de la vanne de déversement à travers le conduit d'évacuation de masse fondue et présentant un chemin d'écoulement de masse fondue à partir d'un second côté de procédé du refroidisseur de masse fondue hors de la vanne de déversement à travers le conduit de sortie de masse fondue refroidie.

45. Appareil selon une quelconque des revendications 42 à 44, dans lequel le refroidisseur de masse fondue (100 ; 2030) est placé dans une orientation verticale au-dessus de la vanne de déversement (120 ; 2040).

46. Appareil selon une quelconque des revendications 42 à 45, dans lequel le refroidisseur de masse fondue (100 ; 2030 ; 2090) est une passe double, un échangeur thermique à coquille et à tube, dans lequel un côté de processus de l'échangeur thermique comporte de préférence des éléments statiques de mélange de fluide en soi-même et/ou dans lequel l'échangeur thermique possède une tête supérieure enveloppée qui est réchauffée par un fluide thermique de transfert de chaleur ou par une cartouche chauffante électrique.

47. Appareil selon une quelconque des revendications 42 à 46, dans lequel une partie supérieure du refroidisseur de masse fondue (2030) possède un évent chauffé configuré pour relâcher un fluide compressible à partir de là et/ou pour faciliter l'évacuation de la masse fondue à partir d'une partie inférieure du refroidisseur.

48. Appareil selon une quelconque des revendications 42 à 44, dans lequel le refroidisseur de masse fondue (2060) est placé à proximité de la vanne de déversement (2062) en orientation verticale et comporte un conduit d'évacuation de masse fondue et un évent configuré pour relâcher un fluide compressible dans une partie inférieure de celui-ci.

49. Appareil selon une quelconque des revendications 42 à 44, dans lequel le refroidisseur de masse fondue (150 ; 2090) est placé dans une orientation verticale au-dessus de la vanne de déversement (120 ; 2094), dans lequel se présente de préférence une des situations (a) à (c) : (a) le conduit d'entrée de refroidisseur de masse fondue est placé dans une partie supérieure du refroidisseur de masse fondue, et le conduit de sortie de refroidisseur de masse fondue est placé dans une partie inférieure du refroidisseur de masse fondue, (b) le conduit d'entrée de refroidisseur de masse fondue et le conduit de sortie de refroidisseur de masse fondue sont placés dans des parties opposées du refroidisseur de masse fondue dans une configuration côte à côte, (c) le conduit d'entrée de refroidisseur de masse fondue est placé dans une partie inférieure du refroidisseur de masse fondue, et le conduit de sortie de refroidisseur de masse fondue est placé dans une partie supérieure du refroidisseur de masse fondue.
